(19) Europäisches Patentamt
European Patent Office
Office européen des brevets

(11) EP 3 858 145 A1

(12) **EUROPEAN PATENT APPLICATION**

(43) Date of publication:
04.08.2021 Bulletin 2021/31

(21) Application number: 21158707.6

(22) Date of filing: 22.12.2017

(51) Int Cl.:
$A23C\ 21/00^{(2006.01)}$    $A23J\ 1/20^{(2006.01)}$
$A23J\ 3/08^{(2006.01)}$    $A23L\ 2/66^{(2006.01)}$
$A23L\ 33/19^{(2016.01)}$

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 23.12.2016 EP 16206861

(62) Document number(s) of the earlier application(s) in
accordance with Art. 76 EPC:
17835480.9 / 3 558 024

(71) Applicant: Arla Foods amba
8260 Viby J (DK)

(72) Inventors:
• BERTELSEN, Hans
  6920 Videbæk (DK)
• LAURIDSEN, Kasper Bøgelund
  8600 Silkeborg (DK)

(74) Representative: Guardian
IP Consulting I/S
Diplomvej, Building 381
2800 Kgs. Lyngby (DK)

Remarks:
This application was filed on 23-02-2021 as a divisional application to the application mentioned under INID code 62.

(54) **PRODUCTION OF NOVEL BETA-LACTOGLOBULIN PREPARATIONS AND RELATED METHODS, USES, AND FOOD PRODUCTS**

(57) The present invention relates to a new method of producing isolated beta-lactoglobulin compositions and/or compositions containing crystallised beta-lactoglobulin. The invention furthermore relates to new beta-lactoglobulin compositions, uses of these compositions and food products comprising these compositions.

Fig. 2

500 micron

## Description

FIELD OF THE INVENTION

The present invention relates to a new method of producing isolated beta-lactoglobulin compositions and/or compositions containing crystallised beta-lactoglobulin. The invention furthermore relates to new beta-lactoglobulin compositions, uses of these compositions and food products comprising these compositions.

BACKGROUND OF THE INVENTION

The concept of milk protein fractionation is well-known in the art and has been developed during the last decades to an array of technologies for preparing compositions enriched with various milk protein species each having specific properties and characteristics.

Isolation of beta-lactoglobulin (BLG) from milk serum or whey is the subject of a number of publications and typically involves multiple separation steps and often chromatographic techniques to arrive at a purified beta-lactoglobulin product.

For example, de Jongh et al (Mild Isolation Procedure Discloses New Protein Structural Properties of β-Lactoglobulin, J Dairy Sci., vol. 84(3), 2001, pages 562-571) described purification of BLG from freshly milked milk by low temperature acid coagulation of casein and by subjecting the obtained acid whey to a combination of affinity chromatography (DEAE Sepharose) and gel permeation chromatography. The obtained BLG composition was stated to contain 0.985 g beta-lactoglobulin per 1 g protein.

Slack et al (Journal of Food Processing and Preservation, vol. 10, 1986, pages 19-30) explored a different approach and prepared BLG-enriched precipitates by pH adjusting demineralised acid whey and sweet whey to pH 4.65 and separating the formed precipitate by centrifugation and decantation. The obtained precipitate pellets were described as being relatively insoluble and contained a significant amount of protein impurities in additional BLG. No crystal formation was observed. It should be noted that the BLG precipitates that may form at pH 4.65 are not BLG crystals.

Palmer (Crystalline Globulin from Cow's Milk, J. Biol. Chem., Vol. 104, 1934, pages 359-372) reported a laborious and time consuming process for producing protein crystals based on acid whey using several sequences of salt precipitation of unwanted proteins, pH-adjustments and dialysis to remove other unwanted proteins. Finally, when a highly purified BLG solution had been obtained, BLG was crystallized. The process lasted more than 12 days and required addition of toluene. The procedures disclosed in Palmer are therefore incompatible with safe food production and provides products that are clearly not edible.

Aschaffenburg et al (Improved Method for the Preparation of Crystalline beta-Lactoglobulin and alpha-Lactalbumin from Cow's Milk, Bioch., vol. 65, 1957, pages 273-277) discloses an improved process relative to the process of Palmer's process, which improvement allows for preparation of beta-lactoglobulin crystals in the order of few days instead of weeks. However, the improved method still requires removal of unwanted proteins prior to crystallisation and furthermore employs toluene for the crystallisation, which makes it incompatible with safe food production.

JP H10 218755 A discloses production of cosmetic compositions containing a melanin-producing inhibitor which comprises BLG as an active ingredient. The document furthermore suggests that BLG e.g. may be isolated by the following process: Hydrochloric acid is added to milk to precipitate casein followed by filtration to obtain whey. The pH of the whey is adjusted to 6.0 and ammonium sulfate is added in an amount of half saturation; the precipitated protein is removed by salting out, and a filtrate is recovered. The filtrate is saturated with ammonium sulfate and the precipitated protein is recovered. The recovered protein is again dissolved in water and dialyzed at pH 5.2 to separate the crystals, and β-lactoglobulin is prepared at a proportion of about 1.8 g from 1 L whey. However, the general process steps of the proposed process described in JP H10 218755 A are insufficient to lead to the formation of BLG crystals. The document therefore does not contain an enabling disclosure of crystallisation of BLG or of BLG crystals.

US 2 790 790 discloses a process for precipitation of proteins from solution, and more particularly to the fractional precipitation of relatively unconjugated proteins from aqueous solution by the use of sodium chloride as the precipitant. The process is suggested to be useful for isolating BLG by NaCl-induced precipitation at pH 3.6-3.8. In example II of the document it is suggested that the NaCl-precipitate may be dialysed in the usual manner to form crystalline B-lactoglobulin. However, US 2 790 790 does not demonstrate that formation of BLG crystals at pH 3.6-3.8 is actually possible and contains no reference to meaning of "the usual manner" of dialyzing a BLG precipitate. The document therefore does not contain an enabling disclosure of crystallisation of BLG or of BLG crystals.

SUMMARY OF THE INVENTION

By accident, the present inventors made the surprising discovery that highly pure BLG crystals may be prepared directly in crude whey protein solution which contains significant amounts of other whey proteins in addition to BLG and without the use of organic solvents such as toluene. This is contrary to the common general knowledge in the art which teaches that proteins have to be highly purified before one can hope to crystallise them, and not all proteins can be crystallised.

This discovery has the potential to change the way whey protein is handled and fractionated in the dairy industry and opens up for both efficient and gentle production of highly purified BLG which is safe to use as a food ingredient.

Thus, an aspect of the invention pertains to a method of preparing an edible composition comprising beta-lactoglobulin (BLG) in crystallised and/or isolated form, the method comprising the steps of

a) providing a whey protein solution comprising BLG and at least one additional whey protein, said whey protein solution is supersaturated with respect to BLG and has a pH in the range of 5-6,

b) crystallising BLG in the supersaturated whey protein solution, and

c) optionally, separating BLG crystals from the remaining whey protein solution.

The present inventors have furthermore found that edible whey protein compositions in powder form that contain BLG crystals have significantly higher bulk densities than comparable compositions of the prior art. This is advantageous as it eases the handling of the powder and makes it less dusty.

Thus, another aspect of the invention pertains to an edible composition comprising beta-lactoglobulin in crystallised and/or isolated form, e.g. obtainable by one or more methods described herein. The edible composition may e.g. be a powder containing BLG crystals and having a bulk density of at least 0.40 g/mL. Alternatively, the edible composition may be a liquid suspension or slurry containing BLG crystals.

In the context of the present invention, a dry product such as e.g. a powder, which comprises "BLG crystals" contains the product obtained from drying a suspension of BLG crystals and the crystal structure of the wet BLG crystals may have been distorted during the drying process and may at least partially have lost their x-ray diffraction characteristics. Along the same lines, the terms "dry BLG crystal" and "dried BLG crystal" refer to the particle obtained from drying a wet BLG crystal and this dry particle need not have a crystal structure itself. However, the present inventors have observed that when dried BLG crystals are resuspended in cold (4 degrees C) demineralised water in the weight ratio 2 part water to 1 part dried BLG crystals the BLG crystal are rehydrated and resume substantially the same crystal structure (space group-type and unit cell dimension) as before drying.

BLG is well-known to be a great source of essential amino acids, including e.g. leucine, and the edible BLG composition provided by the present invention therefore has several interesting nutritional uses.

An additional aspect of the invention pertains to an isolated BLG crystal having an orthorhombic space group $P\ 2_1\ 2_1\ 2_1$ and the unit cell dimensions a=68.68 ($\pm$5%) Å, b = 68.68 ($\pm$5%) Å, and c = 156.65 ($\pm$5%) Å; and wherein the crystal has the unit cell integral angles $\alpha$=90°, $\beta$=90°, and $\gamma$=90°.

Yet an aspect of the invention pertains to the use of the edible composition as defined herein as a food ingredient.

A further aspect of the invention pertains to a food product comprising the edible composition as defined herein and a fat source and/or a carbohydrate source.

## BRIEF DESCRIPTION OF THE FIGURES

Figure 1 shows two overlaid chromatograms of a crude whey protein solution (solid line) based on sweet whey and the resulting mother liquor after crystallisation (dashed line). The difference between the solid and the dashed lines is due to removed BLG crystals.

Figure 2 is a microscope photo of the BLG crystals recovered from Example 1.

Figure 3 is a chromatogram of recovered BLG crystal from Example 1.

Figure 4 is a plot of the relation between the conductivity of the whey protein solution and the obtained yield of recovered BLG crystals.

Figure 5 is a plot of the relationship between temperature and conductivity of the whey protein solution and the obtained yield of recovered BLG crystals.

Figure 6 illustrates the relationship between the total protein content (shown indirectly by degrees Brix which is proportional with the protein content) of the whey protein solution and the obtained yield of recovered BLG crystals.

Figure 7 shows chromatograms of feed 1 of Example 3 (solid line) and the mother liquor (dashed line) obtained after crystallisation and removal of BLG crystals.

Figure 8 is a microscope photo of a sample taken during the early stages of the crystallization of feed 1 of Example 3.

Figure 9 is a microscope photo of a sample taken after completion of the crystallization of feed 1 of Example 3.

Figure 10 shows the chromatogram of washed BLG crystals obtained from feed 1 of Example 3.

Figure 11 shows chromatograms of feed 2 of Example 3 (solid line) and the mother liquor (dashed line) obtained after crystallisation and removal of BLG crystals.

Figure 12 shows a picture of feed 2 of Example 3 before (left-hand picture) and after (right-hand picture) crystallization.

Figure 13 shows a microscope photo of the BLG crystals, both whole and fragmented, obtained from feed 2 of Example 3.

Figure 14 and 15 show that raising the conductivity or altering the pH of a BLG crystal slurry causes the BLG crystals to dissolve.

Figure 17 shows picture of feed 3 of Example 3 before (left-hand picture) and after (right-hand picture) crystallization.

Figure 18 is a microscope photo of the BLG crystals recovered from feed 3 of Example 3.

Figure 19 shows a chromatogram of the recovered BLG crystal of feed 3 of Example 3 without any washing step.

Figure 20 shows the impact of increasing conductivity on the yield of recovered BLG crystals.

Figure 21 is a microscope photo of BLG crystals formed at a conductivity of 4.20 mS/cm.

Figure 22 shows a microscope photo of BLG crystals from the early stages of the crystallization of an SPC-based whey protein solution.

Figure 23 illustrates the difference in bulk density of a standard whey protein isolate (WPI) and a high purity BLG composition of the invention, which composition contains BLG crystals.

Figure 24 is a photo of a spin filter in which BLG crystals of Example 3, feed 1, have been separated from the mother liquid.

Figure 25 is a photo of sub-samples of the six low phosphorous beverage samples of Example 8. From left to right the sub-samples are sample A, B, C, D, E, and F.

Figure 26 is a schematic illustration of the crystallisation process variant of Example 10 which uses DCF for separation BLG crystals from the mother liquor.

Figure 27 shows three photos of the filter cake obtained from separating BLG crystal and mother liquor using a filter centrifuge.

DETAILED DESCRIPTION

As mentioned above, an aspect of the invention pertains to a method of preparing an edible composition comprising beta-lactoglobulin (BLG) in crystallised and/or isolated form, the method comprising the steps of

a) providing a whey protein solution comprising BLG and at least one additional whey protein, said whey protein solution is supersaturated with respect to BLG and has a pH in the range of 5-6,

b) crystallising BLG in the supersaturated whey protein solution, and

c) optionally, separating BLG crystals from the remaining whey protein solution.

In the context of the present invention, the term "edible composition" pertains to a composition that is safe for human consumption and use as a food ingredient and that does not contain problematic amounts of toxic components such as toluene or other unwanted organic solvents. BLG is the most predominant protein in bovine whey and milk serum and exists in several genetic variants, the main ones in cow milk being labelled A and B. BLG is a lipocalin protein, and can bind many hydrophobic molecules, suggesting a role in their transport. BLG has also been shown to be able to bind iron via siderophores and might have a role in combating pathogens. A homologue of BLG is lacking in human breast milk.

Bovine BLG is a relatively small protein of approx. 162 amino acid residues with a molecular weight of approx. 18.3-18.4 kDa. Under physiological conditions it is predominantly dimeric, but dissociates to a monomer below about pH 3, preserving its native state as determined using NMR. Conversely, BLG also occurs in tetrameric, octameric and other multimeric aggregation forms under a variety of natural conditions.

BLG solutions can form gels under various conditions, when the native structure is sufficiently destabilised to allow aggregation. Under prolonged heating at low pH and low ionic strength, a transparent 'fine-stranded' gel is formed in which the protein molecules assemble into long stiff fibres.

In the context of the present invention, the term "BLG" or "beta-lactoglobulin" pertains to BLG from mammal species, e.g. in native and/or glycosylated forms and includes the naturally occurring genetic variants.

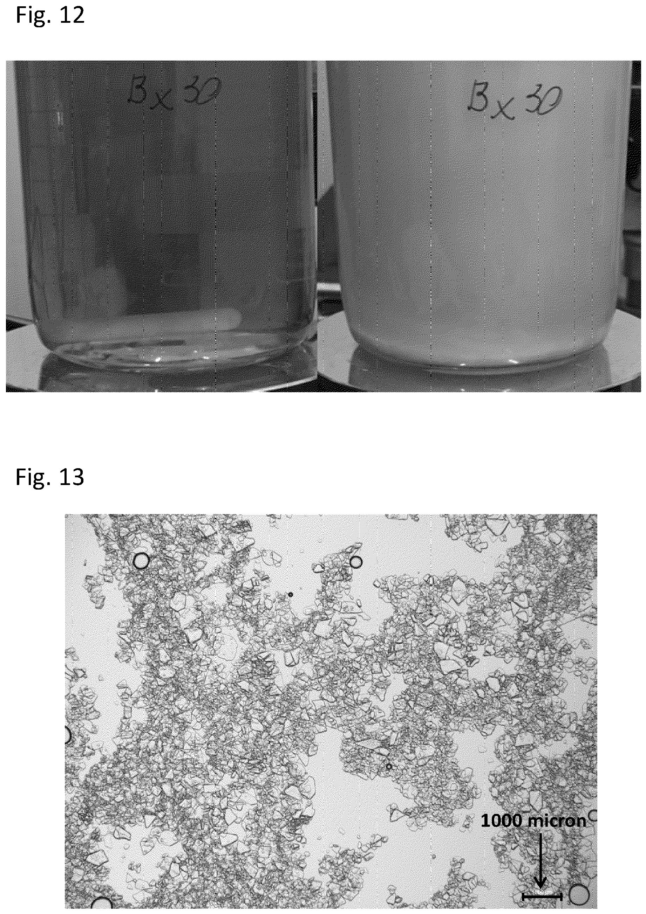

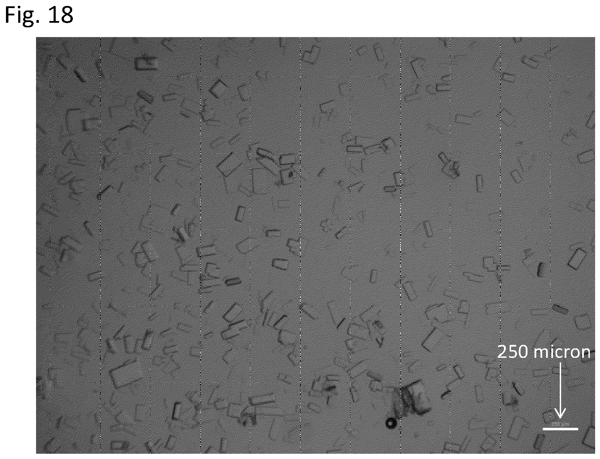

In the context of the present invention, the term "crystal" pertains to a solid material whose constituents (such as atoms, molecules or ions) are arranged in a highly ordered microscopic structure, forming a crystal lattice that extends in all directions. BLG crystals are protein crystals that primarily contains BLG arranged in a highly ordered microscopic structure, forming a crystal lattice that extends in all directions. The BLG crystals may e.g. be monolithic or polycrystalline and may e.g. be intact crystals, fragments of crystals, or a combination thereof. Fragments of crystal are e.g. formed when intact crystals are subjected to mechanical shear during processing. Fragments of crystals also have the highly ordered microscopic structure of crystal but may lack the even surface and/or even edges or corners of an intact crystal. See e.g. Figure 18 for an example of many intact BLG crystals and Figure 13 for an example of fragments of BLG crystals. In both cases the BLG crystal or crystal fragments can be identified visually as well-defined, compact and coherent structures using light microscopy. BLG crystal or crystal fragments are often at least partially transparent. Protein crystals are furthermore known to be birefringent and this optical property can be used to identify unknown particles as having crystal structure. Non-crystalline BLG aggregates, on the other hand, appear as poorly defined, non-transparent, and as open or porous lumps of irregular size.

In the context of the present invention, the term "crystallise" pertains to formation of protein crystals. Crystallisation may e.g. happen spontaneously or be initiated by the addition of crystallisation seeds.

The edible composition comprises BLG in crystallised and/or isolated form. An edible composition that comprises BLG in isolated form comprises at least 80% (w/w) BLG relative to total solids. An edible composition that comprises BLG in crystallised form comprises at least some BLG crystals, and preferably a significant amount of BLG crystals.

BLG crystals can often be observed by microscopy and may even reach a size which makes them visible by eye.

In the context of the present invention, a liquid which is "supersaturated" or "supersaturated with respect to BLG" contains a concentration of dissolved BLG which is above the saturation point of BLG in that liquid at the given physical and chemical conditions. The term "supersaturated" is well-known in the field of crystallisation (see e.g. Gerard Coquerela, "Crystallization of molecular systems from solution: phase diagrams, supersaturation and other basic concepts", Chemical Society Reviews, p. 2286-2300, Issue 7, 2014) and supersaturation can be determined by a number of different measurement techniques (e.g. by spectroscopy or particle size analysis). In the context of the present invention, supersaturation with respect to BLG is determined by the following procedure.

Procedure for testing whether a liquid at a specific set of conditions is supersaturated with respect to BLG:

a) Transfer a 50 ml sample of the liquid to be tested to a centrifuge tube (VWR Catalogue no. 525-0402) having a height of 115 mm, an inside diameter of 25 mm and a capacity of 50 mL. Care should be taken to keep the sample and subsequent fractions thereof at the original physical and chemical conditions of the liquid during steps a) - h).
b) The sample is immediately centrifuged at 3000 g for 3.0 minutes with max. 30 seconds acceleration and max 30 seconds deceleration.
c) Immediately after the centrifugation, transfer as much as possible of the supernatant (without disturbing the pellet if a pellet has formed) to a second centrifuge tube (same type as in step a)

d) Take a 0.05 mL subsample of the supernatant (subsample A)

e) Add 10 mg BLG crystals (at least 98% pure BLG relative to total solids) having a particle size of at most 200 micron to a second centrifuge tube and agitate the mixture.

f) Allow the second centrifuge tube to stand for 60 minutes at the original temperature.

g) Immediately after step f), centrifuge the second centrifuge tube at 500 g for 10 minutes and then take another 0.05 mL subsample of the supernatant (subsample B).

h) Recover the centrifugation pellet of step g) if there is one, resuspend it in milliQ water and immediately inspect the suspension for presence of crystals that are visible by microscopy.

i) Determine the concentration of BLG in subsamples A and B using the method outlined in Example 9.9 - the results are expressed as % BLG w/w relative to the total weight of the subsamples. The concentration of BLG of subsample A is referred to as $C_{BLG, A}$ and the concentration of BLG of subsample B is referred to as $C_{BLG, B}$.

j) The liquid from which the sample of step a) was taken was supersaturated (at the specific conditions) if $C_{BLG, B}$ is lower than $C_{BLG, A}$ and if crystals are observed in step i).

In the context of the present invention, the terms "liquid" and "solution" encompass compositions that contain a combination of liquid and solid or semi-solid particles such as e.g. protein crystals or other protein particles. A "liquid" or a "solution" may therefore be a suspension or even a slurry. However, a "liquid" and "solution" is preferably pumpable.

In some preferred embodiments of the invention, the method does not contain the separation of step c) and provides an edible composition which comprises both BLG crystals and the additional whey protein. If this method variant furthermore include the drying of step f) it provides a dry composition containing BLG crystals and the additional whey protein, i.e. a WPC or WPI in which at least a portion of the BLG is present in the form of BLG crystals. Preferably, the method contains the steps a), b) and f) in direct sequence.

If the whey protein feed is a whey protein concentrate (WPC), a whey protein isolate (WPI), a serum protein concentrate (SPC) or a serum protein isolate (SPI), the above method variant makes it possible to prepare a WPC, WPI, SPC, or SPI in liquid or dry form, in which at least a portion of the BLG is in crystal form.

The terms "whey protein concentrate" and "serum protein concentration" pertains to dry or aqueous compositions in which contains a total amount of protein of 20-89% (w/w) relative to total solids.

A WPC or an SPC preferably contains:

20-89% (w/w) protein relative to total solids,
15-70% (w/w) BLG relative to total protein,
8-50% (w/w) ALA relative to total protein, and
0-40% (w/w) CMP relative to protein.

Alternatively, but also preferred, a WPC or an SPC may contain:

20-89% (w/w) protein relative to total solids,
15-90% (w/w) BLG relative to total protein,
4-50% (w/w) ALA relative to total protein, and
0-40% (w/w) CMP relative to protein.

Preferably, a WPC or an SPC contains:

20-89% (w/w) protein relative to total solids,
15-80% (w/w) BLG relative to total protein,
4-50% (w/w) ALA relative to total protein, and
0-40% (w/w) CMP relative to protein.

More preferably a WPC or a SPC contains:

70-89% (w/w) protein relative to total solids,
30-90% (w/w) BLG relative to total protein,
4-35% (w/w) ALA relative to total protein, and
0-25% (w/w) CMP relative to protein.

The terms "whey protein isolate" and "serum protein isolate" pertains to dry or aqueous compositions in which contain a total amount of protein of 90-100% (w/w) relative to total solids.

A WPI or a SPI preferably contains:

90-100% (w/w) protein relative to total solids,
15-70% (w/w) BLG relative to total protein,
8-50% (w/w) ALA relative to total protein, and
0-40% (w/w) CMP relative to total protein.

Alternatively, but also preferred, a WPI or a SPI may contain:

90-100% (w/w) protein relative to total solids,
30-95% (w/w) BLG relative to total protein,
4-35% (w/w) ALA relative to total protein, and
0-25% (w/w) CMP relative to total protein.

More preferably a WPI or a SPI may contain:

90-100% (w/w) protein relative to total solids,
30-90% (w/w) BLG relative to total protein,
4-35% (w/w) ALA relative to total protein, and
0-25% (w/w) CMP relative to total protein.

In some preferred embodiments of the invention, the method furthermore comprises a step d) of washing BLG crystals, e.g. the separated BLG crystals obtained from step c).

In some preferred embodiments of the invention, the method furthermore comprises a step e) of re-crystallising BLG crystals, e.g. the BLG crystals obtained from step c) or d).

The method may e.g. comprise, or even consist of, steps a), b), c), d), and e). Alternatively, the method may comprise, or even consist, of steps a), b), c), and e).

In some particularly preferred embodiments of the invention, the method furthermore comprises a step f) of drying a BLG-containing composition derived from step b), c), d), or e).

The method may for example comprise, or even consist of, steps a), b), and f). Alternatively, the method may comprise, or even consist of, steps a), b), c) and f). Alternatively, the method may comprise, or even consist of, steps a), b), c), d) and f). Alternatively, the method may comprise, or even consist of, steps a), b), c), d), e) and f).

As said, step a) of the present invention involves providing a whey protein solution which comprises BLG and at least an additional whey protein.

In the context of the present invention, the term "whey protein" pertains to protein that is found in whey or in milk serum. The whey protein of the whey protein solution may be a subset of the protein species found in whey or milk serum or it may be the complete set of protein species found in whey or/and in milk serum. However, the whey protein solution always contains BLG.

In the context of the present invention, the term "additional protein" means a protein that is not BLG. The additional protein that is present in the whey protein solution typically comprises one or more of the non-BLG proteins that are found in milk serum or whey. Non-limiting examples of such proteins are alpha-lactalbumin, bovine serum albumin, immunoglobulines, caseinomacropeptide (CMP), osteopontin, lactoferrin, and milk fat globule membrane proteins.

The whey protein solution may therefore preferably contain at least one additional whey protein selected from the group consisting of alpha-lactalbumin, bovine serum albumin, immunoglobulines, caseinomacropeptide (CMP), osteopontin, lactoferrin, milk fat globule membrane proteins, and combinations thereof.

Alpha-lactalbumin (ALA) is a protein present in the milk of almost all mammalian species. ALA forms the regulatory subunit of the lactose synthase (LS) heterodimer and $\beta$-1,4-galactosyl-transferase (beta4Gal-T1) forms the catalytic component. Together, these proteins enable LS to produce lactose by transferring galactose moieties to glucose. As a multimer, alpha-lactalbumin strongly binds calcium and zinc ions and may possess bactericidal or antitumor activity. One of the main structural differences with beta-lactoglobulin is that ALA does not have any free thiol group that can serve as the starting-point for a covalent aggregation reaction. As a result, pure ALA will not form gels upon denaturation and acidification.

In the context of the present invention, the term "ALA" or "alpha-lactalbumin" pertains to alpha-lactalbumin from mammal species, e.g. in native and/or glycosylated forms and includes the naturally occurring genetic variants.

In some embodiments of the invention, the whey protein solution comprises at most 10% (w/w) casein relative to the total amount of protein, preferably at most 5%(w/w), more preferred at most 1% (w/w), and even more preferred at most 0.5% casein relative to the total amount of protein. In some preferred embodiments of the invention, the whey protein solution does not contain any detectable amount of casein.

The term "milk serum" pertains to the liquid which remains when casein and milk fat globules have been removed from milk, e.g. by microfiltration or large pore ultrafiltration. Milk serum may also be referred to as "ideal whey".

The term "milk serum protein" or "serum protein" pertains to the protein which is present in the milk serum.

The term "whey" pertains to the liquid supernatant that is left after the casein of milk has been precipitated and removed. Casein precipitation may e.g. be accomplished by acidification of milk and/or by use of rennet enzyme.

Several types of whey exist, such as "sweet whey", which is the whey product produced by rennet-based precipitation of casein, and "acid whey" or "sour whey" which is the whey product produced by acid-based precipitation of casein. Acid-based precipitation of casein may e.g. be accomplished by addition of food acids or by means of bacterial cultures.

In some preferred embodiments of the invention, the whey protein solution of step a) comprises at least 5% (w/w) additional whey protein relative to the total amount of protein. Preferably, the whey protein solution of step a) comprises at least 10% (w/w) additional whey protein relative to the total amount of protein. More preferably, the whey protein solution of step a) comprises at least 15% (w/w) additional whey protein relative to the total amount of protein. Even more preferably, the whey protein solution of step a) comprises at least 20% (w/w) additional whey protein relative to the total amount of protein. Most preferably, the whey protein solution of step a) may comprise at least 30% (w/w) additional whey protein relative to the total amount of protein.

In other preferred embodiments of the invention, the whey protein solution of step a) comprises at least 1% (w/w) additional whey protein relative to the total amount of protein. Preferably, the whey protein solution of step a) comprises at least 2% (w/w) additional whey protein relative to the total amount of protein. Even more preferably, the whey protein solution of step a) comprises at least 3% (w/w) additional whey protein relative to the total amount of protein. Most preferably, the whey protein solution of step a) may comprise at least 4% (w/w) additional whey protein relative to the total amount of protein.

In yet other preferred embodiments of the invention, the whey protein solution of step a) comprises at least 35% (w/w) additional whey protein relative to the total amount of protein. Preferably, the whey protein solution of step a) may comprise at least 40% (w/w) additional whey protein relative to the total amount of protein. More preferably, the whey protein solution of step a) may e.g. comprise at least 45% (w/w) additional whey protein relative to the total amount of protein. Even more preferably, the whey protein solution of step a) may comprise at least 50% (w/w) additional whey protein relative to the total amount of protein.

In some preferred embodiments of the invention the whey protein solution of step a) comprises in the range of 5-90% (w/w) additional whey protein relative to the total amount of protein. Preferably, the whey protein solution of step a) may comprise in the range of 10-80% (w/w) additional whey protein relative to the total amount of protein. The whey protein solution of step a) may e.g. comprise in the range of 20-70% (w/w) additional whey protein relative to the total amount of protein. Preferably, the whey protein solution of step a) comprises in the range of 30-70% (w/w) additional whey protein relative to the total amount of protein.

As said, the present inventors have found that it is possible to crystallize BLG without the use of organic solvents. This purification approach can also be used to refine preparations containing whey protein, which preparations have already been subjected to some BLG purification and provides simple methods of increasing the purity of BLG even further. Thus, in some preferred embodiments of the invention the whey protein solution of step a) comprises in the range of 1-20% (w/w) additional whey protein relative to the total amount of protein. Preferably, the whey protein solution of step a) may comprise in the range of 2-15% (w/w) additional whey protein relative to the total amount of protein. Even more preferably, the whey protein solution of step a) may e.g. comprise in the range of 3-10% (w/w) additional whey protein relative to the total amount of protein.

In some embodiments of the invention the whey protein solution of step a) comprises at least 5% (w/w) ALA relative to the total amount of protein. Preferably, the whey protein solution of step a) comprises at least 10% (w/w) ALA relative to the total amount of protein. Even more preferably, the whey protein solution of step a) comprises at least 15% (w/w) ALA relative to the total amount of protein. Alternatively, the whey protein solution of step a) may comprise at least 20% (w/w) ALA relative to the total amount of protein.

In some preferred embodiments of the invention the whey protein solution of step a) comprises at least 25% (w/w) ALA relative to the total amount of protein. Preferably, the whey protein solution of step a) comprises at least 30% (w/w) ALA relative to the total amount of protein. The whey protein solution of step a) preferably comprises at least 35% (w/w) ALA relative to the total amount of protein. Even more preferably, the whey protein solution of step a) may comprise at least 40% (w/w) ALA relative to the total amount of protein.

In some preferred embodiments of the invention the whey protein solution of step a) comprises in the range of 5-95% (w/w) ALA relative to the total amount of protein. Preferably, the whey protein solution of step a) comprises in the range of 5-70% (w/w) ALA relative to the total amount of protein. Even more preferably, the whey protein solution of step a) may comprise in the range of 10-60% (w/w) ALA relative to the total amount of protein. The whey protein solution of step a) preferably comprises in the range of 12-50% (w/w) ALA relative to the total amount of protein. Even more preferred, the whey protein solution of step a) may comprise in the range of 20-45% (w/w) ALA relative to the total amount of protein.

In some preferred embodiments of the invention the whey protein solution of step a) has a weight ratio between BLG and ALA of at least 0.01. Preferably, the whey protein solution of step a) has a weight ratio between BLG and ALA of at least 0.5. Even more preferably, the whey protein solution of step a) has a weight ratio between BLG and ALA of at least 1, such as e.g. at least 2. For example, the whey protein solution of step a) may have a weight ratio between BLG and ALA of at least 3.

Amounts and concentrations of BLG and other proteins in the whey protein solution and the whey protein feed all refer to dissolved protein and do not include precipitated or crystallised protein.

In the context of the present invention, the term "weight ratio" between component X and component Y means the value obtained by the calculation $m_X/m_Y$ wherein $m_X$ is the amount (weight) of components X and $m_Y$ is the amount (weight) of components Y.

In some preferred embodiments of the invention the whey protein solution of step a) has a weight ratio between BLG and ALA in the range of 0.01-20. Preferably, the whey protein solution of step a) has a weight ratio between BLG and ALA in the range of 0.2-10. Even more preferably, the whey protein solution of step a) has a weight ratio between BLG and ALA in the range of 0.5-4. For example, the whey protein solution of step a) may have a weight ratio between BLG and ALA in the range of 1-3.

In some preferred embodiments of the invention the whey protein solution of step a) comprises at least 1% (w/w) BLG relative to the total amount of protein. Preferably, the whey protein solution of step a) comprises at least 2% (w/w) BLG relative to the total amount of protein. Even more preferably, the whey protein solution of step a) comprises at least 5% (w/w) BLG relative to the total amount of protein. Preferably, the whey protein solution of step a) may comprise at least 10% (w/w) BLG relative to the total amount of protein.

In some preferred embodiments of the invention the whey protein solution of step a) comprises at least 12% (w/w) BLG relative to the total amount of protein. For example, the whey protein solution of step a) may comprise at least 15% (w/w) BLG relative to the total amount of protein. The whey protein solution of step a) may e.g. comprise at least 20% (w/w) BLG relative to the total amount of protein. Alternatively, the whey protein solution of step a) may comprise at least 30% (w/w) BLG relative to the total amount of protein.

In some particularly preferred embodiments of the invention the whey protein solution of step a) comprises at most 95% (w/w) BLG relative to the total amount of protein. Preferably, the whey protein solution of step a) may comprise at most 90% (w/w) BLG relative to the total amount of protein. More preferably, the whey protein solution of step a) may e.g. comprise at most 85% (w/w) BLG relative to the total amount of protein. Even more preferably, the whey protein solution of step a) may e.g. comprise at most 80% (w/w) BLG relative to the total amount of protein. Preferably, the whey protein solution of step a) may comprise at most 78% (w/w) BLG relative to the total amount of protein. Preferably, the whey protein solution of step a) may comprise at most 75% (w/w) BLG relative to the total amount of protein.

In some preferred embodiments of the invention the whey protein solution of step a) comprises in the range of 1-95% (w/w) BLG relative to the total amount of protein. Preferably, the whey protein solution of step a) may comprise in the range of 5-90% (w/w) BLG relative to the total amount of protein. More preferably the whey protein solution of step a) comprises in the range of 10-85% (w/w) BLG relative to the total amount of protein. Even more preferably the whey protein solution of step a) comprises in the range of 10-80% (w/w) BLG relative to the total amount of protein. Most preferably, the whey protein solution of step a) may comprise in the range of 20-70% (w/w) BLG relative to the total amount of protein.

In other preferred embodiments of the invention the whey protein solution of step a) comprises in the range of 10-95% (w/w) BLG relative to the total amount of protein. Preferably, the whey protein solution of step a) may comprise in the range of 12-90% (w/w) BLG relative to the total amount of protein. More preferably the whey protein solution of step a) comprises in the range of 15-85% (w/w) BLG relative to the total amount of protein. Even more preferably the whey protein solution of step a) comprises in the range of 15-80% (w/w) BLG relative to the total amount of protein. Most preferably, the whey protein solution of step a) may comprise in the range of 30-70% (w/w) BLG relative to the total amount of protein.

In some preferred embodiments of the invention the whey protein solution of step a) comprises at least 0.4% (w/w) BLG relative to the weight of the whey protein solution. Preferably the whey protein solution comprises at least 1.0% (w/w) BLG. More preferably the whey protein solution comprises at least 2.0% (w/w) BLG. It is even more preferred that the whey protein solution comprises at least 4% (w/w) BLG.

Higher concentrations of BLG are even more preferred and preferably the whey protein solution comprises at least 6% (w/w) BLG. More preferably the whey protein solution comprises at least 10% (w/w) BLG. It is even more preferred that the whey protein solution comprises at least 15% (w/w) BLG.

In some preferred embodiments of the invention the whey protein solution of step a) comprises in the range of 0.4-40% (w/w) BLG relative to the weight of the whey protein solution. Preferably the whey protein solution comprises in the range of 1-35% (w/w) BLG. More preferably the whey protein solution comprises in the range of 4-30% (w/w) BLG. It is even more preferred that the whey protein solution comprises in the range of 10-25% (w/w) BLG.

Any suitable whey protein source may be used to prepare the whey protein solution. In some preferred embodiments of the invention the whey protein solution comprises, or even consists of, a milk serum protein concentrate, whey protein concentrate, milk serum protein isolate, whey protein isolate, or a combination thereof.

It is preferred that the whey protein solution is a demineralised whey protein solution.

In this context the term demineralised means that the conductivity of the whey protein solution is at most 15 mS/cm, and preferably at most 10 mS/cm, and even more preferably at most 8 mS/cm. The UF permeate conductivity of a demineralised whey protein solution is preferably at most 7 mS/cm, more preferably at most 4 mS/cm, and even more preferably at most 1 mS/cm.

It is particularly preferred that the whey protein solution is a demineralised milk serum protein concentrate, a demineralised milk serum protein isolate, a demineralised whey protein concentrate, or a demineralised whey protein isolate.

In some particularly preferred embodiments of the invention the whey protein solution comprises, or even consists of, a demineralised and pH adjusted milk serum protein concentrate, whey protein concentrate, milk serum protein isolate, whey protein isolate, or a combination thereof.

The whey protein solution may for example comprise, or even consist of, a demineralised milk serum protein concentrate. Alternatively, the whey protein solution may comprise, or even consist of, a demineralised whey protein concentrate. Alternatively, the whey protein solution may comprise, or even consist of, a demineralised milk serum protein isolate. Alternatively, the whey protein solution may comprise, or even consist of, a demineralised whey protein isolate.

In the context of the present invention, the terms "whey protein concentrate" and "milk serum protein concentrate" pertains to preparations of whey or milk serum which preparations contain in the range of approx. 20-89% (w/w) protein relative to total solids.

In the context of the present invention, the terms "whey protein isolate" and "milk serum protein isolated" pertains to preparations of whey or milk serum which preparations contain at least 90% (w/w) protein relative to total solids.

The terms "consists essentially of" and "consisting essentially of" mean that the claim or feature in question encompasses the specified materials or steps and those that do not materially affect the basic and novel characteristic(s) of the claimed invention.

The protein of the whey protein solution is preferably derived from mammal milk, and preferably from the milk of a ruminant such as e.g. cow, sheep, goat, buffalo, camel, llama, mare and/or deer. Protein derived from bovine (cow) milk is particularly preferred. The BLG and the additional whey protein are therefore preferably bovine BLG and bovine whey protein.

The protein of the whey protein solution is preferably as close to its native state as possible and preferably have only been subjected to gentle heat-treatments if any at all.

In some preferred embodiments of the invention the BLG of the whey protein solution has a degree of lactosylation of at most 1. Preferably, the BLG of the whey protein solution has a degree of lactosylation of at most 0.6. More preferably, the BLG of the whey protein solution has a degree of lactosylation of at most 0.4. Even more preferably, the BLG of the whey protein solution has a degree of lactosylation of at most 0.2. Most preferably, the BLG of the whey protein solution has a degree of lactosylation of at most 0.1, such as e.g. preferably at most 0.01.

The degree of lactosylation of BLG is determined according to Czerwenka et al (J. Agric. Food Chem., Vol. 54, No. 23, 2006, pages 8874-8882).

In some preferred embodiments of the invention the whey protein solution has a furosine value of at most 80 mg/100 g protein. Preferably, the whey protein solution has a furosine value of at most 40 mg/100 g protein. More preferably, the whey protein solution has a furosine value of at most 20 mg/100 g protein. Even more preferably, the whey protein solution has a furosine value of at most 10 mg/100 g protein. Most preferably, the whey protein solution has a furosine value of at most 5 mg/100 g protein, such as e.g. preferably a furosine value of 0 mg/100 g protein.

The whey protein solution typically contains other components in addition to protein. The whey protein solution may contain other components that are normally found in whey or milk serum, such as e.g. minerals, carbohydrate, and/or lipid. Alternatively or additionally, the whey protein solution may contain components that are not native to the whey or milk serum. However, such non-native components should preferably be safe for use in food production and preferably also for human consumption.

The present method is particularly advantageous for separating BLG from crude whey protein solutions that contain other solids than BLG.

The whey protein solution may for example contain carbohydrates, such as e.g. lactose, oligosaccharides and/or hydrolysis products of lactose (i.e. glucose and galactose). The whey protein solution may e.g. contain carbohydrate in the range of 0-40% (w/w), such as in the range of 1-30% (w/w), or in the range of 2-20% (w/w).

In some preferred embodiments of the invention the whey protein solution contains at most 20% (w/w) carbohydrate, preferably at most 10% (w/w) carbohydrate, more preferably at most 5% (w/w) carbohydrate, and even more preferably at most 2% (w/w) carbohydrate.

The whey protein solution may also comprise lipid, e.g. in the form of triglyceride and/or other lipid types such as phospholipids.

In some embodiments of the invention the whey protein solution of step a) comprises a total amount of lipid of at most 15% (w/w) relative to total solids. Preferably, the whey protein solution of step a) comprises a total amount of lipid of at most 10% (w/w) relative to total solids. More preferably, the whey protein solution of step a) comprises a total amount of lipid of at most 6% (w/w) relative to total solids. Even more preferably, the whey protein solution of step a) comprises a total amount of lipid of at most 1.0% (w/w) relative to total solids. Most preferably, the whey protein solution of step a) comprises a total amount of lipid of at most 0.5% (w/w) relative to total solids.

The total amount of protein of the whey protein solution is typically at least 1% (w/w) relative to the weight of the whey protein solution. Preferably, the total amount of protein of the whey protein solution is at least 5% (w/w). More preferred, the total amount of protein of the whey protein solution is at least 10% (w/w). Even more preferred, the total amount of protein of the whey protein solution is at least 15% (w/w).

In some preferred embodiments of the invention the total amount of protein of the whey protein solution is in the range of 1-50% (w/w). Preferably, the total amount of protein of the whey protein solution is in the range of 5-40% (w/w). More preferred, the total amount of protein of the whey protein solution is in range of 10-30% (w/w). Even more preferred, the total amount of protein of the whey protein solution is in the range of 15-25% (w/w).

The total amount of protein of the whey protein solution is determined according to Example 9.2.

The whey protein solution is typically prepared by subjecting a whey protein feed to one or more adjustments which form the whey protein solution which is supersaturated with respect to BLG.

The feed is preferably a WPC, a WPI, a SPC, a SPI, or a combination thereof.

In the context of the present invention, the term "whey protein feed" pertains to the composition that is transformed to the whey protein solution supersaturated with respect to BLG. The whey protein feed is typically an aqueous liquid comprising BLG and at least one additional whey protein, but is normally not supersaturated with respect to BLG.

The embodiments relating to the chemical composition of the whey protein solution equally apply to the whey protein feed, however typically at least one parameter of the whey protein feed is set to avoid supersaturation or at least spontaneous crystallisation.

In some preferred embodiments of the invention the supersaturated whey protein solution is prepared by subjecting the whey protein feed to one or more of the following adjustments:

- Adjusting the pH,
- Reducing the conductivity
- Reducing the temperature
- Increasing the protein concentration
- Adding an agent that reduces the water activity
- Modifying the ion composition

In some preferred embodiments of the invention the preparation of the whey protein solution involves adjusting the pH of the whey protein feed to a pH in the range of 5-6.

All pH values are measured using a pH glass electrode and are normalised to 25 degrees C.

The whey protein solution may for example have a pH in the range of 4.9-6.1. The pH of the whey protein solution may e.g. be in the range of 5.0-6.1. Alternatively, the pH of the whey protein solution may be in the range of 5.1-6.1. Preferably, the pH of the whey protein solution is in the range of 5.1-6.0.

In some preferred embodiments of the invention the pH of the whey protein solution is in the range of 5.0-6.0. Preferably, the pH of the whey protein solution is in the range of 5.1-6.0. More preferably the pH of the whey protein solution is in the range of 5.1-5.9. Even more preferred, the pH of the whey protein solution may be in the range of 5.2-5.9. Most preferably the pH of the whey protein solution is in the range of 5.2-5.8.

The pH is preferably adjusted using food acceptable acids and/or bases. Food acceptable acids are particularly preferred, such as e.g. carboxylic acids. Useful examples of such acids are e.g. hydrochloric acid, sulfuric acid, phosphoric acid, acetic acid, maleic acid, tartaric acid, lactic acid, citric acid, or gluconic acid, and/or mixtures thereof.

In some preferred embodiments of the invention the pH is adjusted using a lactone, such as e.g. D-glucono-delta-lactone, which slowly hydrolyses and at the same time reduces the pH of the aqueous liquid containing it. The target pH after the hydrolysis of the lactone has ended can be calculated precisely.

Useful examples of food acceptable bases are e.g. hydroxide sources such as e.g. sodium hydroxide, potassium hydroxide, calcium hydroxide, salts of food acids such as e.g. tri-sodium citrate, and/or combinations thereof.

In other preferred embodiments of the invention the pH is adjusted by addition of cation exchange material on its $H^+$ form. Bead-type/large particle type cation exchange material is easily removed from the whey protein solution prior to the crystallisation or even after the crystallisation. Adjustment of pH by addition of cation exchange material on its $H^+$ form is particularly advantageous in the present invention as it reduced the pH without adding negative counter ions that significantly affects the conductivity of the whey protein feed.

In some preferred embodiments of the invention the preparation of the whey protein solution involves reducing the conductivity of the whey protein feed.

Conductivity values mentioned herein have been normalised to 25 degrees C unless it is specified otherwise.

The inventors have found that reducing the conductivity of the whey protein solution leads to a higher yield of BLG crystals. The minimum obtainable conductivity of the whey protein solution depends on the composition of the protein fraction and the lipid fraction (if any). Some protein species such as e.g. caseinomacropeptide (CMP) contribute more to the conductivity than other protein species. It is therefore preferable that the conductivity of the whey protein feed is brought near the level where protein and the counter ions of the protein are the main contributors to the conductivity. The reduction of conductivity often involves removal of at least some of the small, free ions that are present in liquid phase and not tightly bound to the proteins.

It is often preferred that the whey protein solution has a conductivity of at most 10 mS/cm. In some preferred embodiments of the invention, the whey protein solution has a conductivity of at most 5 mS/cm. Preferably, the whey protein solution has a conductivity of at most 4 mS/cm.

Lower conductivities are even more preferred and give rise to higher yields of BLG crystals. Thus, the whey protein solution preferably has a conductivity of at most 3 mS/cm. In some preferred embodiments of the invention, the whey protein solution has a conductivity of at most 1 mS/cm. Preferably, the whey protein solution has a conductivity of at most 0.5 mS/cm.

The conductivity of the whey protein feed is preferably reduced by dialysis or diafiltration. Diafiltration by ultrafiltration is particularly preferred as it allows for washing out salts and small charged molecules while proteins are retained. In some preferred embodiments of the invention, the same UF unit is used for UF/diafiltration and subsequent concentration of the whey protein feed.

The present inventors have seen indications that the ratio between the conductivity (expressed in mS/cm) and the total amount of protein in the whey protein solution (expressed in % wt. total protein relative to the total weight of the whey protein solution) advantageously can be kept at or below a certain threshold to facilitate the crystallisation of BLG.

In some preferred embodiments of the invention, the ratio between the conductivity and the total amount of protein of the whey protein solution is at most 0.3. Preferably, the ratio between the conductivity and the total amount of protein of the whey protein solution is at most 0.25.

Preferably, the ratio between the conductivity and the total amount of protein of the whey protein solution is at most 0.20. More preferably, the ratio between the conductivity and the total amount of protein of the whey protein solution is at most 0.18. Even more preferably, the ratio between the conductivity and the total amount of protein of the whey protein solution is at most 0.12. Most preferably, the ratio between the conductivity and the total amount of protein of the whey protein solution is at most 0.10.

It is for example preferred that the ratio between the conductivity and the total amount of protein of the whey protein solution is approx. 0.07, or even lower.

The present inventors have furthermore found that the whey protein feed advantageously may be conditioned to provide a whey protein solution having a UF permeate conductivity of at most 10 mS/cm. The UF permeate conductivity is a measure of the conductivity of the small molecule fraction of a liquid and is measured according to Example 9.10. When the term "conductivity" is used herein as such it refers to the conductivity of the liquid in question. When the term "UF permeate conductivity" is used it refers to the conductivity of the small molecule fraction of a liquid and is measured according to Example 9.10.

Preferably, the UF permeate conductivity of the whey protein solution is at most 7 mS/cm. More preferably, the UF permeate conductivity of the whey protein solution may be at most 5 mS/cm. Even more preferably, the UF permeate conductivity of the whey protein solution may be at most 3 mS/cm.

Even lower UF permeate conductivities may be used and are particularly preferred if a high yield of BLG should be obtained. Thus, preferably, the UF permeate conductivity of the whey protein solution is at most 1.0 mS/cm. More preferably, the UF permeate conductivity of the whey protein solution may be at most 0.4 mS/cm. Even more preferably, the UF permeate conductivity of the whey protein solution may be at most 0.1 mS/cm. Most preferably, the UF permeate conductivity of the whey protein solution may be at most 0.04 mS/cm.

Even lower UF permeate conductivities may reached, e.g. of MilliQ water is used as a diluent in during diafiltration (MilliQ water has a conductivity of approx. 0.06 $\mu$S/cm) Thus, the UF permeate conductivity of the whey protein solution may be at most 0.01 mS/cm. Alternatively, the UF permeate conductivity of the whey protein solution may be at most 0.001 mS/cm. Alternatively, the UF permeate conductivity of the whey protein solution may be at most 0.0001 mS/cm.

In some preferred embodiments of the invention the preparation of the whey protein solution involves reducing the temperature of the whey protein feed.

For example, the preparation of the whey protein solution may involve reducing the temperature of the whey protein feed to at least 5 degrees C, preferably at least 10 degrees C and even more preferred at least 15 degrees C. For example, the preparation of the whey protein solution may involve reducing the temperature of the whey protein feed to at least 20 degrees C.

The temperature of the whey protein feed may e.g. be reduced to at most 30 degrees C, preferably at most 20 degrees C, and even more preferably to at most 10 degrees C. The inventors have found that even lower temperatures provide higher degree of supersaturation, thus, the temperature of the whey protein feed may e.g. be reduced to at most 5 degrees C, preferably at most 2 degrees C, and even more preferably to at most 0 degrees C. The temperature may even be lower than 0 degrees C, however preferably the whey protein solution should remain pumpable, e.g. in the form of an ice slurry.

In some preferred embodiments of the invention the whey protein solution is an ice slurry before the initialisation of BLG crystallisation. Alternatively or additionally, crystallising whey protein solution may be converted into or maintained as an ice slurry during the BLG crystallisation of step b).

In some particularly preferred embodiments of the invention the preparation of the whey protein solution involves increasing the total protein concentration of the whey protein feed. The whey protein feed may e.g. be subjected to one or more protein concentration steps such as ultrafiltration, nanofiltration, reverse osmosis, and/or evaporation and thereby concentrated to obtain the whey protein solution.

Ultrafiltration is particularly preferred as it allows for selective concentration of protein while the concentrations of salts and carbohydrates are nearly unaffected. As mentioned above, ultrafiltration is preferably used both for diafiltration and concentration of the whey protein feed.

In some preferred embodiments of the invention, the concentration of BLG of whey protein solution is below the level where spontaneous crystallisation of BLG occurs. It is therefore often preferred to stop the modifications of the whey protein feed when the whey protein solution is in the meta-stable region, i.e. in the supersaturated region where BLG crystals can grow when seeding is used but where crystallisation does not start spontaneously.

In some preferred embodiments of the invention the preparation of the whey protein solution involves addition of one or more water activity reducing agent(s) to the whey protein feed.

Useful, but non-limiting, examples of such water activity reducing agents are polysaccharides and/or poly-ethylene glycol (PEG).

In some preferred embodiments of the invention the preparation of the whey protein solution involves modifying the ion composition of the whey protein feed, e.g. by ion exchange, by adding new ion species, by dialysis or diafiltration.

Typically, the whey protein solution is prepared by combining two or more of the above process steps for creating supersaturation.

In some preferred embodiments of the invention the preparation of the whey protein solution involves subjecting the whey protein feed to at least:

- concentrating, e.g. using ultrafiltration, nanofiltration or reverse osmosis, at a temperature above 10 degrees C, and
- subsequently cooling to a temperature below 10 degrees C.

In other preferred embodiments of the invention the preparation of the whey protein solution involves subjecting the whey protein feed to at least

- concentrating at a pH above 6.0, and
- subsequently reducing the pH by addition of an acid (e.g. GDL or cation exchange material in $H^+$ form)

In yet other preferred embodiments of the invention the preparation of the whey protein solution involves subjecting the whey protein feed to at least:

- reducing the conductivity, e.g. by diafiltration using a membrane that retains at least BLG.

In further preferred embodiments of the invention, the preparation of the whey protein solution involves subjecting the whey protein feed to a combination at least:

- adjusting the pH to 5-6,
- reducing the conductivity by diafiltration using a membrane that retains at least BLG,
- concentrating protein, e.g. using ultrafiltration, nanofiltration or reverse osmosis, at a temperature above 10 degrees C, and
- finally, cooling to a temperature below 10 degrees C.

The present inventors have furthermore found that the BLG yield of the present method may be improved by controlling the molar ratio between the sum of sodium+potassium vs. the sum of calcium and magnesium. A higher relative amount of calcium and magnesium surprisingly seems to increase the yield of BLG and therefore increases the efficiency of the BLG recovery of the present method.

In some preferred embodiments of the present invention the whey protein solution of step a) has a molar ratio between Na + K and Ca + Mg of at most 4. More preferably, the whey protein solution of step a) has a molar ratio between Na + K and Ca + Mg of at most 2. Even more preferably, the whey protein solution of step a) has a molar ratio between Na + K and Ca + Mg of at most 1.5, and even more preferably at most 1.0. Most preferably, the whey protein solution of step a) has a molar ratio between Na + K and Ca + Mg of at most 0.5, such as e.g. at most 0.2.

The molar ratio between Na + K and Ca + Mg it calculated as $(m_{Na}+m_k)/(m_{Ca}+m_{Mg})$ wherein $m_{Na}$ is the content of elemental Na in mol, $m_K$ is the content of elemental K in mol, $m_{Ca}$ is the content of elemental Ca in mol, and $m_{Mg}$ is the content of elemental Mg in mol.

It is particularly preferred that the whey protein solution has been supersaturated with respect to BLG by salting-in and that BLG therefore can be crystallised from the whey protein solution in salting-in mode.

In some embodiments of the invention the whey protein solution has low content of denatured protein, particularly if the edible BLG product of the present invention should have degree of protein denaturation too. Preferably, the whey protein solution has a degree of protein denaturation of at most 2%, preferably at most 1.5%, more preferably at most 1.0%, and most preferably at most 0.8%.

Step b) of the method involves crystallising at least some of the BLG of the supersaturated whey protein solution.

It is particularly preferred that the crystallisation of step b) takes place in salting-in mode, i.e. in a liquid that has a low ionic strength and conductivity. This is contrary to the salting-out mode wherein significant amounts of salts are added to a solution in order to provoke crystallisation.

The crystallisation of BLG of step b) may e.g. involve one or more of the following:

- Waiting for crystallisation to take place,
- Addition of crystallisation seeds,
- Increasing the degrees of supersaturation of BLG even further, and/or
- Mechanical stimulation.

In some preferred embodiments of the invention step b) involves adding crystallisation seeds to the whey protein solution. The inventors have found that addition of crystallisation seeds makes it possible to control when and where the BLG crystallisation takes place to avoid sudden clogging of process equipment and unintentional stops during production. It is for example often desirable to avoid onset crystallisation while concentrating the whey protein feed.

In principle any seed material which initiates the crystallisation of BLG may be used. However, it is preferred that hydrated BLG crystals or dried BLG crystals are used for seeding to avoid adding additional impurities to the whey protein solution.

The crystallisation seeds may be on dry form or may form part of a suspension when added to the whey protein solution. Adding a suspension containing the crystallisation seeds, e.g. BLG crystals, is presently preferred as it appears to provide a faster onset of crystallisation. It is preferred that such a suspension contain crystallisation seeds has a pH in the range of 5-6 and a conductivity of at most 10 mS/cm.

In some embodiments of the invention at least some of the crystallisation seeds are located on a solid phase which is brought in contact with the whey protein solution.

The crystallisation seeds preferably have a smaller particle size than the desired size of the BLG crystals. The size of the crystallisation seeds may be modified by removing the largest seeds by sieving or other size fractionation processes. Particle size reduction, e.g. by means of grinding, may also be employed prior to the particle size fractionation.

In some embodiments of the invention at least 90% (w/w) of the crystallisation seeds have a particle size (measured by sieving analysis) in the range of 0.1-600 microns. For example, at least 90% (w/w) of the crystallisation seeds may have a particle size in the range of 1-400 microns. Preferably, at least 90% (w/w) of the crystallisation seeds may have a particle size in the range of 5-200 microns. More preferably, at least 90% (w/w) of the crystallisation seeds may have a particle size in the range of 5-100 microns.

The particle size and dosage of crystallisation seeds may be tailored to provide the optimal crystallisation of BLG.

In some preferred embodiments of the invention the crystallisation seeds are added to the whey protein feed prior to obtaining supersaturation with respect to BLG but preferably in a way that at least some crystallisation seeds are still present when supersaturation is reached. This may e.g. be accomplished by adding crystallisation seeds when the whey protein feed is close to supersaturation, e.g. during cooling, concentration, and/or pH adjustment and to reach supersaturation before the crystallisation seeds are completely dissolved.

In some preferred embodiments of the invention step b) involves increasing the degree of supersaturation of BLG even further, preferably to a degree where crystallisation of BLG initiates immediately, i.e. in at most 20 minutes, and preferably in at most 5 minutes. This is also referred to as the nucleation zone wherein crystallites form spontaneously and start the crystallisation process.

The degree of supersaturation may e.g. be increased by one or more of the following:

- increasing the protein concentration of the whey protein solution further
- cooling the whey protein solution further
- bringing the whey protein solution closer to the optimum pH for BLG crystallisation
- reducing the conductivity even further.

In some preferred embodiments of the invention step b) involves waiting for the BLG crystals to form. This may take several hours and is typically for a whey protein solution which is only slightly supersaturated with respect to BLG and to which no crystallisation seeds have been added.

In some preferred embodiments of the invention the provision of the whey protein solution (step a) and the crystallisation of BLG (step b) takes place as two separate steps.

However, in other preferred embodiments of the invention step b) involves additional adjustment of the crystallising whey protein solution to raise the degree of supersaturation of BLG, or at least maintain supersaturation. The additional adjustment results in an increased yield of BLG crystals.

Such additional adjustment may involve one or more of:

- increasing the protein concentration of the crystallising whey protein solution even further
- cooling the crystallising whey protein solution to an even lower temperature
- bringing the crystallising whey protein solution even closer to the optimum pH for BLG crystallisation
- reducing the conductivity of the crystallising whey protein solution even further.

In some preferred embodiments of the invention the crystallising whey protein solution is maintained in the meta-stable zone during step b) to avoid spontaneous formation of new crystallites.

The inventors have determined the crystal lattice structure of the isolated BLG crystals by x-ray crystallography and have not found a similar crystal in the prior art.

In some preferred embodiments of the invention at least some of the BLG crystals obtained during step b) have an orthorhombic space group $P\ 2_1\ 2_1\ 2_1$.

Preferably, at least some of the obtained BLG crystals have an orthorhombic space group $P\ 2_1\ 2_1\ 2_1$ and the unit cell dimensions a=68.68 ($\pm$5%) Å, b = 68.68 ($\pm$5%) Å, and c = 156.65 ($\pm$5%) Å; and unit cell integral angles $\alpha$=90°, $\beta$=90°, and $\gamma$=90°.

In some preferred embodiments of the invention, at least some of the obtained BLG crystals have an orthorhombic space group $P\ 2_1\ 2_1\ 2_1$ and the unit cell dimensions a=68.68 ($\pm$2%) Å, b = 68.68 ($\pm$2%) Å, and c = 156.65 ($\pm$2%) Å; and the unit cell integral angles $\alpha$=90°, $\beta$=90°, and $\gamma$=90°.

Even more preferred, at least some of the obtained BLG crystals may have an orthorhombic space group $P\ 2_1\ 2_1\ 2_1$ and the unit cell dimensions a=68.68 ($\pm$1%) Å, b = 68.68 ($\pm$1%) Å, and c = 156.65 ($\pm$1%) Å; and the unit cell integral angles $\alpha$=90°, $\beta$=90°, and $\gamma$=90°.

Most preferably, at least some of the obtained BLG crystals have an orthorhombic space group $P\ 2_1\ 2_1\ 2_1$ and the unit cell dimensions a=68.68 Å, b = 68.68 Å, and c = 156.65 Å; and the unit cell integral angles $\alpha$=90°, $\beta$=90°, and $\gamma$=90°.

In some particularly preferred embodiments of the invention the method contains a step c) of separating at least some of the BLG crystals from the remaining whey protein solution. This is especially preferred when purification of BLG is desired.

Step c) may for example comprise separating the BLG crystals to a solids content of at least 30% (w/w). Preferably, step c) comprises separating the BLG crystals to a solids content of at least 40% (w/w). Even more preferably step c) comprises separating the BLG crystals to a solids content of at least 50% (w/w).

The inventors have found that the high solids content is advantageous for the purification of BLG as the aqueous portion that adhere to the separated BLG crystals typically contains the impurities that should be avoided. Additionally, the high solids content reduces the energy consumption for converting the separated BLG crystals to a dry product, such as e.g. a powder, and it increases the BLG yield obtained from a drying unit with a given capacity.

In some preferred embodiments of the invention step c) comprises separating the BLG crystals to a solids content of at least 60%. Preferably, step c) comprises separating the BLG crystals to a solids content of at least 70%. Even more preferably step c) comprises separating the BLG crystals to a solids content of at least 80%.

In some preferred embodiments of the invention the separation of step c) involves one or more of the following operations:

- centrifugation,
- decantation,
- filtration,
- sedimentation,
- combinations of the above.

These unit operations are well-known to the person skilled in the art and are easily implemented. Separation by filtration may e.g. involve the use of vacuum filtration, dynamic crossflow filtration (DCF), a filtrate press or a filter centrifuge.

Different pore sizes for filtration may be employed based on the desired outcome. Preferably, the filter allows native whey protein and small aggregates to pass but retains the BLG crystals. The filter preferably has a nominal pore size of at least 0.1 micron. The filter may e.g. have a nominal pore size of at least 0.5 micron. Even more preferably, the filter may have a nominal pore size of at least 2 micron.

Filters having larger pore sizes can also be used and are in fact preferred if primarily the large crystals should be separated from a liquid containing BLG crystals. In some embodiments of the invention the filter has a nominal pore size of at least 5 micron. Preferably, the filter has a nominal pore size of at least 20 micron. Even more preferably, the filter may have a pore size of at least 40 micron.

The filter may e.g. have a pore size in the range of 0.03-5000 micron, such as e.g. 0.1-5000 micron. Preferably, the filter may have a pore size in the range of 0.5-1000 micron. Even more preferably, the filter may have a pore size in the range of 5-800 micron, such as e.g. in the range of 10-500 micron or in the range of 50-500 microns.

In some preferred embodiments of the invention the filter has a pore size in the range of 0.03-100 micron. Preferably, the filter may have a pore size in the range of 0.1-50 micron. More preferably, the filter may have a pore size in the range of 4-40 micron. Even more preferably, the filter may have a pore size in the range of 5-30 micron such as in the range of 10-20 micron.

An advantage of using filters having a pore size larger than 1 micron is that bacteria and other microorganisms also are at least partly removed during separation and optionally also during washing and/or recrystallization. The present method therefore makes it possible to produce high purity BLG with both a very low bacterial load yet avoiding heat-damage of the protein.

Another advantage of using filters having a pore size larger than 1 micron is that removal of water and subsequent drying becomes easier and less energy consuming.

The remaining whey protein solution which is separated from the BLG crystals may be recycled to the whey protein feed during preparation of the whey protein solution.

In some preferred embodiments of the invention, step c) employs a filter centrifuge. In other preferred embodiments of the invention, step c) employs a decanter centrifuge. Initial results (see Example 13) have shown that use a filter centrifuge and/or a decanter centrifuge for separating BLG crystals from the mother liquor provides more robust operation of the method than e.g. vacuum filtration.

Often it is preferred to dry a formed filter cake with a drying gas to reduce the moisture content of the filter cake and preferably to make it possible to peel the filter cake off the filter. The use of a drying gas may form part of the separation step or alternatively, the final drying step if the filter cake is converted directly to a dry edible BLG composition.

In some preferred embodiments of the invention, step c) employs a DCF unit.

Initial tests (see example 12) have shown that using a DCF unit with a membrane pore size in the range of 0.03-5 micron, and preferably in the range of 0.3-1.0 microns, offers an efficient separation of BLG crystals and the inventors have observed that the DCF unit can be run for a duration sufficient to separate crystals from even large batches of whey protein solution containing BLG crystals.

In some preferred embodiments of the invention step c) is performed using a DCF unit equipped with a membrane capable of retaining BLG crystals, the DCF permeate is recycle to form part of the whey protein solution or whey protein feed, and DCF retentate may be recovered or returned to the crystallization tank. Preferably, the DCF permeate is treated, e.g. by ultra-/diafiltration by to make it supersaturated with respect to BLG prior to mixing with the whey protein solution or whey protein feed.

Advantageously, these embodiments do not require that the temperature of the liquid streams are raised above 15 degrees C and are therefore less prone to microbial contamination than method variants that require higher temperatures. Another industrial advantage of the these embodiments is that the level of supersaturation is easily controlled and can be kept at a level where unwanted, spontaneous crystallization does not occur. The temperature of the liquid streams during these embodiments of the method is therefore preferably at most 15 degrees C, more preferred at most 12 degrees C, and even more preferred at most 10 degrees C, and most preferred at most 5 degrees C.

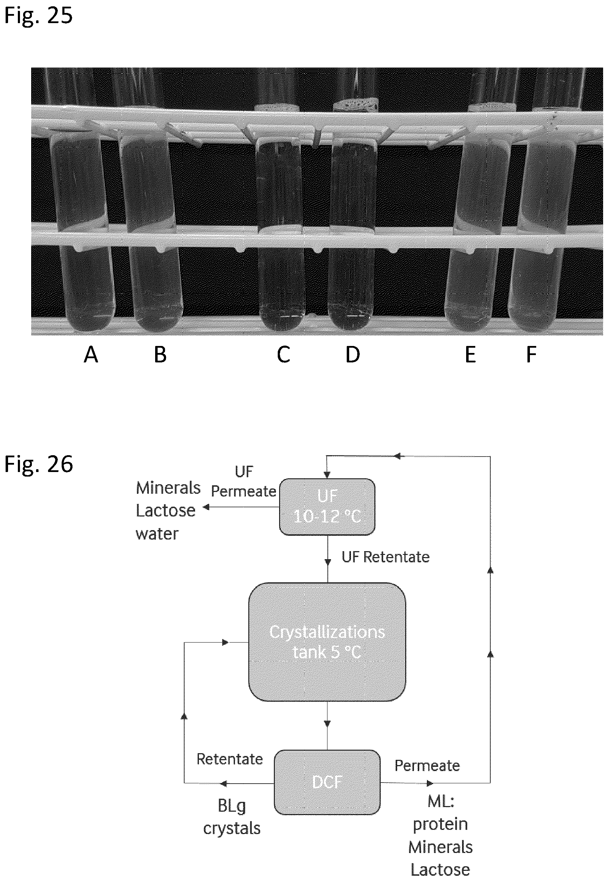

These embodiments are exemplified in Example 10 and illustrated in figure 26. These embodiments may be implemented as a batch methods or a continuous method.

In some preferred embodiments of the invention the method comprises a step d) of washing BLG crystals, e.g. the separated BLG crystals of c). The washing may consist of a single wash or of multiple washing steps.

The washing of step d) preferably involves contacting the BLG crystals with a washing liquid without completely dissolving the BLG crystals and subsequently separating the remaining BLG crystals from the washing liquid.

The washing liquid is preferably selected to avoid complete dissolution of the BLG crystals and may e.g. comprise, or even consist essentially of, cold demineralised water, cold tap water, or cold reverse osmosis permeate.

The washing liquid may have a pH in the range of 5-6, preferably in the range of 5.0-6.0, and even more preferably in the range of 5.1-6.0, such as e.g. in the range of 5.1-5.9.

The washing liquid may have a conductivity of at most 0.1 mS/cm, preferably at most 0.02 mS/cm, and even more preferably at most 0.005 mS/cm.

Washing liquids having even lower conductivities may be used. For example, the washing liquid may have a conductivity of at most 1 microS/cm. Alternatively, the washing liquid may have a conductivity of at most 0.1 microS/cm, such as e.g. approx. 0.05 microS/cm.

A washing step is preferably performed at low temperature to limit the dissolution of crystallised BLG. The temperature of the washing liquid is preferably at most 30 degrees C, more preferably at most 20 degrees C and even more preferably at most 10 degrees C.

A washing step may e.g. be performed at at most 5 degrees C, more preferably at at most 2 degrees C such as e.g. approx. 0 degrees C. Temperatures lower than 0 degrees C may be used in so far that the washing liquid does not freeze at that temperature, e.g. due to the presence of one or more freezing point depressant(s).

In some embodiments of the invention the washing liquid contains BLG, e.g. in an amount of at least 1% (w/w), and preferably in an amount of at least 3% (w/w), such as e.g. in an amount of 4% (w/w).

The washing of step d) typically dissolves at most 80% (w/w) of the initial amount of BLG crystals, preferably at most 50% (w/w), and even more preferably at most 20% (w/w) of the initial amount of BLG crystals. Preferably, the washing of step d) dissolves at most 15% (w/w) of the initial amount of BLG crystals, more preferably at most 10% (w/w), and even more preferably at most 5% (w/w) of the initial amount of BLG crystals.

The weight ratio between the total amount of washing liquid and the initial amount of separated BLG crystals is often at least 1, preferably at least 2 and more preferably at least 5. For example, the weight ratio between the amount of washing liquid and the initial amount of separated BLG crystals may be at least 10. Alternatively, the weight ratio between the amount total of washing liquid and the initial amount of separated BLG crystals may be at least 20, such as e.g. at least 50 or at least 100.

The term "total amount of washing liquid" pertains to the total amount of washing liquid used during the entire process.

In some preferred embodiments of the invention the one or more washing sequences take place in the same filter arrangement or in a similar filter arrangement as the BLG crystal separation. A filter cake primarily containing BLG crystals is added one or more sequences of washing liquid which is removed through the filter while the remaining part of the BLG crystals stays in the filter cake.

In particularly preferred embodiments of the invention, the separation of step c) is performed using a filter that retains BLG crystals. Subsequently, the filter cake is contacted with one or more quantities of washing liquid which moves through the filter cake and the filter. It is often preferred that each quantity of washing liquid is at most 10 times the volume of the filter cake, preferably at most 5 times the volume of the filter cake, more preferably at most 1 times the volume of the filter cake, even more preferably at most 0.5 times the volume of the filter cake, such as e.g. at most 0.2 times the volume of the filter cake. The volume of the filter cake includes both solids and fluids (liquids and gasses) of the filter cake. The filter cake is preferably washed this way at least 2 times, preferably at least 4 times and even more preferably at least 6 times.

The used washing liquid from step d) may e.g. be recycled to the whey protein feed or the whey protein solution where washed out BLG may be isolated again.

The method may furthermore comprise a step e) which involves a recrystallization step comprising:

- dissolving the separated BLG crystals in a recrystallization liquid,
- adjusting the recrystallization liquid to obtain supersaturation with respect to BLG,
- crystallising BLG in the supersaturated, adjusted recrystallization liquid, and
- separating BLG crystals from the remaining adjusted recrystallization liquid.

Step e) may comprise either a single re-crystallisation sequence or multiple re-crystallisation sequences.

In some embodiments of the invention the BLG crystals of step or c) or d) are recrystallized at least 2 times. For example, the BLG crystals may be recrystallized at least 3 times, such as e.g. at least 4 times.

The washing and re-crystallization steps may be combined in any sequence and may be performed multiple times if required.

The separated BLG crystals of step c) may e.g. be subjected to the process sequence:

- One or more steps of washing (step d), followed by
- One or more steps of re-crystallisation (step e).

Alternatively, the separated BLG crystals of step c) may be subjected to the process sequence:

- One or more steps of re-crystallisation (step e), followed by
- One or more steps of washing (step d).

It is also possible to combine multiple steps of washing and re-crystallisation, e.g. in the sequence:

- One or more steps of washing (step d),
- One or more steps of re-crystallisation (step e),
- One or more steps of washing (step d), and
- One or more steps of re-crystallisation (step e).

Or e.g. in the sequence:

- One or more steps of re-crystallisation (step e),
- One or more steps of washing (step d),
- One or more steps of re-crystallisation (step e).
- One or more steps of washing (step d)

In some embodiments of the invention the method furthermore involves subjecting the separated BLG to additional BLG enrichments steps, e.g. based on chromatography or selective filtration. However, in other preferred embodiments of the invention the method does not contain additional BLG enrichment steps after step b). By the term "additional BLG enrichment step" is meant a process step which enriches BLG relative to the total amount of protein, which step is not related to crystallisation of BLG or handling of BLG crystals. An example of such an additional BLG enrichment step is ion exchange chromatography. Washing of BLG crystals and/or recrystallization of BLG is not considered "additional BLG enrichment steps".

In some particularly preferred embodiments of the invention the method involves a drying step f) wherein a BLG-containing composition derived from steps b), c), d), or e) is converted to a dry composition.

In the context of the present invention, the term "dry" means that the composition or product in question comprises at most 6% (w/w) water and preferably even less.

In the context of the present invention, the term "BLG-containing composition" is used to describe the composition that is subjected to the drying of step f).

In the context of the present invention, a "BLG-containing composition derived from step b), c), d), or e)" means a composition which comprises at least some of the BLG from step b), c), d), or e). In some preferred embodiments of the invention the "BLG-containing composition derived from step b), c), d), or e)" is directly obtained from step b), c), d), or e). However, in other preferred embodiments of the invention the "BLG-containing composition derived from step b), c), d), or e)" is the result of further processing of the composition obtained directly from step b), c), d), or e).

It is often preferred that the BLG-containing composition contains a significant amount of the BLG present in the composition obtained directly from step b), c), d), or e). In some preferred embodiments of the invention the BLG-containing composition derived from step b), c), d), or e) comprises at least 50%(w/w) of the BLG obtained from step b), c), d), or e), preferably at least 70%, and even more preferably at least 80%.

Preferably, the BLG-containing composition derived from step b), c), d), or e) comprises at least 85%(w/w) of the BLG obtained from step b), c), d), or e). More preferably, the BLG-containing composition derived from step b), c), d), or e) comprises at least 90%(w/w) of the BLG obtained from step b), c), d), or e). Even more preferably, the BLG-containing composition derived from step b), c), d), or e) comprises at least 95%(w/w) of the BLG obtained from step b), c), d), or e). Most preferably, the BLG-containing composition derived from step b), c), d), or e) comprises 100%(w/w) of the BLG obtained from step b), c), d), or e).

In some preferred embodiments of the invention the drying step involves one or more of spray drying, freeze drying, spin-flash drying, rotary drying, and/or fluid bed drying.

In some particularly preferred embodiments of the invention the drying step involves a BLG-containing composition in which the BLG crystal has been dissolved and wherein the resulting powder does not contain BLG crystals formed by step b) or by re-crystallisation prior to the drying step. These embodiments are preferred if the edible BLG composition should resemble that of e.g. a conventional, dried whey protein powder.

The BLG crystals may e.g. be dissolved by:

- increasing temperature,
- increasing the conductivity, e.g. by addition of one or more salts
- changing the pH, e.g. outside the range 5-6,
- decreasing the concentration of BLG, e.g. by dilution,
- or a combination of the above.

Spray-drying is the presently preferred method of drying the BLG-containing composition which does not contain BLG crystals.

In other particularly preferred embodiments of the invention the drying step involves a BLG-containing composition which still contains BLG crystals and wherein the resulting powder contains BLG crystals. These embodiments are preferred if the edible BLG composition should have a higher density than conventional, dried whey protein powder.

In some particularly preferred embodiments of the invention the drying step involves a BLG-containing composition which still contains BLG crystals and wherein the resulting powder contains BLG crystals. These embodiments are preferred if the edible BLG-composition should have a higher density than conventional, dried whey protein powder.

As documented in Example 7, the present inventors have discovered that it is possible to spraydry a slurry of BLG crystals and retain at least some of the crystal structure when the dried BLG crystals are resuspended in cold demineralised water. It is particularly advantageous to avoid exposing the BLG-containing composition containing BLG crystals to a heat-treatment regime that dissolve a significant amount of the BLG crystal prior to spraying. Thus, if pre-heating of the BLG-containing composition containing BLG crystals is used prior to spraying it is preferred to carefully control the heat-load.

In some embodiments of the invention the BLG-containing composition containing BLG crystals has a temperature of at most 70 degrees C when reaching the exit of the spray device (e.g. a nozzle or an atomizer), preferably at most 60 degrees C, more preferably at most 50 degrees C. In some preferred embodiments of the invention the BLG-containing composition containing BLG crystals has a temperature of at most 40 degrees C when reaching the exit of the spray-device, preferably at most 30 degrees C, more preferably at most 20 degrees C, even more preferably at most 10 degrees C, and most preferably at most 5 degrees C.

The spray-device of the spray-dryer is the device, e.g. the nozzle or the atomizer, which converts the solution or suspension to be dried into droplets that enter the drying chamber of the spray-drier.

It is particularly preferred that the BLG-containing composition containing BLG crystals has a temperature in the range of 0-50 degrees C when reaching the exit of the spray-device, preferably in the range of 2-40 degrees C, more preferably in the range of 4-35 degrees C, and most preferably in the range of 5-10 degrees C when reaching the exit of the spray-device.

In some preferred embodiments of the invention, the BLG-containing composition has a crystallinity of BLG of at least 20% when reaching the exit of the spray-device, preferably at least 40%, more preferably at least 60%, even more preferably at least 80%, and a most preferably at least 90%, such as e.g. preferably 97-100%. BLG-containing composition may either be a BLG isolate, e.g. contain BLG in an amount of more than 90% (w/w) relative to total protein or it may contain significant amounts of other proteins and therefore contain BLG in an amount of at most 90% (w/w) relative to total protein.

In some preferred embodiments of the invention, the BLG-containing composition may have the protein composition of a traditional liquid WPC or WPI or a traditional liquid SPC or SPI as described herein but have a crystallinity of BLG of at least 20% when reaching the exit of the spray-device, preferably at least 40%, more preferably at least 60%, even more preferably at least 80%, and a most preferably at least 90%, such as e.g. preferably 97-100%.

The inlet temperature of gas of the spray-drier is preferably in the range of 140-220 degrees C, more preferably in the range of 160-200 degrees C, and even more preferably in the range of 170-190 degrees C, such as e.g. preferably approximately 180 degrees C. The exit temperature of the gas from the spray-drier is preferably in the range of 50-95 degrees C, more preferably in the range of 70-90 degrees C, and even more preferably in the range of 80-88 degrees C, such as e.g. preferably approximately 85 degrees C. As a rule of thumb, the solids that are subjected to spray-drying are said to be heated to a temperature which is 10-15 degrees C less than the gas exit temperature.

In some preferred embodiments of the invention, the spray-drier is preferably in the range of 50-85 degrees C, more preferably in the range of 60-80 degrees C, and even more preferably in the range of 65-75 degrees C, such as e.g. preferably approximately 70 degrees C.

The concept of spray-drying a suspension of BLG crystals has not been disclosed in the prior art and is in itself separate aspect of the invention.

Therefore, an aspect of the invention pertains to a method of producing a spray-dried edible powder composition comprising BLG, said composition comprising dried BLG crystals, the method comprising the steps of:

- providing a liquid BLG-containing composition comprising BLG crystals, and preferably having a crystallinity of BLG of at least 20%, said liquid BLG-containing composition preferably comprising at least 10% (w/w) total solids, and preferably comprising at least 5% (w/w) BLG, and

- atomizing the liquid BLG-containing composition into the drying chamber of an operating spray-dryer to convert the liquid BLG-containing composition comprising BLG crystals to a powder.

In some preferred embodiments of the invention the BLG-containing composition to be dried is mixed with a dry BLG isolate to raise the solids content to a level where the mixture can be dried by fluid bed drying. This is also referred to as back-mixing and allows for very cost efficient drying of the BLG product. These embodiments are particularly preferred for BLG-containing compositions that contain BLG crystals.

An advantage of the present method is that the BLG-containing composition to be dried may have a very high solids content prior to the drying step and therefore less water has to be removed and less energy is consumed in the drying operation.

In some preferred embodiments of the invention the BLG-containing composition derived from step b), c), d), or e) has a solids content of at least 20% (w/w). Preferably, the BLG-containing composition derived from step b), c), d), or e) has a solids content of at least 30% (w/w). More preferably, the BLG-containing composition derived from step b), c), d), or e) has a solids content of at least 40% (w/w). Even more preferably, the BLG-containing composition derived from step b), c), d), or e) has a solids content of at least 50% (w/w), such as e.g. at least 60% (w/w).

In other preferred embodiments of the invention the BLG-containing composition derived from step b), c), d), or e) has a solids content of in the range of 20-80% (w/w). Preferably, the BLG-containing composition derived from step b), c), d), or e) has a solids content in the range of 30-70% (w/w). More preferably, the BLG-containing composition derived from step b), c), d), or e) has a solids content in the range of 40-65% (w/w). Even more preferably, the BLG-containing composition derived from step b), c), d), or e) has a solids content in the range of 50-65% (w/w), such as e.g. approx. 60% (w/w).

The present inventors have found that the higher the crystallinity of the BLG-containing composition, the less water is bound to the BLG-containing composition, and the higher total solids content of the BLG-containing composition can be achieved prior to the drying step. Thus in some preferred embodiments of the invention, the BLG-containing composition, has a crystallinity of BLG of at least 10% (w/w). Preferably, the BLG of the BLG-containing composition has a crystallinity of at least 20% (w/w). More preferably the BLG of the BLG-containing composition has a crystallinity of at least 30% (w/w). Even more preferably the BLG of the BLG-containing composition has a crystallinity of at least 40% (w/w).

Even higher crystallinities are often preferred. Thus, in some preferred embodiments of the invention the BLG of the BLG-containing composition has a crystallinity of at least 50% (w/w). Preferably, the BLG of the BLG-containing composition has a crystallinity of at least 60% (w/w). More preferably, the BLG of edible BLG composition has a crystallinity of at least 70% (w/w). Even more preferably, the BLG of the BLG-containing composition has a crystallinity of at least 80% (w/w). Most preferred, the BLG of the BLG-containing composition has a crystallinity of at least 90% (w/w), preferably at least 95% (w/w), more preferably at least 97% (w/w), and even more preferably at least 99% (w/w).

The inventors have found that a reduced content of water tends to increase the crystallinity of BLG of a composition. Thus, compositions having a high water:BLG ratio (e.g. a suspension of 4% BLG crystals in water) tend to have a lower crystallinity of BLG than does compositions that have a lower water: BLG ratio (e.g. a filter cake or moist, isolated crystals) at the same conditions.

The method of the present invention may be operated using mild temperatures that do not damage the nutritional value of neither BLG nor the other whey proteins of the whey protein solution.

In some preferred embodiments of the invention, the BLG is not subjected to a temperature above 90 degrees C during the method. Preferably, the BLG is not subjected to a temperature above 80 degrees C during the method. Even more preferred, the BLG is not subjected to a temperature above 75 degrees C during the method. It should be noted that even though spray-drying often employs temperatures in the excess of 150 degree C, the short exposure time and the concurrent evaporation of water means that the spray-dried proteins do not experience temperatures above 50-70 degrees C.

The inventors have seen indications that extended heating during the drying step reduces the amount of BLG that is in crystal form. In some preferred embodiments of the invention the heat exposure during the drying step is kept sufficiently low to provide a degree of denaturation of BLG of at most 10%, preferably at most 4%, more preferably at most 1%, even more preferably at most 0.4% and even more preferred at most 0.1%. Most preferably, the drying step does not result in detectable denaturation of BLG at all.

The degree of denaturation caused by the drying step is calculated by determining the BLG content (relative to total solids) in the BLG-composition to be dried ($c_{\text{before step f}}$) in step f) and the BLG content (relative to total solids) in the redissolved, dried composition and using the formula:

$$\text{Degree of denaturation} = ((c_{\text{before step f}} - c_{\text{after step f}})/c_{\text{before step f}}) * 100\%$$

Some preferred embodiments of the invention pertain to a method of preparing an edible composition comprising beta-lactoglobulin (BLG) in crystallised form, the method comprising the steps of

a) providing a whey protein solution comprising BLG and at least one additional whey protein, said whey protein solution is supersaturated with respect to BLG and has a pH in the range of 5-6, said whey protein solution comprising:

- 70-100% (w/w) protein relative to total solids,
- 30-90% (w/w) BLG relative to total protein, and preferably 30-70% (w/w) BLG
- 4-50% (w/w) ALA relative to total protein, and preferably 8-35% (w/w) ALA,
- 0-25% (w/w) CMP relative to protein,
- at least 10% (w/w) protein relative to the total weight of the whey protein solution,

b) crystallising BLG in the supersaturated whey protein solution, preferably by addition of crystallisation seeds, and

f) drying the BLG-containing composition which is obtained directly from step b), said BLG-containing composition preferably having a crystallinity of BLG of at least 30%,

which method does not contain steps c), d) or e).

The whey protein solution is preferably a demineralised whey protein solution, and has preferably ratio between the conductivity and the total amount of protein of at most 0.3 and/or a UF permeate conductivity of at most 7 mS/cm.

In these embodiments the BLG crystals are not separated from the whey protein solution but are dried and results in a high density edible BLG composition in powder form.

The invention furthermore pertains to edible compositions obtainable by these embodiments.

Other preferred embodiments of the invention pertain to a method of preparing an edible composition comprising beta-lactoglobulin (BLG) in crystallised form, the method comprising the steps of

a) providing a whey protein solution comprising BLG and at least one additional whey protein, said whey protein solution is supersaturated with respect to BLG and has a pH in the range of 5-6, said whey protein solution comprising:

- 70-100% (w/w) protein relative to total solids,
- 30-90% (w/w) BLG relative to total protein, and preferably 30-70%
- 4-50% (w/w) ALA relative to total protein, and preferably 8-35%
- 0-25% (w/w) CMP relative to total protein.
- at least 10% (w/w) protein relative to the total weight of the whey protein solution,

b) crystallising BLG in the supersaturated whey protein solution, preferably by addition of crystallisation seeds,

c) separating BLG crystals from the remaining whey protein solution,

d) optionally, washing the separated BLG crystals obtained from step c),

e) optionally, re-crystallising BLG crystals obtained from step c) or d), and

f) drying a BLG-containing composition derived from, and preferably directly obtained from, step c), d), or e), which BLG-containing composition comprises BLG crystals and preferably having a crystallinity of BLG of at least 30%.

The whey protein solution is preferably a demineralised whey protein solution, and has preferably ratio between the conductivity and the total amount of protein of at most 0.3 and/or a UF permeate conductivity of at most 7 mS/cm.

These embodiments are particularly useful for making low mineral and low phosphorus edible BLG compositions in the form of high density powders

The invention furthermore pertains to an edible compositions obtainable by these embodiments.

Yet other preferred embodiments of the invention pertain to a method of preparing an edible composition comprising beta-lactoglobulin in isolated form, the method comprising the steps of

a) providing a whey protein solution comprising BLG and at least one additional whey protein, said whey protein solution is supersaturated with respect to BLG and has a pH in the range of 5-6, said whey protein solution comprising:

- 70-100% (w/w) protein relative to total solids,
- 30-90% (w/w) BLG relative to total protein, and preferably 30-70% (w/w) BLG,
- 5-50% (w/w) ALA relative to total protein, and preferably 8-35% (w/w) ALA,
- 0-25% (w/w) CMP relative to total protein.
- at least 10% (w/w) protein relative to the total weight of the whey protein solution,

b) crystallising BLG in the supersaturated whey protein solution, preferably by addition of crystallisation seeds,

c) separating BLG crystals from the remaining whey protein solution,

d) optionally, washing the separated BLG crystals obtained from step c),

e) optionally, re-crystallising BLG crystals obtained from step c) or d), and

f) drying a BLG-containing composition derived from step c), d), or e), which BLG-containing composition does not comprise BLG crystals.

The whey protein solution is preferably a demineralised whey protein solution, and has preferably ratio between the conductivity and the total amount of protein of at most 0.3 and/or a UF permeate conductivity of at most 7 mS/cm.

In these embodiments BLG crystals are dissolved prior to drying.

The invention furthermore pertains to an edible compositions obtainable by these embodiments.

In some preferred embodiments the present method is implemented as batch process. Alternatively, and sometimes preferably, the method may be implemented as semi-batch process. In other preferred embodiments the method is implemented as a continuous process.

An advantage of the present method is that it is much faster than comparable methods for BLG crystallisation of the prior art. The duration from the initial adjustment of the whey protein feed to the completion of the separation of step c may be at most 10 hours, preferably at most 4 hours, more preferably at most 2 hours, and even more preferably at most 1 hour.

An additional aspect of the invention pertains to an isolated BLG crystal obtainable from the method described herein.

In the context of the present invention the term "isolated BLG crystal" pertains to a BLG crystal that has been separated from the solution in which it was formed but which may still contain internal water, i.e. water hydrating BLG molecules of the crystal.

The isolated BLG crystal preferably has an orthorhombic space group P $2_1$ $2_1$ $2_1$.

Preferably, the isolated BLG crystal has an orthorhombic space group P $2_1$ $2_1$ $2_1$ and the unit cell dimensions a=68.68 ($\pm$5%) Å, b = 68.68 ($\pm$5%) Å, and c = 156.65 ($\pm$5%) Å; and having the unit cell integral angles $\alpha$=90° ($\pm$2%), $\beta$=90° ($\pm$2%), and $\gamma$=90° ($\pm$2%).

In some preferred embodiments of the invention, the isolated BLG crystal has an orthorhombic space group P $2_1$ $2_1$ $2_1$ and the unit cell dimensions a=68.68 ($\pm$2%) Å, b = 68.68 ($\pm$2%) Å, and c = 156.65 ($\pm$2%) Å; and has the unit cell integral angles $\alpha$=90° ($\pm$1%), $\beta$=90° ($\pm$1%), and $\gamma$=90° ($\pm$1%).

Even more preferred the isolated BLG crystal may have an orthorhombic space group P $2_1$ $2_1$ $2_1$ and the unit cell dimensions a=68.68 ($\pm$1%) Å, b = 68.68 ($\pm$1%) Å, and c = 156.65 ($\pm$1%) Å; and have the unit cell integral angles $\alpha$=90° ($\pm$0.5%), $\beta$=90° ($\pm$0.5%), and $\gamma$=90° ($\pm$0.5%).

Most preferably the isolated BLG crystal has an orthorhombic space group P $2_1$ $2_1$ $2_1$ and the unit cell dimensions a=68.68 Å, b = 68.68 Å, and c = 156.65 Å; and has the unit cell integral angles $\alpha$=90°, $\beta$=90°, and $\gamma$=90°.

The isolated BLG crystal may e.g. comprise at least 20%(w/w) BLG and at most 80% (w/w) water. Preferably, the isolated BLG crystal may comprise at least 40%(w/w) BLG and in the range of 0-60% (w/w) water. Even more preferably, the isolated BLG crystal comprises in the range of 40-60%(w/w) BLG and in the range of about 40 - about 60% (w/w) water

The present inventors have found that the BLG crystals of the present invention surprisingly have the ability to resume their original crystal structure after having been dried and rehydrated. This is particularly advantageous in applications which benefit from the crystal structure of BLG.

Yet an aspect of the present invention pertains to an edible composition comprising beta-lactoglobulin, e.g. an edible composition which is obtainable by the method as defined herein.

Another aspect of the invention pertains to an edible BLG composition comprising at least 90% (w/w) BLG relative to total solids. Such an edible BLG composition may be obtainable by a method as defined herein.

A further aspect of the invention pertains to an edible BLG composition comprising dried BLG crystals, at least 20% (w/w) BLG relative to total solids, and preferably having a crystallinity with respect to BLG of at least 20%. Such an edible BLG composition comprising dried BLG crystals may be obtainable by a method as defined herein.

In some preferred embodiments of the invention the BLG of the edible BLG composition has a degree of lactosylation of at most 1. Preferably, the BLG of the edible BLG composition has a degree of lactosylation of at most 0.6. More preferably, the BLG of the edible BLG composition has a degree of lactosylation of at most 0.4. Even more preferably, the BLG of the edible BLG composition has a degree of lactosylation of at most 0.2. Most preferably, the BLG of the edible BLG composition has a degree of lactosylation of at most 0.1, such as e.g. preferably at most 0.01.

In some preferred embodiments of the invention the BLG of the edible BLG composition comprises at least 90% (w/w) non-lactosylated BLG, preferably at least 95% (w/w) non-lactosylated BLG, and even more preferably at least 98% (w/w) non-lactosylated BLG.

The percentage of non-lactosylated BLG is determined according to Example 9.1.

In some preferred embodiments of the invention the BLG of the edible BLG composition has a crystallinity of at least 10% (w/w). Preferably, the BLG of the edible BLG composition has a crystallinity of at least 20% (w/w). More preferably the BLG of the edible BLG composition has a crystallinity of at least 30% (w/w). Even more preferably the BLG of the edible BLG composition has a crystallinity of at least 40% (w/w).

Even higher crystallinities are often preferred. Thus, in some preferred embodiments of the invention the BLG of the edible BLG composition has a crystallinity of at least 50% (w/w). Preferably, the BLG of the edible BLG composition has a crystallinity of at least 60% (w/w). More preferably, the BLG of the edible BLG composition has a crystallinity of at least 70% (w/w). Even more preferably, the BLG of the edible BLG composition has a crystallinity of at least 80% (w/w). Most preferred, the BLG of the edible BLG composition has a crystallinity of at least 90% (w/w), and preferably at least 95% (w/w).

The crystallinity of BLG in a liquid having pH in the range of 5-6 is measured according to Example 9.7. The crystallinity of BLG in a powdered material is measured according to Example 9.8. If the edible composition is a dry product but no in the form a powder, it must be converted to a powder, e.g. by grinding or milling, before it is subjected to the method of Example 9.8.

In some preferred embodiments of the invention the edible BLG composition is a WPC, WPI, SPC, or SPI, in which at least some of the BLG is on crystal form. The edible BLG composition may e.g. comprise at most 90% (w/w) BLG relative to the total amount of protein, and has a crystallinity of BLG of at least 10%. For example, the edible BLG composition may comprise at most 80% (w/w) BLG relative to the total amount of protein, and have a crystallinity of BLG of at least 10%. The edible BLG composition may e.g. comprise 30-70% (w/w) BLG relative to the total amount of protein, and have a crystallinity of BLG of at least 10%.

In other preferred embodiments of the invention, the edible BLG composition comprises at most 90% (w/w) BLG relative to the total amount of protein, and have a crystallinity of BLG of at least 30%. Preferably, the edible BLG composition may comprise at most 80% (w/w) BLG relative to the total amount of protein, and have a crystallinity of BLG of at least 30%. Even more preferably, the edible BLG composition may comprise 30-70% (w/w) BLG relative to the total amount of protein, and have a crystallinity of BLG of at least 30%.

The present inventors have found that the present invention makes it possible to prepare an edible whey protein product having a very low content of phosphorus and other minerals, which is advantageous for patients suffering from kidney diseases or otherwise having a reduced kidney function.

The edible BLG composition is preferably a low phosphorus composition.

In the context of the present invention the term "low phosphorus" pertains to a composition, e.g. a liquid, a powder or another food product, that has a total content of phosphorus of at most 100 mg phosphorus per 100 g protein. Preferably, a low phosphorus composition has a total content of at most 80 mg phosphorus per 100 g protein. More preferably, a low phosphorus composition may have a total content of at most 50 mg phosphorus per 100 g protein. Even more preferably, a low phosphorus composition may have a total content of phosphorus of at most 20 mg phosphorus per 100 g protein. Even more preferably, a low phosphorus composition may have a total content of phosphorus of at most 5 mg phosphorus per 100 g protein.

.Low phosphorus compositions according to the present invention may be used as a food ingredient for the production of a food product for patients groups that have a reduced kidney function.

Thus, in some particularly preferred embodiments of the invention the edible BLG composition comprises at most 80 mg phosphorus per 100 g protein. Preferably, the edible BLG composition comprises at most 30 mg phosphorus per 100 g protein. More preferably, the edible BLG composition comprises at most 20 mg phosphorus per 100 g protein. Even more preferably, the edible BLG composition comprises at most 10 mg phosphorus per 100 g protein. Most preferably, the edible BLG composition comprises at most 5 mg phosphorus per 100 g protein.

The content of phosphorus relates to the total amount of elemental phosphorus of the composition in question and is determined according to Example 9.5.

In other preferred embodiments of the invention the edible BLG composition is a low mineral composition.

In the context of the present invention the term "low mineral" pertains to a composition, e.g. a liquid, a powder or another food product, that has at least one, preferably two, and even more preferably all , of the following:

- an ash content of at most 1.2% (w/w) relative to total solids,
- a total content of calcium and magnesium of at most 0.3% (w/w) relative to total solids,
- a total content of sodium and potassium of at most 0.10% (w/w) relative to total solids,
- a total content of phosphorus of at most 100 mg phosphorus per 100 g protein.

Preferably, a low mineral composition has at least one, preferably two or more, and even more preferably all, of the following:

- an ash content of at most 0.7% (w/w) relative to total solids,
- a total content of calcium and magnesium of at most 0.2% (w/w) relative to total solids,
- a total content of sodium and potassium of at most 0.08% (w/w) relative to total solids,
- a total content of phosphorus of at most 80 mg phosphorus per 100 g protein.

Even more preferably, a low mineral composition has at least one, preferably two or more, and even more preferably all, of the following:

- an ash content of at most 0.5% (w/w) relative to total solids,
- a total content of calcium and magnesium of at most 0.15% (w/w) relative to total solids,
- a total content of sodium and potassium of at most 0.06% (w/w) relative to total solids,
- a total content of phosphorus of at most 50 mg phosphorus per 100 g protein.

It is particularly preferred that a low mineral composition has the following:

- an ash content of at most 0.5 % (w/w) relative to total solids,
- a total content of calcium and magnesium of at most 0.15 % (w/w) relative to total solids,
- a total content of sodium and potassium of at most 0.06% (w/w) relative to total solids,
- a total content of phosphorus of at most 50 mg phosphorus per 100 g protein.

In some preferred embodiments of the invention the edible BLG composition comprises a total amount of protein of at least 25% (w/w) relative to the total solids of the edible BLG composition. Preferably, the edible BLG composition comprises a total amount of protein of at least 50% (w/w) relative to the total solids of the edible BLG composition. More preferred, the edible BLG composition comprises a total amount of protein of at least 75% (w/w) relative to the total solids of the edible BLG composition. Even more preferred, the edible BLG composition comprises a total amount of protein of at least 90% (w/w) relative to the total solids of the edible BLG composition.

In some preferred embodiments of the invention the total amount of protein of the edible BLG composition is in the range of 25-100% (w/w) relative to total solids. Preferably, the total amount of protein of the edible BLG composition is in the range of 50-100% (w/w). More preferred, the total amount of protein of the edible BLG composition is in range of 75-100% (w/w) relative to total solids. Even more preferred, the total amount of protein of the edible BLG composition is in the range of 90-100% (w/w) relative to total solids.

In some preferred embodiments of the invention the edible BLG composition comprises at least 75% (w/w) BLG relative to the total amount of protein. Preferably, the edible BLG composition may comprise at least 90% (w/w) BLG relative to the total amount of protein. More preferably, the edible BLG composition may comprise at least 95% (w/w) BLG relative to the total amount of protein. Even more preferably, the edible BLG composition may comprise at least 97% (w/w) BLG relative to the total amount of protein. Most preferably, the edible BLG composition comprises approx. 100% (w/w) BLG relative to the total amount of protein.

In some preferred embodiments of the invention the edible BLG composition contains at most 10% (w/w) carbohydrate, preferably at most 5% (w/w) carbohydrate, more preferably at most 1% (w/w) carbohydrate, and even more preferably at most 0.1% (w/w) carbohydrate.

The edible BLG composition may also comprise lipid, e.g. in the form of triglyceride and/or other lipid types such as phospholipids.

In some embodiments of the invention the edible BLG composition comprises a total amount of lipid of at most 1% (w/w) relative to total solids. Preferably, the edible BLG composition comprises a total amount of lipid of at most 0.5% (w/w) relative to total solids. More preferably, the edible BLG composition comprises a total amount of lipid of at most 0.1% (w/w) relative to total solids. Even more preferably, the edible BLG composition comprises a total amount of lipid of at most 0.05% (w/w) relative to total solids. Most preferably, the edible BLG composition comprises a total amount of lipid of at most 0.01% (w/w) relative to total solids.

In some preferred embodiments of the invention the edible BLG composition is a dry composition, and e.g. a powder. It is particularly preferred that the edible BLG composition is a spray-dried powder.

The present inventors have observed that edible BLG compositions in powder form in which at least some of the BLG was in crystal form when dried have a higher density than comparable BLG composition without BLG crystals (see Example 7). This high density effect is very surprisingly also observed for edible BLG compositions in powder form which are obtained from spray-dried BLG crystal slurries.

Thus, in some preferred embodiments of the invention the edible BLG composition in powder form has a bulk density of at least 0.40 g/mL. Preferably the edible BLG composition in powder form has a bulk density of at least 0.45 g/mL. More preferably the edible BLG composition in powder form has a bulk density of at least 0.50 g/mL. It is even more preferred that the edible BLG composition in powder form has a bulk density of at least 0.6 g/mL. The edible BLG composition in powder form may e.g. have a bulk density of at least 0.7 g/mL.

The advantage of bulk density both applies to powders of edible BLG compositions in which BLG is nearly the only protein present and to powders of edible BLG compositions wherein the concentration of BLG has not been enriched relative to the other proteins that were present in the whey protein solution. The invention therefore provides high density powders of both isolated BLG and crude whey protein, which comprises significant amounts of ALA and other whey proteins in addition to BLG.

In some preferred embodiments of the invention the edible BLG composition in powder form has a bulk density of at least 0.45 g/mL and comprises at least 70% (w/w) protein relative to the total weight of the composition. More preferably the edible BLG composition in powder form has a bulk density of at least 0.50 g/mL and comprises at least 70% (w/w) protein relative to the total weight of the composition.. It is even more preferred that the edible BLG composition in powder form has a bulk density of at least 0.6 g/mL and comprises at least 70% (w/w) protein relative to the total weight of the composition. The edible BLG composition in powder form may e.g. have a bulk density of at least 0.7 g/mL and comprises at least 70% (w/w) protein relative to the total weight of the composition.

In other preferred embodiments of the invention the edible BLG composition in powder form has a bulk density of at least 0.45 g/mL and comprises at least 80% (w/w) protein relative to the total weight of the composition. More preferably the edible BLG composition in powder form has a bulk density of at least 0.50 g/mL and comprises at least 80% (w/w) protein relative to the total weight of the composition. It is even more preferred that the edible BLG composition in powder form has a bulk density of at least 0.6 g/mL and comprises at least 80% (w/w) protein relative to the total weight of the composition. The edible BLG composition in powder form may e.g. have a bulk density of at least 0.7 g/mL and comprises at least 80% (w/w) protein relative to the total weight of the composition.

The edible BLG composition in powder form may e.g. have a bulk density in the range of 0.40-1.5 g/mL and comprises at least 80% (w/w) protein relative to the total weight of the composition. Preferably, the powdered, edible BLG composition has a bulk density in the range of 0.45-1.0 g/mL and comprises at least 80% (w/w) protein relative to the total weight of the composition. More preferably the powdered, edible BLG composition may have a bulk density in the range of 0.50-0.9 g/mL and comprises at least 80% (w/w) protein relative to the total weight of the composition. It is even more preferred that the powdered, edible BLG composition has a bulk density in the range of 0.6-0.9 g/mL and comprises at least 80% (w/w) protein relative to the total weight of the composition. The powdered, edible BLG composition may e.g. have a bulk density in the range of 0.6-0.8 g/mL and comprises at least 80% (w/w) protein relative to the total weight of the composition.

The inventors have found that the high density powders of the invention advantageously allows for more cost-effective packaging and logistics of the powder as less packaging material is required per kg powder and more powder (mass) can be transported by a given container or truck.

The edible BLG composition in powder form may e.g. have a bulk density in the range of 0.40-1.5 g/mL. Preferably, the powdered, edible BLG composition has a bulk density in the range of 0.45-1.0 g/mL. More preferably the powdered, edible BLG composition may have a bulk density in the range of 0.50-0.9 g/mL. It is even more preferred that the powdered, edible BLG composition has a bulk density in the range of 0.6-0.9 g/mL. The powdered, edible BLG composition may e.g. have a bulk density in the range of 0.6-0.8 g/mL.

In other preferred embodiments of the invention the edible BLG composition in powder form has a bulk density in the range of 0.50-1.5 g/mL. Preferably, the powdered, edible BLG composition has a bulk density in the range of 0.55-1.0 g/mL. More preferably the powdered, edible BLG composition may have a bulk density in the range of 0.60-1.0 g/mL. It is even more preferred that the powdered, edible BLG composition has a bulk density in the range of 0.65-1.0 g/mL. The powdered, edible BLG composition may preferably have a bulk density in the range of 0.70-1.0 g/mL.

The edible BLG composition in powder form may e.g. have a bulk density in the range of 0.40-1.5 g/mL and comprises at least 70% (w/w) protein relative to the total weight of the composition. Preferably, the powdered, edible BLG composition has a bulk density in the range of 0.45-1.0 g/mL and comprises at least 70% (w/w) protein relative to the total weight of the composition. More preferably the powdered, edible BLG composition may have a bulk density in the range of 0.50-0.9 g/mL and comprises at least 70% (w/w) protein relative to the total weight of the composition. It is even more preferred that the powdered, edible BLG composition has a bulk density in the range of 0.6-0.9 g/mL and comprises at least 70% (w/w) protein relative to the total weight of the composition. The powdered, edible BLG composition may e.g. have a bulk density in the range of 0.6-0.8 g/mL and comprises at least 70% (w/w) protein relative to the total weight of the composition.

The edible BLG composition in powder form may e.g. have a bulk density in the range of 0.40-1.5 g/mL and comprises at least 80% (w/w) protein relative to the total weight of the composition. Preferably, the powdered, edible BLG composition has a bulk density in the range of 0.45-1.0 g/mL and comprises at least 80% (w/w) protein relative to the total weight of the composition. More preferably the powdered, edible BLG composition may have a bulk density in the range of 0.50-0.9 g/mL and comprises at least 80% (w/w) protein relative to the total weight of the composition. It is even more preferred that the powdered, edible BLG composition has a bulk density in the range of 0.6-0.9 g/mL and comprises at least 80% (w/w) protein relative to the total weight of the composition. The powdered, edible BLG composition may e.g. have a bulk density in the range of 0.6-0.8 g/mL and comprises at least 80% (w/w) protein relative to the total weight of the composition.

In other preferred embodiments of the invention the edible BLG composition in powder form has a bulk density in the range of 0.50-1.5 g/mL and comprises at least 70% (w/w) protein relative to the total weight of the composition. Preferably, the powdered, edible BLG composition has a bulk density in the range of 0.55-1.0 g/mL and comprises at least 70% (w/w) protein relative to the total weight of the composition. More preferably the powdered, edible BLG composition may have a bulk density in the range of 0.60-1.0 g/mL and comprises at least 70% (w/w) protein relative to the total weight of the composition. It is even more preferred that the powdered, edible BLG composition has a bulk density in the range of 0.65-1.0 g/mL and comprises at least 70% (w/w) protein relative to the total weight of the composition. The powdered, edible BLG composition may preferably have a bulk density in the range of 0.70-1.0 g/mL and comprises at least 70% (w/w) protein relative to the total weight of the composition.

In other preferred embodiments of the invention the edible BLG composition in powder form has a bulk density in the range of 0.50-1.5 g/mL and comprises at least 80% (w/w) protein relative to the total weight of the composition. Preferably, the powdered, edible BLG composition has a bulk density in the range of 0.55-1.0 g/mL and comprises at least 80% (w/w) protein relative to the total weight of the composition. More preferably the powdered, edible BLG composition may have a bulk density in the range of 0.60-1.0 g/mL and comprises at least 80% (w/w) protein relative to the total weight of the composition. It is even more preferred that the powdered, edible BLG composition has a bulk density in the range of 0.65-1.0 g/mL and comprises at least 80% (w/w) protein relative to the total weight of the composition. The powdered, edible BLG composition may preferably have a bulk density in the range of 0.70-1.0 g/mL and comprises at least 80% (w/w) protein relative to the total weight of the composition.

The bulk density of a powder is measured according to Example 9.3.

The present inventors have seen indications that the BLG compositions according to the present invention have better long-term stability than similar BLG compositions. This is particularly the case when at least some of the BLG is present in the form of BLG crystals, which seem to offer a better storage stability of the BLG molecules.

In some preferred embodiments of the invention the dry BLG composition has a furosine value of at most 80 mg/100 g protein after 60 days at 30 degrees C, preferably at most 60 mg/100 g protein, more preferably at most 40 mg/100 g protein, and even more preferably at most 20 mg/100 g protein. Most preferably, the dry BLG composition has a furosine value of at most 10 mg/100 g protein after 60 days at 30 degrees C.

In some preferred embodiments of the invention the dry BLG composition has a furosine value of at most 80 mg/100 g protein, preferably at most 60 mg/100 g protein, more preferably at most 40 mg/100 g protein, and even more preferably at most 20 mg/100 g protein. Most preferably, the dry BLG composition has a furosine value of at most 10 mg/100 g protein. Preferably the dry BLG composition has a furosine value of 0 mg/100 g protein.

In some preferred embodiments of the invention the BLG of the dry BLG composition has a degree of lactosylation of at most 1 after 60 days at 30 degrees C, preferably at most 0.6, more preferably 0.2, even more preferably at most 0.1, and most preferably at most 0.01.

In some preferred embodiments of the invention the edible BLG composition is a liquid composition. A liquid edible BLG composition preferably comprises at least 20% (w/w) water, more preferably at least 30% (w/w) water, even more preferably at least 40% (w/w).

The liquid edible BLG composition may e.g. comprises in the range of 20-90% (w/w) water, more preferably in the range of 30-80% (w/w) water, even more preferably at least 40% (w/w).

The present inventors have found that edible BLG compositions according to the present invention have surprisingly low degree of protein denaturation, even spray-drying has been used to prepare an edible BLG powder composition (see Example 11).

Thus, in some preferred embodiments of the invention the edible BLG composition has a degree of protein denaturation of at most 2%. Preferably, the edible BLG composition has a degree of protein denaturation of at most 1.5%. More preferably, the edible BLG composition has a degree of protein denaturation of at most 1.0%. Even more preferably, the edible BLG composition has a degree of protein denaturation of at most 0.8%. Even more preferably, the edible BLG composition has a degree of protein denaturation of at most 0.5%.

In some preferred embodiments of the invention, the edible BLG composition is a dry powder, and preferably a spray-dried powder, and has a degree of protein denaturation of at most 2%, and preferably at most 1.5%. More preferably, the dry edible BLG composition, e.g. in the form of a spray-dried powder, has a degree of protein denaturation of at most 1.0%. Even more preferably, the dry edible BLG composition, e.g. in the form of a spray-dried powder, has a degree of protein denaturation of at most 0.8%. Even more preferably, the dry edible BLG composition, e.g. in the form of a spray-dried powder, has a degree of protein denaturation of at most 0.5%.

In some preferred embodiments of the invention, the edible BLG composition comprises:

- At most 6% (w/w) water
- At least 80% total protein relative to total solids
- At least 95% BLG relative to total protein, and

said edible BLG composition:

- Is a dry powder, and
- Has a bulk density of at least 0.50 g/mL, and preferably at least 0.60 g/mL.

In other preferred embodiments of the invention, the edible BLG composition comprises:

- At most 6% (w/w) water
- At least 80% total protein relative to total solids
- At least 95% BLG relative to total protein, and

said edible BLG composition:

- Is a dry powder,
- Has a bulk density of at least 0.50 g/mL, and preferably at least 0.60 g/mL, and
- Has a crystallinity of BLG of at least 20% and preferably at least 40%.

In further preferred embodiments of the invention, the edible BLG composition comprises:

- At most 6% (w/w) water
- At least 80% total protein relative to total solids
- At least 95% BLG relative to total protein, and

said edible BLG composition:

- Is a dry powder,
- Has a bulk density of at least 0.50 g/mL, and preferably at least 0.60 g/mL, and
- Has a degree of protein denaturation of at most 2%, and preferably at most 1.0%.

In further preferred embodiments of the invention, the edible BLG composition comprises:

- At most 6% (w/w) water
- At least 80% total protein relative to total solids,
- At least 95% BLG relative to total protein,
- at most 80 mg phosphorus per 100 g protein.

said edible BLG composition:

- Is a dry powder.

In yet preferred embodiments of the invention, the edible BLG composition comprises:

- At most 6% (w/w) water
- At least 90% total protein relative to total solids,
- At least 97% BLG relative to total protein,
- at most 50 mg phosphorus per 100 g protein.

said edible BLG composition:

- Is a dry powder.

In other preferred embodiments of the invention, the edible BLG composition comprises:

- At most 6% (w/w) water

- At least 80% total protein relative to total solids, and preferably at least 90% total protein relative to total solids,
- 30-70% BLG relative to total protein,
- 8-25% (w/w) ALA relative to total protein,

said edible BLG composition:

- Is a dry powder, and
- Has a crystallinity of BLG of at least 20% and preferably at least 40%.

In some preferred embodiments of the invention, the edible BLG composition comprises:

- 20-80% (w/w) water, and preferably 20-60% (w/w) water,
- At least 80% total protein relative to total solids, and preferably at least 90% total protein
- At least 95% BLG relative to total protein,
- at most 80 mg phosphorus per 100 g protein.

said edible BLG composition:

- has a crystallinity of BLG of at least 20%, preferably at least 40,and
- optionally, has a degree of protein denaturation of at most 2%, and preferably at most 1.0%.

Edible compositions according to these embodiments are particularly useful for preparing edible BLG compositions in dried form, and are particularly suitable for spray-drying and preparation of a high density whey protein powder having the normal concentration profile of whey protein species whey protein but containing at least some of the BLG in the form of dried BLG crystals.

In other preferred embodiments of the invention, the edible BLG composition comprises:

- 20-80% (w/w) water, and preferably 20-60% (w/w) water,
- At least 80% total protein relative to total solids, and preferably at least 90% total protein relative to total solids,
- 30-70% BLG relative to total protein,
- 8-25% (w/w) ALA relative to total protein,

said edible BLG composition:

- Has a crystallinity of BLG of at least 20% and preferably at least 40%.

Edible compositions according to these embodiments are particularly useful for preparing edible BLG compositions in dried form, and are particularly suitable for spray-drying and preparation of a high density whey protein powder having the normal concentration profile of whey protein species whey protein but containing at least some of the BLG in the form of dried BLG crystals.

Yet an aspect of the invention pertains to the use of an edible BLG composition as defined herein as a food ingredient.

It may for example be preferred to use a low phosphorus, edible BLG composition as defined herein as a food ingredient in the production of a low phosphorus food product.

A further aspect of the invention pertains to a food product comprising an edible BLG composition as defined herein and at least an additional ingredient, such as e.g. a source of fat and/or carbohydrate.

In some preferred embodiments of the invention the food product is a dry food product, e.g. a bar, comprising carbohydrate and protein, said dry food product comprising at least 1% (w/w) BLG, preferably at least 5%, wherein:

i) the crystallinity of BLG is at least 20%, preferably at least 40%, and/or
ii) at least 90% (w/w) of the total amount of protein is comprised by BLG.

In some particularly preferred embodiments of the invention the food product is a low phosphorus food product comprising at most 100 mg phosphorus per 100 g protein, preferably at most 80 mg phosphorus per 100 g protein, more preferably at most 40 mg phosphorus per 100 g protein, and even more preferably at most 20 mg phosphorus per 100 g protein.

BLG has a favourable amino acid profile and preferably contributes with a significant part of the protein of the food product. This is particularly interesting if the food product is a low mineral or low phosphorous food product. In some preferred embodiments of the invention the edible BLG composition contributes to at least 25% (w/w) of the total amount of protein of the food product, or at least 50% (w/w), more preferably at least 80% (w/w), and even more preferred at least 90% (w/w). It may even be most preferred that the edible BLG composition contributes with all protein of the food product.

In some preferred embodiments of the invention the low phosphorus, edible BLG composition contributes to at least 25% (w/w) of the total amount of protein of the low phosphorus food product, or at least 50% (w/w), more preferably at least 80% (w/w), and even more preferred at least 90% (w/w). It may even be most preferred that the low phosphorus, edible BLG composition contributes with all protein of the low phosphorus food product.

Non-limiting examples of the food product are e.g. a dairy product, a candy, a beverage, a protein bar, an enteral nutritional composition, a bakery product.

In some preferred embodiments of the invention the food product is a beverage. The beverage preferably comprises:

- an edible BLG composition as defined herein to provide at total amount of BLG of at least 1% (w/w), preferably at least 5% (w/w), more preferably at least 8% (w/w), and even more preferably at least 12% (w/w),
- a sweetener, e.g. a sugar sweetener and/or a non-sugar sweetener,
- at least one food acid, e.g. citric acid or other suitable food acids,
- optionally, a flavouring agent, and
- at most 80 mg phosphorus/100 g protein

which has a pH in the range of 2.5-4.0.

The present inventors have realised that the preparation of acidic, high protein, low mineral, beverages or liquid from dry edible BLG composition comprising BLG crystals is not trivial. The dry edible BLG composition comprising BLG crystals typically create a pH in the range 5-6 when resuspended in water and addition of acids or salts to change the pH or increase the conductivity also increases the mineral load of the resulting liquid/beverage.

However, the inventors have found that if a carboxylic acid, a lactone, a carboxylic acid anhydride, or a combination thereof are used to lower the pH no unnecessary minerals are added and a better control of the mineral composition of the beverage/liquid is obtained.

Thus an aspect of the invention pertains to a process of producing an acidified, low mineral liquid using an edible BLG composition comprising BLG crystals as an ingredient, the method comprising the steps of:

- providing one or more acidifying agent(s) selected from the group consisting of a carboxylic acid, a lactone, a carboxylic acid anhydride, or a combination thereof,

- contacting the edible BLG composition comprising BLG crystals with the one or more acidifying agent(s), and optionally additional ingredients such as e.g. water, a fat source and/or a carbohydrate source, said one or more acidifying agent(s) used in an amount sufficient to adjust the pH to 2-4.5, and preferably 2.5-4.0, and allowing the BLG crystals to dissolve

thereby forming the liquid.

The liquid may e.g. be used as a beverage or it may be used as an ingredient for producing another food product.

If the edible BLG composition used in the process is provided in dry form, e.g. as a powder, it is often preferred to allow it to rehydrate in water before adding the acidifying agent.

The edible BLG composition used in the process is preferably present in the liquid in an amount sufficient to provide 1-30% (w/w) protein, preferably 2-25% (w/w) protein, more preferably 4-20% (w/w) protein, and even more preferably 5-16% (w/w) protein.

The edible BLG composition used in the process preferably has a crystallinity of BLG of at least 30%, preferably at least 50% and even more preferably at least 70%.

Examples of suitable acidifying agent(s) are:

- carboxylic acids such as e.g. acetic acid, maleic acid, tartaric acid, lactic acid, citric acid, gluconic acid, or mixtures thereof,
- lactones such as e.g. D-glucono-delta-lactone,
- carboxylic acid anhydrides.

In some preferred embodiments the edible BLG composition comprising BLG crystals used in the process is preferably a low phosphorus composition and any other ingredients used in the process are preferably selected so the final liquid also is a low phosphorus composition.

In other preferred embodiments the edible BLG composition comprising BLG crystals used in the process is preferably a low mineral composition and any other ingredients used in the process are preferably chosen so that the final liquid also is a low mineral composition.

The process is preferably performed at a temperature in the range of 1-65 degrees C, preferably 2-50 degrees C, more preferably in the range of 3-20 degrees C, even more preferably in the range of 4-15 degrees C.

The present invention has been described above with reference to specific embodiments. However, other embodiments than the above described are equally possible within the scope of the invention. The different features and steps of various embodiments and aspects of the invention may be combined in other ways than those described herein unless it is stated otherwise.

Preferred, numbered embodiments of the invention are described in the following:

Numbered embodiment 1. A method of preparing an edible composition comprising beta-lactoglobulin (BLG) in crystallised and/or isolated form, the method comprising the steps of

a) providing a whey protein solution comprising BLG and at least one additional whey protein, said whey protein solution is:

- supersaturated with respect to BLG and has a pH in the range of 5-6,
- comprises BLG in an amount of at most 90% (w/w),

b) crystallising BLG in the supersaturated whey protein solution, preferably in salting-in mode, and

c) optionally, separating BLG crystals from the remaining whey protein solution.

Numbered embodiment 2. The method according to numbered embodiment 1 furthermore comprising a step d) of washing BLG crystals, e.g. the separated crystals obtained from step c).

Numbered embodiment 3. The method according to numbered embodiment 1 or 2 furthermore comprising a step e) of re-crystallising BLG crystals, e.g. the BLG crystals obtained from step c) or d).

Numbered embodiment 4. The method according to any of the preceding numbered embodiments, furthermore comprising a step f) of drying a BLG-containing composition derived from step b), c), d), or e).

Numbered embodiment 5. The method according to any of the preceding numbered embodiments, wherein the whey protein solution of step a) comprises at least 5% (w/w) ALA relative to the total amount of protein.

Numbered embodiment 6. The method according to any of the preceding numbered embodiments, wherein the whey protein solution of step a) comprises at least 15% (w/w) additional whey protein relative to the total amount of protein.

Numbered embodiment 7. The method according to any of the preceding numbered embodiments, wherein the whey protein solution of step a) comprises at least 1% (w/w) BLG relative to the total amount of protein.

Numbered embodiment 8. The method according to any of the preceding numbered embodiments, wherein the whey protein solution of step a) comprises at least 0.4% (w/w) BLG relative to the weight of the whey protein solution.

Numbered embodiment 9. The method according to any of the preceding numbered embodiments, wherein the whey protein solution comprises a milk serum protein concentrate, a whey protein concentrate, milk serum protein isolate, and/or whey protein isolate.

Numbered embodiment 10. The method according to any of the preceding numbered embodiments, wherein the ratio between the conductivity and the total amount of protein of the whey protein solution is at most 0.3.

Numbered embodiment 11. The method according to any of the preceding numbered embodiments, wherein the UF permeate conductivity of the whey protein solution is at most 7 mS/cm.

Numbered embodiment 12. The method according to any of the preceding numbered embodiments, wherein the supersaturated whey protein solution is prepared by subjecting a whey protein feed to one or more of the following adjustments:

- Adjusting the pH,
- Reducing the conductivity
- Reducing the temperature
- Increasing the protein concentration, and
- Adding an agent that reduces the water activity.

Numbered embodiment 13. The method according to any of the preceding numbered embodiments, wherein the preparation of the whey protein solution involves adjusting the pH of the whey protein feed.

Numbered embodiment 14. The method according to any of the preceding numbered embodiments, wherein the preparation of the whey protein solution involves reducing the conductivity of the whey protein feed.

Numbered embodiment 15. The method according to any of the preceding numbered embodiments, wherein the preparation of the whey protein solution involves reducing the temperature of the whey protein feed.

Numbered embodiment 16. The method according to any of the preceding numbered embodiments, wherein the preparation of the whey protein solution involves increasing the total protein concentration of the whey protein feed.

Numbered embodiment 17. The method according to any of the preceding numbered embodiments, wherein the crystallisation of BLG of step b) involves one or more of the following:

- Waiting for crystallisation to take place,
- Addition of crystallisation seeds,
- Increasing the degrees of degree of supersaturation of BLG even further, and/or
- Mechanical stimulation.

Numbered embodiment 18. The method according to any of the numbered embodiments 1-17, wherein step c) comprises separating the BLG crystals to a solids content of at least 30% (w/w), preferably at least 40% (w/w) and even more preferably at least 50% (w/w).

Numbered embodiment 19. The method according to any of the numbered embodiments 2-19, wherein the washing in step d) involves contacting the separated BLG crystals with a washing liquid without completely dissolving the BLG crystals and subsequently separating the remaining BLG crystals from the washing liquid.

Numbered embodiment 20. The method according to numbered embodiment 19 wherein the washing of step d) dissolves at most 80% (w/w) of the initial amount of BLG crystals, preferably at most 50% (w/w), and even more preferably at most 20% (w/w) of the initial amount of BLG crystals.

Numbered embodiment 21. The method according to any of the numbered embodiments 3-20 wherein the recrystallization step involves:

- dissolving the separated BLG crystals in a recrystallization liquid,
- adjusting the recrystallization liquid to obtain supersaturation with respect to BLG,
- crystallising BLG in the supersaturated, adjusted recrystallization liquid, and
- separating BLG crystals from the remaining adjusted recrystallization liquid.

Numbered embodiment 22. The method according to any of the numbered embodiments 3-21, wherein BLG crystals of step d) are recrystallized at least 2 times

Numbered embodiment 23. The method according to any of the numbered embodiments 4-22 wherein the drying step involves one or more of spray drying, freeze drying, spin-flash drier, rotary drying, and/or fluid bed drying.

Numbered embodiment 24. An edible BLG composition, said composition is obtainable by one or more processes according to any of the numbered embodiments 1-23.

Numbered embodiment 25. An edible BLG composition comprising at least 90% (w/w) BLG relative to total solids.

Numbered embodiment 26. The edible BLG composition according to numbered embodiment 25, and having a crystallinity of BLG of at least 10%.

Numbered embodiment 27. An edible BLG composition according to any of the numbered embodiments 24-26 comprising at most 90% (w/w) BLG relative to the total amount of protein, and having a crystallinity of BLG of at least 10%.

Numbered embodiment 28. The edible BLG composition according to any of the numbered embodiments 24 to 27, wherein the composition is a dry composition.

Numbered embodiment 29. The dry BLG composition according to numbered embodiment 28, in the form of a powder having a bulk density of at least 0.4 g/mL, preferably a spray-dried powder.

Numbered embodiment 30. The dry BLG composition according to numbered embodiment 28 or 29 comprising

- at least 20% (w/w) BLG relative to the total amount of protein, and
- a crystallinity of BLG of at least 10%.

Numbered embodiment 31. The edible BLG composition according to any of the numbered embodiments 24 to 27, wherein the composition is a liquid composition.

Numbered embodiment 32. The edible BLG composition according to any of the numbered embodiments 24 to 31, whererin the composition is a low mineral composition.

Numbered embodiment 33. The edible BLG composition according to any of the numbered embodiments 24 to 32, whererin the composition is a low phosphorus composition.

Numbered embodiment 34. Use of an edible BLG composition according to any of the numbered embodiments 24-33 as a food ingredient.

Numbered embodiment 35. Use of a low phosphorus, edible BLG composition according to any of the numbered embodiments 24-33 as a food ingredient in the production of a low phosphorus food product.

Numbered embodiment 36. A food product comprising an edible BLG composition according to any of the numbered embodiments 24-33 and at least an additional ingredient, such as e.g. a source of fat and/or carbohydrate.

Numbered embodiment 37. The food product according to numbered embodiment 36 which is a dry food product comprising carbohydrate and protein, said dry food product comprising at least 1% (w/w) BLG, wherein:

i) the BLG has a crystallinity of at least 10%, and/or
ii) at least 90% (w/w) of the total amount of protein is comprised by BLG,

Numbered embodiment 38. The food product according to any of the numbered embodiments 36-37, which is a low phosphorus food product comprising at most 80 mg phosphorus per 100 g protein.

Numbered embodiment 39. The food product according to any of the numbered embodiments 36-38, which is a dairy product, a candy, a beverage, a protein bar, or an enteral nutritional composition.

Numbered embodiment 40. The food product according to any of the numbered embodiments 36-39, in the form of a beverage:

- comprising the edible product according to any of the numbered embodiments 24-33 to provide at total amount of BLG of at least 1% (w/w),
- a sweetener,
- at least one food acid,
- having a pH in the range of 2.5-4.0, and
- at most 80 mg phosphorus per 100 g protein.

Numbered embodiment 41. An isolated BLG crystal having an orthorhombic space group P $2_1$ $2_1$ $2_1$ and the unit cell dimensions a=68.68 ($\pm5\%$) Å, b = 68.68 ($\pm5\%$) Å, and c = 156.65 ($\pm5\%$) Å; and having the unit cell integral angles $\alpha$=90°, $\beta$=90°, and $\gamma$=90°.

Numbered embodiment 42. The isolated BLG crystal according to numbered embodiment 40 comprising a least 20%(w/w) BLG and at most about 80% (w/w) water.

EXAMPLES

**Example 1: Crystallization of beta-lactoglobulin from a crude whey protein concentrate**

Protocol:

Lactose depleted UF retentate derived from sweet whey from a standard cheese production process and filtered through a 1.2 micron filter was used as feed for the BLG crystallization process. The sweet whey feed was conditioned on an ultrafiltration setup using a Koch HFK-328 type membrane with a 46 mil spacer feed pressure of 1.5-3.0 bar, using a feed concentration of 21% TS (total solids) $\pm5$, and polished water (water filtered by reverse osmosis to obtain a conductivity of at most 0.05 mS/cm) as diafiltration medium. The temperature of the feed and retentate during ultrafiltration was approx. 12 degrees C. The pH was then adjusted by adding HCl to obtain a pH of approx. 5.40. Diafiltration continued until the drop in conductivity of the retentate was below 0.03 mS/cm over a 20 min period. The retentate was then concentrated to approx. 30% TS (approx. 23.1% total protein relative to the total weigh of the concentrated retentate). A sample of the concentrated retentate was centrifuged at 3000 g for 5 minutes but no visible pellet was formed. The supernatant was subjected to HPLC analysis. The composition of the feed is shown in Table 1.

The concentrated retentate was seeded with 0.5 g/L pure BLG crystal material obtained from a spontaneous BLG crystallization (as described in Example 3 in the context of feed 2). The seeding material was prepared by washing a BLG crystal slurry 5 times in milliQ water, collecting the BLG crystals after each wash. After washing, the BLG crystals were freeze dried, grounded up using a pestle and mortar, and then passed through a 200 micron sieve. The crystallization seeds therefore had a particle size of less than 200 micron.

The concentrated retentate was transferred to a 300L crystallization tank where it was cooled to about 4 degrees C and kept at this temperature overnight with gentle stirring. Next morning, a sample of the cooled concentrated retentate was transferred to a test tube and inspected both visually and microscopy. Rapidly sedimenting crystals had clearly formed overnight. A lab sample of the mixture comprising both crystals and mother liquor was further cooled down to 0 degrees C in an ice water bath. The mother liquor and the crystals were separated by centrifugation 3000 g for 5 minutes, and samples of the supernatant and pellet were taken for HPLC analysis. The crystals were washed once in cold polished water and then centrifuged again before freeze-drying the pellet.

*Table 1 Concentration of selected components of the feed standardized to 95% (w/w) total solids.*

| Feed standardized to 95% TS | | |
|---|---|---|
| Protein composition (% w/w relative to total protein) | | |
| ALA | | 17.7 |
| BLG | | 51.6 |
| CMP | | 19.5 |
| Other components (% w/w relative to total weight of the standardized feed) | | |
| Ca | | 0.357 |
| K | | 0.200 |
| Mg | | 0.058 |
| Na | | 0.045 |
| P | | 0.280 |
| fat | | 5.6 |
| protein | | 79 |

BLG relative yield quantification by HPLC:

All samples were subjected to the same degree of dilution by adding polished water. The samples were filtered through a 0.22 micron filter. For each sample the same volume was loaded on an HPLC system with a Phenomenex Jupiter® 5 $\mu$m C4 300 Å, LC Column 250 x 4.6 mm (Part Number: 00G-4167-E0) and detected at 214 nm.
The samples were run using the following conditions:

Buffer A: MilliQ water, 0.1%w/w TFA
Buffer B: HPLC grade acetonitrile, 0.085%w/w TFA

Flow: 1ml/min

Gradient: 0-30 minutes 82-55%A and 18-45%B; 30-32 minutes 55-10%A and 45-90%B; 32.5-37.5 minutes 10%A and 90%B; 38-48 minutes 10-82%A and 90-18%B.

Data treatment:

As all samples were treated in the same way, we can directly compare the area of the BLG peaks to gain a relative yield. As the crystals only contain BLG and the samples all have been treated in the same way, the concentration of alpha-lactalbumine (ALA) and hence the area of ALA should be the same in all of the samples, therefore the area of ALA before and after crystallization is used as a correction factor (cf) when calculating the relative yield.

$$cf_\alpha = \frac{\text{area of ALA}_{before\ crystallization}}{\text{area of ALA}_{after\ crystallization}}$$

The relative yield is calculated by the following equation:

$$Yield_{BLG} = \left(1 - \frac{cf_\alpha \times area\ of\ BLG_{after\ crystallization}}{area\ of\ BLG_{before\ crystallization}}\right) \times 100$$

Results:

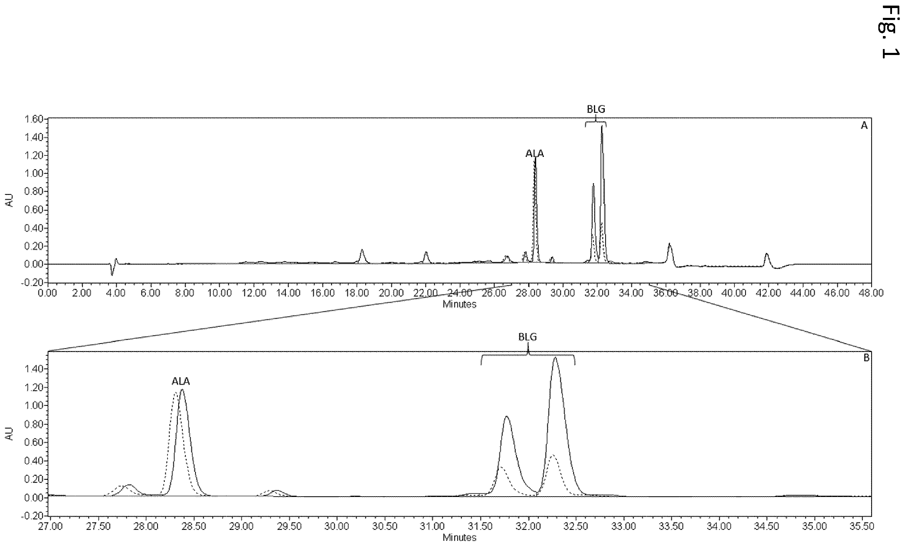

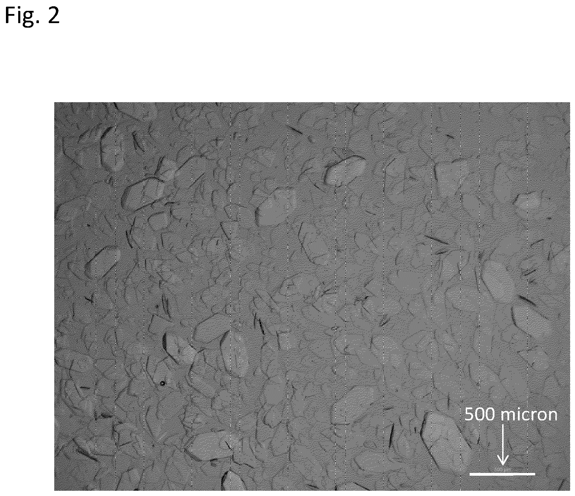

Figure 1 shows the overlaid chromatograms from before and after crystallization of BLG from a sweet whey. The "before crystallization" sample is represented by the solid black line and the "after crystallization" sample by the dotted line. It is apparent that a large decrease in the concentration of BLG has occurred, and using the yield calculation as previously described the yield of removed BLG was determined to 64.5% (w/w).
The crystal slurry was investigated by microscopy; as can be seen from Figure 2, the sample contained hexagonal crystals, many having a size considerably larger than 200 micron indicating that the observed crystals are not only the seeding crystals. The crystals easily shattered when pressed with a needle which confirmed that they were protein crystals.

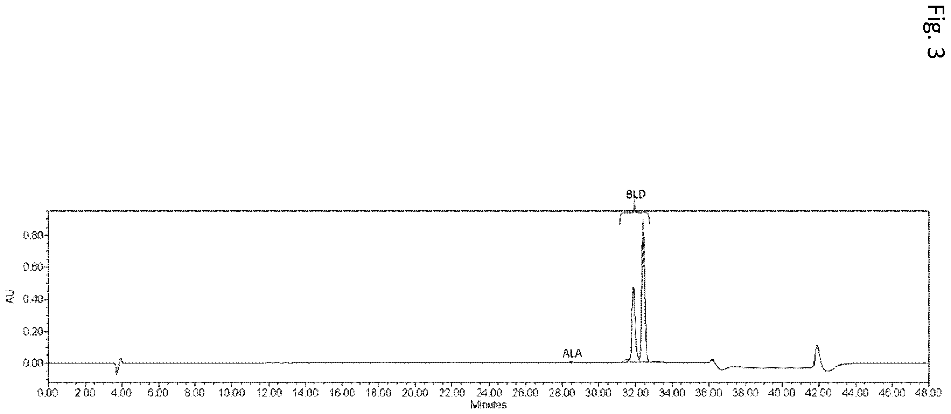

Figure 3 shows the chromatogram of a washed crystal product, and in this case BLG makes up 98.9% of the total area of the chromatogram. The purity of the BLG product can be increased even further by additional washing.

Conclusion:

This example demonstrates that surprisingly it is possible to crystalize BLG selectively from a crude whey protein concentrate which contains more that 48% non-BLG protein relative to total protein and that the obtained BLG crystal isolate has an extremely high purity. This discovery opens up for a new approach for industrial milk protein separation, in which BLG is separated from the other protein components in a gentle way that preferably avoids extended exposure to high temperatures and problematic chemicals.

**Example 2: The influence of conductivity and temperature on the yield of BLG**

Protocol:

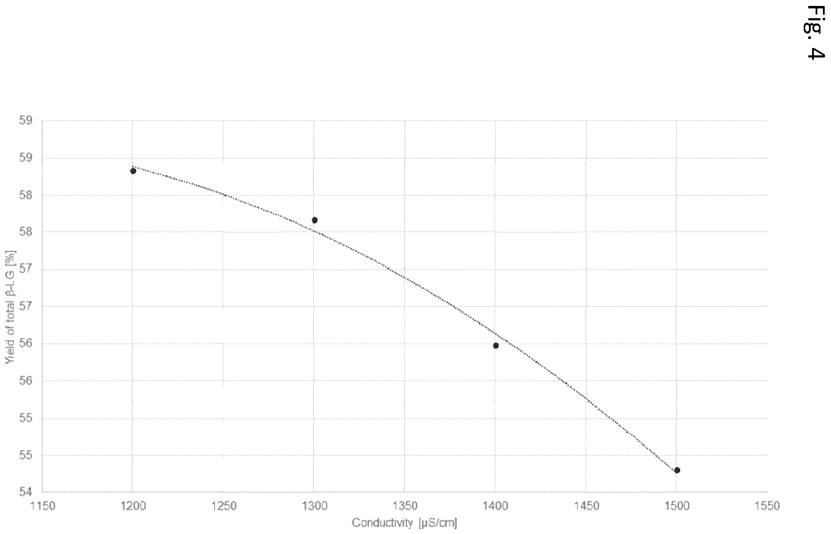

Using the same feed, experimental and analytical setup as in Example 1, samples of the retentate (approx. 13.9% (w/w) total protein) were taken during UF diafiltration at different conductivity levels in order to investigate the influence of conductivity on the yield of BLG crystals. The samples were cooled down to 4 degrees C and kept at this temperature overnight (however, the inventors have observed that 30 minutes or even less may be sufficient for equilibrium to be reached) and then three of the samples were cooled down to 0 degrees C in ice water and kept at this temperature for at least 1 hour to show the effects of temperature on yield. Results for the 4 degrees C samples can be seen in Figure 4.

After the diafiltration was complete, samples were taken at Brix 21, 24 and 32.5 during concentration. These samples were first cooled to 4 degrees C and kept at this temperature overnight. The yield of BLG crystals was measured as described in Example 1. The samples were then cooled down to 0 degrees C in ice water and kept at this temperature for at least 1 hour. Subsequently, the yield of BLG crystals was measured again.

Results:

When plotting the relative yield of BLG vs. the conductivity in the samples as seen in Figure 4 there is a clear correlation between lower conductivity and higher relative yield of BLG.

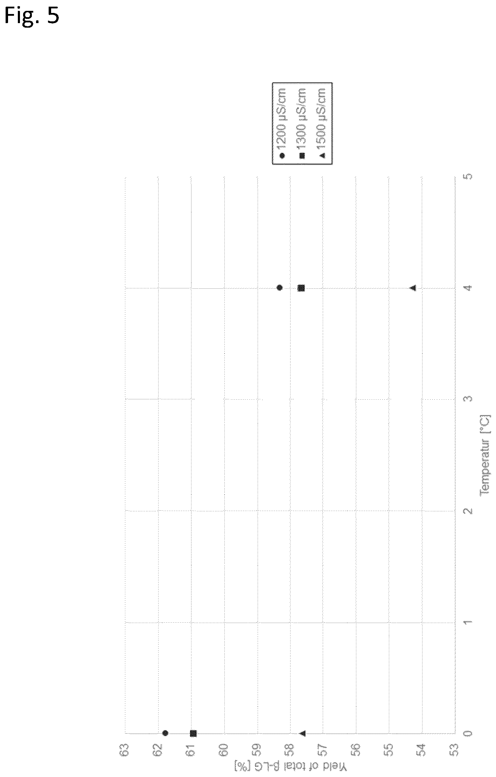

In Figure 5, the yield of three of the samples varying in conductivity are shown at two temperatures (4 and 0 degrees C), it can be seen that the lower the temperature, the greater the yield of BLG. Lowering the temperature even further is expected to increase the yield.

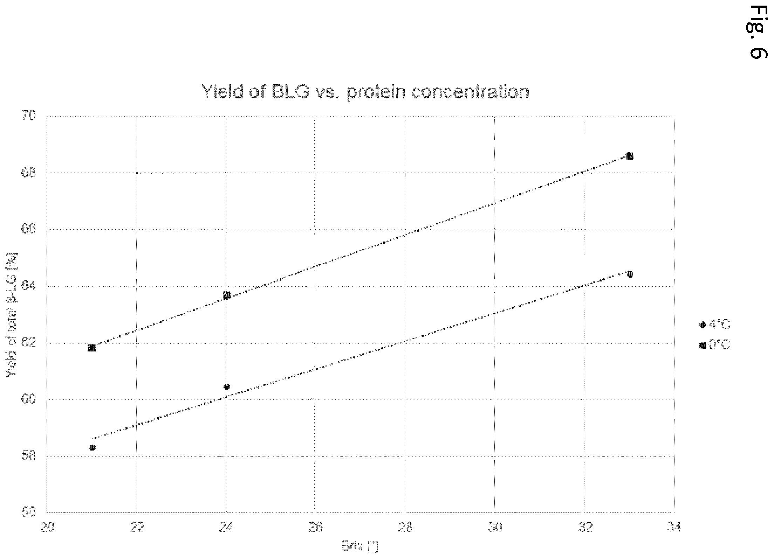

Figure 6 shows the influence of the protein concentration on the relative yield of BLG both at 4 and 0 degrees C. The figure shows a clear correlation between the protein concentration, shown here through a Brix measurement, and the relative yield of BLG, indicating that the relative yield continues to increase as the protein concentration increases.

Conclusion:

The inventors have observed that a number of parameters impact the efficiency of the crystallization process. At a given pH value the yield of BLG can be increased by decreasing the conductivity, increasing the concentration of BLG, and decreasing the temperature.

**Example 3: Crystallisation of BLG in three types of whey protein solutions**

Protocol:

Using the same experimental and analytical setup as in Example 1, three different types of whey protein-containing raw material were tested as feeds for crystallization. However, no seeding was used in the experiment performed with feed 2. Feed 1 and 2 were based on sweet whey and had been fat-reduced via a Synder FR membrane prior to treatment as described in Example 1. Feed 3 was derived from an acid whey.

The composition of the three feeds can be seen below in Table 2, Table 3, and Table 4. Feed 3 was crystalized at 21% TS (total protein of 13.3% w/w relative to the total weight of the feed), a significantly lower concentration than the other two (total protein of 26.3% (w/w) in feed 1 and 25.0% (w/w) in feed 2).

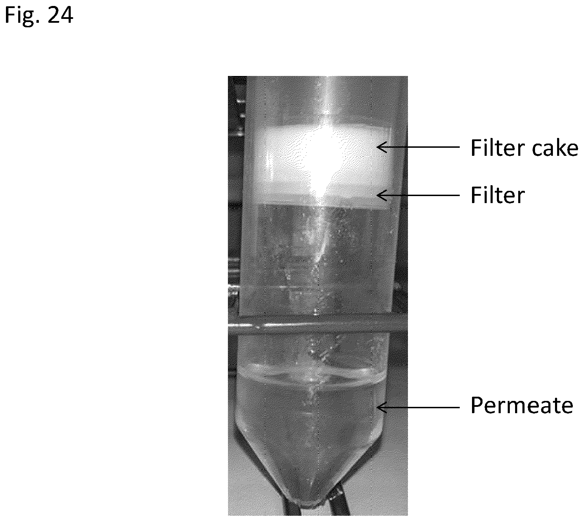

The slurry of the crystallized feed 1 was centrifuged on a Maxi-Spin filter with a 0.45 micron CA membrane at 1500 g for 5 minutes then 2 volumes of MilliQ water was added to the filter cake before it was centrifuged again. The resulting filter cake was analyzed by HPLC. A photo of the Maxi-Spin filter holding the pellet (filter cake) of the crystallized feed 1 is shown in Figure 24. The pellet from feed 2 was washed with 2 volume MilliQ water and centrifuged again under standard conditions before the pellet was analyzed by HPLC. The pellet from feed 3 was analyzed without washing.

Crystals made from feed 2 were diluted to 10%TS and pH adjusted to pH 7 using 1M NaOH to reverse the crystallization. NaCl was added to a crystal slurry from feed 2, 36%TS to reverse the crystallization.

*Table 2 The concentration of selected components of feed 1 (whey protein concentrate based on sweet whey). BDL= below detection limit in wet sample*

| Feed 1 (standardized to 95% TS) Protein composition (% w/w relative to total protein) | |
|---|---|
| ALA | 23.0 |

(continued)

| Feed 1 (standardized to 95% TS) Protein composition (% w/w relative to total protein) | |
|---|---|
| BLG | 55.1 |
| CMP | 20.5 |
| Other components (% w/w relative to the total weight of the standardized feed) | |
| Ca | 0.387 |
| K | 0.290 |
| Mg | 0.066 |
| Na | 0.068 |
| P | 0.207 |
| Fat | BDL |
| protein concentration | 90 |

Table 3 The concentration of selected components of feed 2 (ALA-reduced whey protein concentrate based on sweet whey). BDL= below detection limit in wet, non-standardized sample.

| Feed 2 standardized to 95% TS Protein composition (% w/w relative to total protein) | |
|---|---|
| ALA | 12.2 |
| BLG | 70.0 |
| CMP | 17.1 |
| Other components (% w/w relative to the total weight of the standardized feed) | |
| Ca | 0.387 |
| K | 0.204 |
| Mg | 0.066 |
| Na | 0.051 |
| P | 0.174 |
| fat | BDL |
| protein concentration | 89 |

Table 4 The concentration of selected components of feed 3 (whey protein concentrate based on acid whey).

| Feed 3 standardized to 95% TS Protein composition (% w/w relative to total protein) | |
|---|---|
| ALA | 24.0 |
| BLG | 63.6 |
| Other whey proteins | 12.4 |
| Other components (% w/w relative to the total weight of the standardized feed) | |
| Ca | 0.205 |
| K | 0.051 |
| Mg | 0.013 |
| Na | 0.108 |
| P | 0.240 |

(continued)

| Other components (% w/w relative to the total weight of the standardized feed) | |
|---|---|
| fat | 5.1 |
| protein concentration | 79 |

Results:

Feed 1:

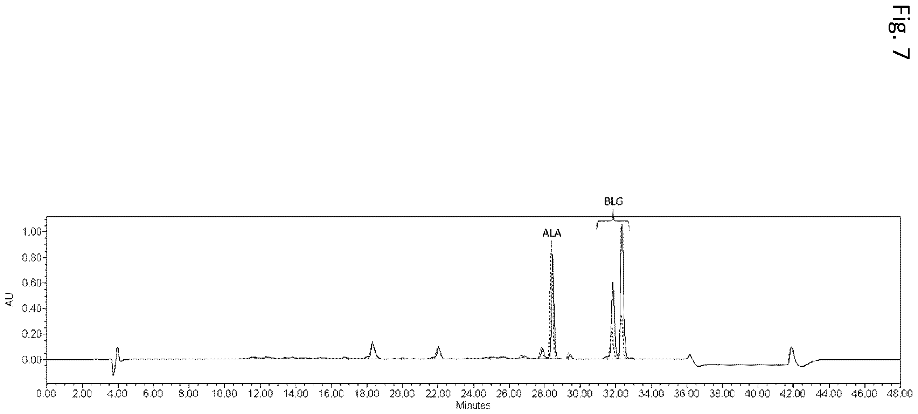

In Figure 7, chromatograms of the protein composition of the feed (solid line) and the mother liquor (dashed line) can be seen. It is evident that a large portion of BLG was recovered as crystals by the process. The yield (calculated as described in example 1) of isolated BLG is approx. 65% relative to the total amount of BLG in the feed.

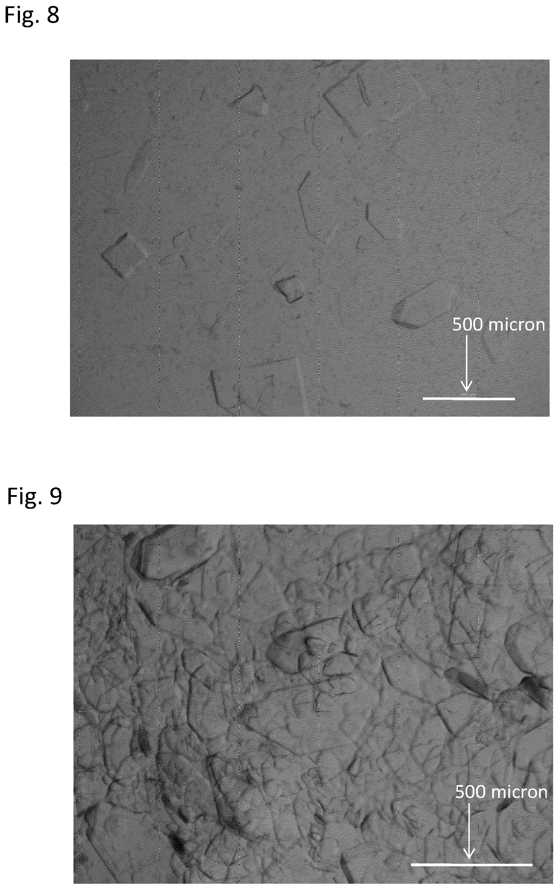

Figure 8 is a microscope photo of a sample taken during the early stages of the crystallization period. Figure 9 is a microscope photo of a sample which was taken when the crystallization had ended. It is clear from these two pictures that the BLG crystals are relatively fragile. Some of the crystals appear to break during stirring and are converted from hexagonal or rhombic shape to crystals fragment which still appear very compact and well-defined but have more irregular shapes.

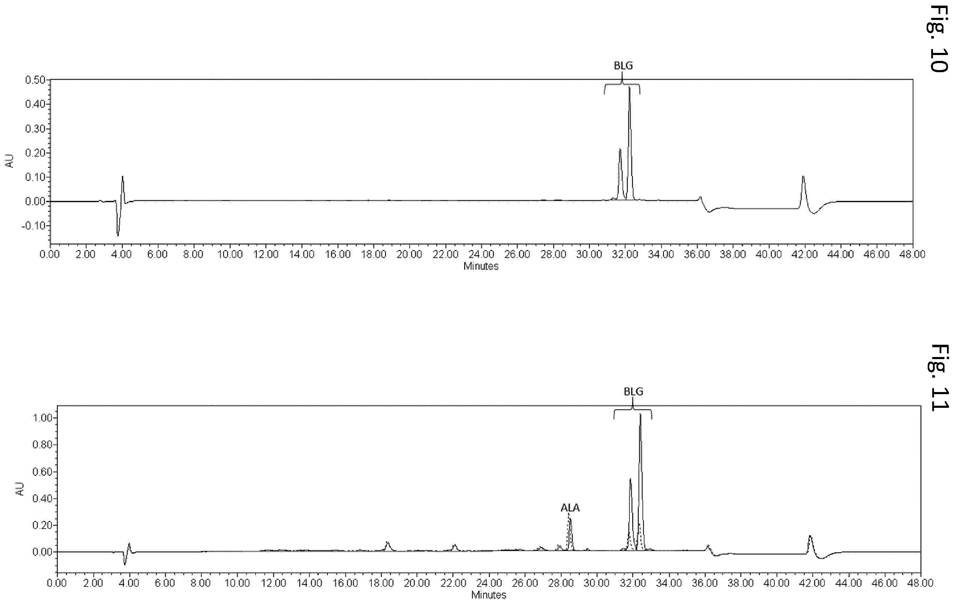

Figure 10 shows the chromatogram of the BLG crystals which was separated and washed on a spin filter. As seen on the figure the purity is very high and the removal of other whey proteins is extremely efficient.

Feed 2:

In Figure 11 the protein composition of feed 2 (solid line) and the obtained mother liquor (dashed line) can be seen. It is evident that a large portion of BLG has been removed, and the calculated yield was 82% relative to the total amount of BLG in the feed 2.

Figure 12 shows feed 2 before (left-hand picture) and after (right-hand picture) crystallization. During crystallization the feed transformed from a transparent liquid (in which the stirring magnet was visible) to a milky white, opaque liquid.

Figure 13 shows a microscope photo of the BLG crystals. Hexagonal shapes can be seen though the majority of the crystals are fractured.

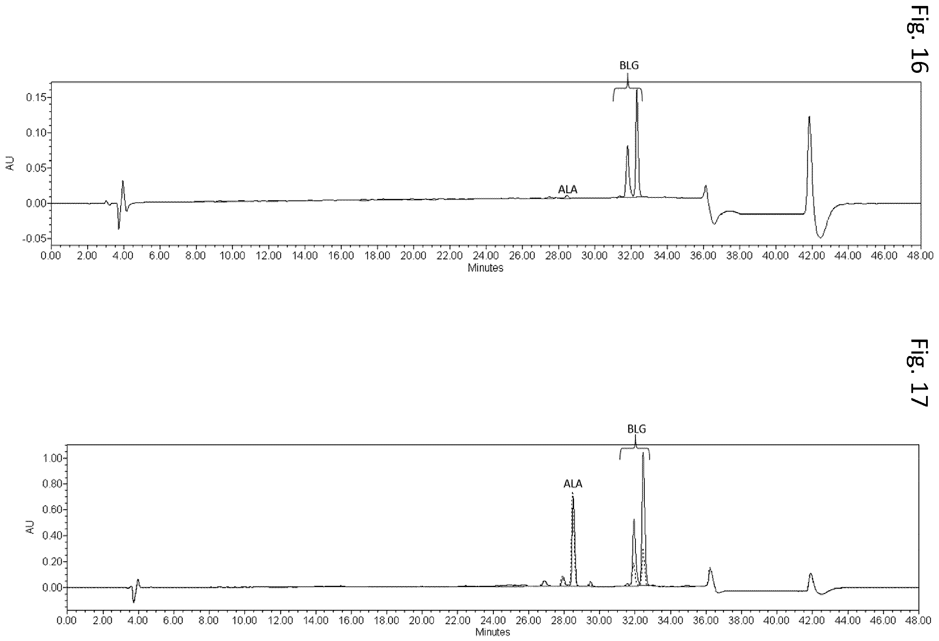

Figure 16 is the chromatogram of the isolated pellet of BLG crystals after being washed with 2 volumes of MilliQ water. The chromatogram clearly shows that the crystals contain BLG in a very high purity.

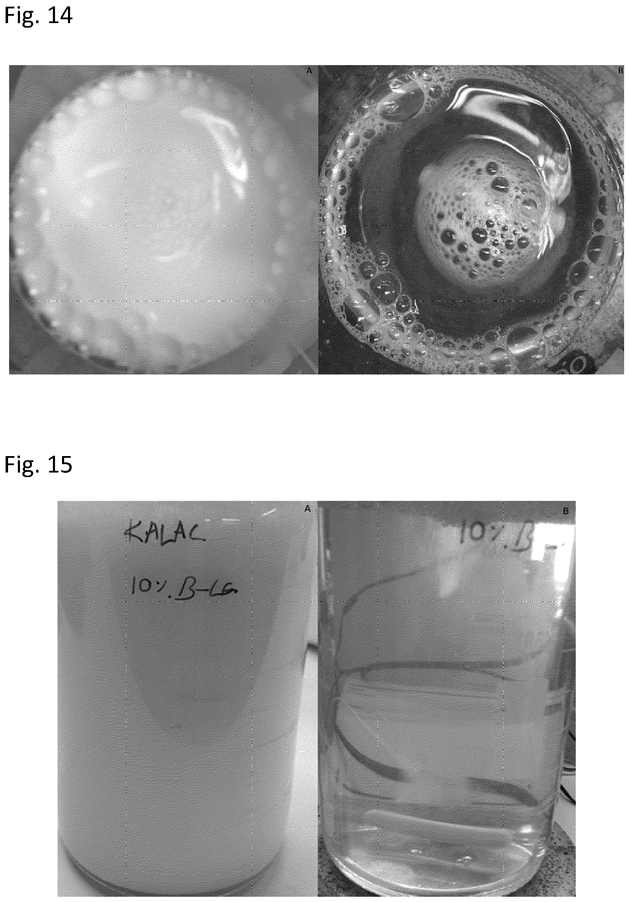

Figures 14 and 15 show the results of either raising the conductivity (by adding NaCl) or altering the pH (by adjusting the pH to 7 by addition of NaOH) so that the environment no longer favours the crystalline structure. In both cases the milky white suspension turns in to a transparent liquid as the BLG crystals are dissolved.

The mineral composition of the crystal preparation obtained from feed 2 is provided in Table 5. We note that the phosphorus to protein ratio was very low which makes the crystal preparation suitable as a protein source for patients having kidney diseases.

| Table 5 The concentration of selected components in the crystal preparation obtained from feed 2. | |
|---|---|
| Composition of the crystal preparation obtained from feed 2 | % w/w relative to the composition standard-ized to 95% TS |
| Ca | 0.119 |
| K | 0.047 |
| Mg | 0.019 |
| Na | BDL |
| P | BDL (less than 0.026) |
| Total protein | 93.4 |

Feed 3:

In Figure 17 chromatograms of the protein composition of feed 3 (solid line) and the resulting mother liquor (dashed line) are shown. It is evident that a large portion of BLG was isolated (a calculated yield of 70.3% relative to the total amount of BLG in the feed). If the protein content had been higher before crystallization, the obtained yield would have been even higher.

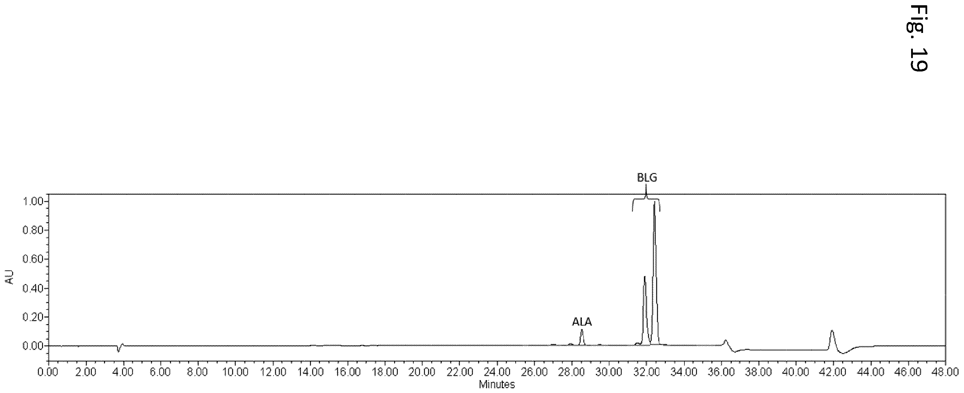

Figure 18 is a microscope photo of the BLG crystals isolated from feed 3 (substantially free of CMP). The crystals had a rectangular shape as opposed to hexagonal. The rectangular crystals seemed more robust than the hexagonal ones. Figure 19 shows a chromatogram of the isolated crystal pellet without washing; the chromatogram clearly shows that the crystals were BLG crystals despite having a rectangular shape instead of a hexagonal shape (compare e.g. the rectangular crystal shapes of Figure 18 with the hexagonal crystal shapes of Figure 2).

Table 6 The concentration of selected components of the crystal preparation obtained from feed 3.

| Composition of the crystal preparation obtained from feed 3 | % w/w relative to the crystal preparation standardized to 95% TS |
|---|---|
| Ca | 0.103 |
| K | BDL |
| Mg | 0.006 |
| Na | 0.035 |
| P | 0.041 |
| Total protein | 90 |

The crystal preparation derived from feed 3 contained 45 mg P/100 g protein. We note that the phosphorus to protein ratio is very low, which makes the crystal preparation suitable as a protein source for patients having kidney diseases.

Conclusion:

All three feeds were suitable for the BLG crystallization process. The BLG crystals were easily dissolved by adding salt or raising the pH or the temperature. The new method makes it possible to prepare BLG preparations with very low contents of phosphorus, which makes the preparations suitable as a protein sources for patients having kidney diseases.

**Example 4 The influence of pH on the BLG crystal yield**

Protocol:

The same protocol and experimental set up as Example 1 (using fat-reduced sweet whey protein concentrates) was used, with the exception that pH was adjusted to the levels described in Table 8 for each of the experiments. The protein concentration at the beginning of the crystallization step was approx. 24% (w/w).

The pH was adjusted with either a thin NaOH solution (>4%) or a thin HCl (>3,6%) solution in order to investigate the impact of pH on the crystallization process and the obtained yield. After crystallization, the BLG crystals were separated by centrifugation as described in Example 1.

Table 7 The concentration ranges of selected components of the feeds used for example 4.

| Used feeds standardized to 95% TS Protein composition % of total protein (%) | |
|---|---|
| ALA | 10-15 |
| BLG | 60-70 |
| CMP | 12-17 |
| Other components (% w/w relative to the total weight of the standardized feed) | |
| Ca | 0.36-0.45 |
| K | 0.18-0.22 |
| Mg | 0.04-0.08 |

(continued)

| Other components (% w/w relative to the total weight of the standardized feed) | |
|---|---|
| Na | 0.02-0.06 |
| P | 0.17-0.20 |
| Fat | BDL |
| protein concentration | 89-91 |

*Table 8 Target pH of the samples*

| sample | Target pH |
|---|---|
| 1 | 4.80 |
| 2 | 5.20 |
| 3 | 5.50 |
| 4 | 5.80 |
| 5 | 6.00 |
| 6 | 6.20 |

Results:

The yields were calculated as described in Example 1. It should be noted that the starting samples were taken before addition of the seeding material. Therefore, if the samples were not supersaturated with respect to BLG, the seeding material would dissolve and contribute to the total BLG concentration, in which case the BLG yield would appear to be negative.

*Table 9 calculated yields of the samples base on HPLC measurements.*

| sample | pH | Yield of total BLG (%) |
|---|---|---|
| 1 | 4.84 | -2.7 |
| 2 | 5.20 | 50.0 |
| 3 | 5.44 | 82.0 |
| 4 | 5.73 | 62.1 |
| 5 | 5.93 | 40.9 |
| 6 | 6.12 | -1.6 |

Conclusion:

This experiment demonstrates that crystallization of BLG in the salting-in mode was possible in the pH range of 5-6.

**Example 5: Investigating the impact of increasing levels of conductivity**

Protocol:

The same protocol and experimental set up as in Example 1 was used with the exception that samples were taken at different conductivities. The raw material shown in Table 10 was conditioned and used as feed for the crystallization process. Before UF, samples of the raw material were taken and NaCl was added in order to increase the conductivity, and to investigate under which conductivity levels BLG crystals were able to grow. The protein content during crystallization was approx. 16.7% (w/w).

*Table 10 Composition ranges of the feeds used in Example 5.*

| Used feed standardized to 95% TS Protein composition (% w/w relative to total protein) | |
|---|---|
| ALA | 12.4 |
| BLG | 64.5 |
| CMP | 19.8 |
| Other components (% w/w relative to the total weight of the standardized feed) | |
| Ca | 0.523 |
| K | 0.534 |
| Mg | 0.085 |
| Na | 0.160 |
| P | 0.235 |
| fat | BDL |
| protein concentration | 86 |

Results:

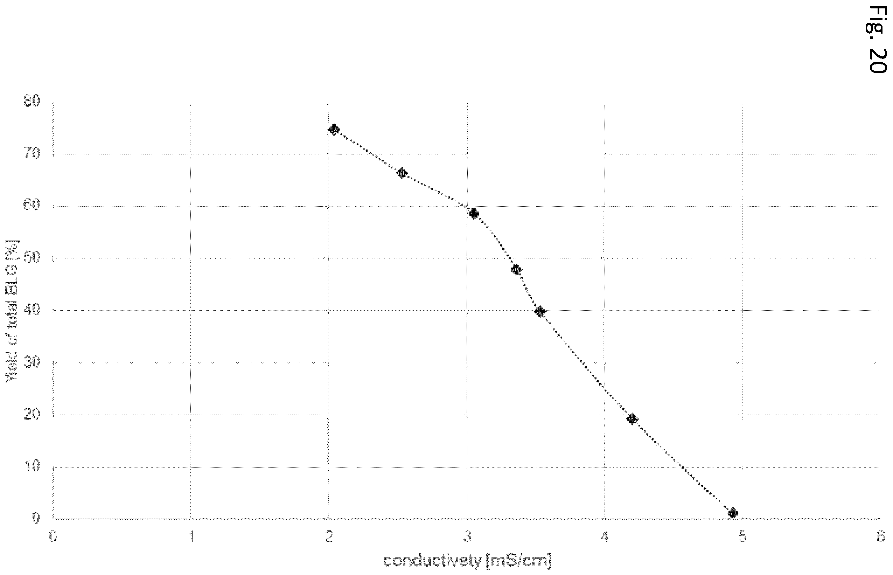

Samples were treated as described in Example 1. Figure 20 shows the calculated yields at different conductivities in the retentate. The point at 3.53 mS/cm was the raw material after pH adjustment. All points above 3.53 were a result of adding NaCl to increase the conductivity. The points below 3.53 were a result of diafiltration on the UF system. The yield at 4.93 mS/cm was close to zero was not deemed significant.

The retentate sample which had a conductivity of 4.93 mS/cm had a UF permeate conductivity of approx. 5.7 mS/cm. The retentate sample having conductivity of 3.53 mS/cm had a UF permeate conductivity of approx. 4.35 mS/cm.

From Figure 20, it can be seen that BLG crystals were formed in the feed at conductivities below 4.93mS/cm (at 4 degrees C and a total protein content of approx. 16.7% (w/w)). At a conductivity in the retentate of approx. 2 mS/cm and the UF permeate conductivity of approx. 1.6mS/cm a BLG yield of approx. 75% was obtained.

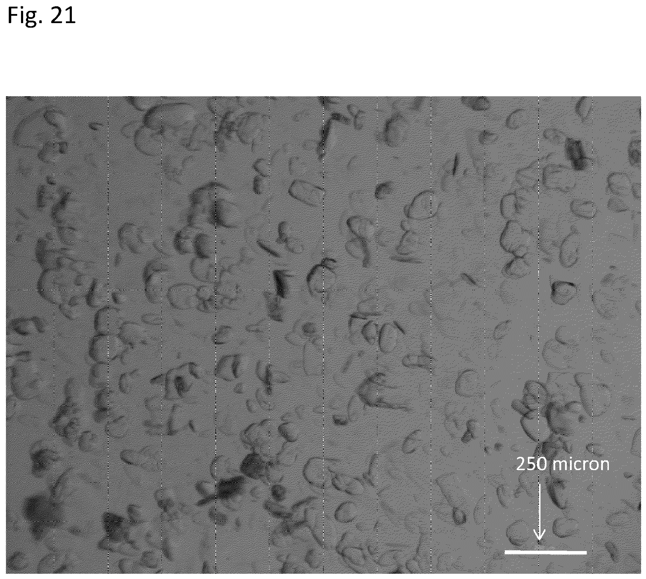

Figure 21 is a microscope photo of the crystals formed at 4.20 mS/cm in the retentate showing the expected BLG crystal characteristics.

Conclusion:

The specific feed of Example 5 made it possible to form BLG crystals below 4.93 mS/cm (corresponding to a UF permeate conductivity 5.75 mS/cm and a ratio between the conductivity and the total amount of protein of 0.057). It is expected that the upper limit of the conductivity depends on the protein concentration and the protein composition. For example, a higher protein concentration and/or an increased content of the highly charged proteins or other macromolecules (e.g. CMP) are expected to raise the upper limit of the conductivity by which BLG crystallization is possible.

**Example 6: Crystallising BLG in a serum protein concentrate**

A serum protein concentrate (SPC) was prepared by subjecting a skimmed milk to microfiltration using a Synder FR membrane and a process temperature of approx. 50 degrees C. The obtained retentate contained substantially all of the casein and residual fat and furthermore contains some serum protein, lactose and minerals. The permeate contained molecules that were capable of permeating through the membrane including serum protein, lactose and mineral, but substantially no casein or fat. The permeate was then prepared for crystallization as described in Example 1 (see Table 11 for the composition of the feed) and the obtained BLG crystals were characterised as described in Example 1. However, instead of performing all UF operations at 12 degrees C, the temperature of the retentate was increased from 12 to 25 degrees C when the conductivity of the retentate approached 1 mS/cm. The temperature was increased to avoid spontaneous crystallisation of BLG during UF concentration.

*Table 11 The concentration of selected components of the feed (serum protein concentrate). BDL= below detection limit in wet, non-standardized sample.*

| Feed standardized to 95% TS | |
|---|---|
| Protein composition (% w/w relative to total protein) | |
| ALA | 23.5 |
| BLG | 66.7 |
| Other whey proteins | 9.8 |
| Other components (% w/w relative to the total weight of the standardized feed) | |
| Ca | 0.292 |
| K | BDL |
| Mg | 0.042 |
| Na | BDL |
| P | 0.149 |
| Fat | BDL |
| protein concentration | 91 |

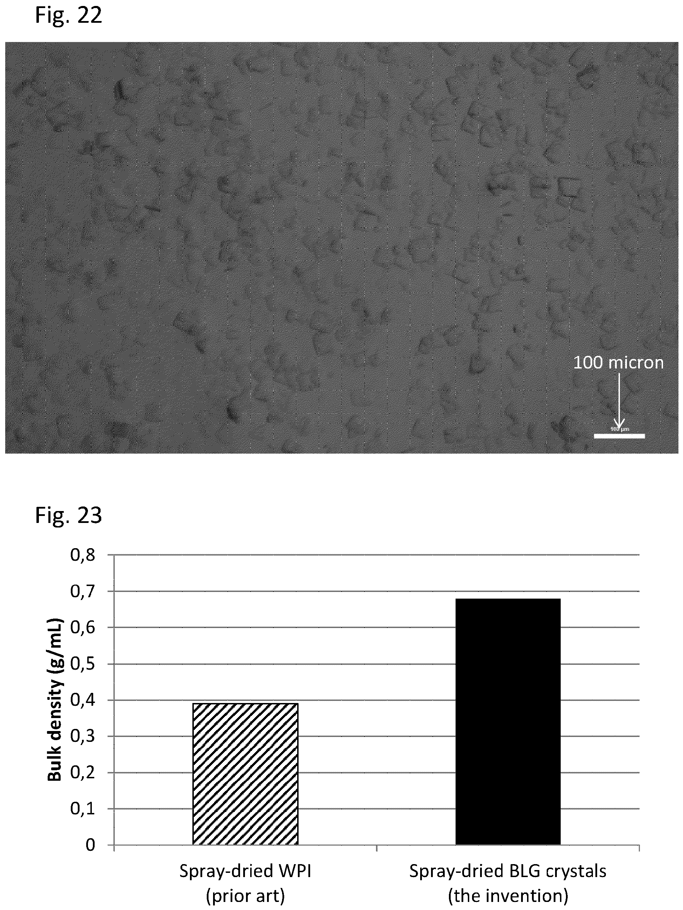

Similar to the crystallisations of Examples 1-5, the BLG of the SPC feed formed crystals that could be separated in very high purity (confirmed by chromatography as in the previous examples) and provided a yield of BLG of 70% relative to the total amount of BLG of the SPC feed. In Figure 22, BLG crystals from the early stages of the crystallization are shown. As seen previously, the crystals have a rectangular or square shape as opposed to the hexagonal shape observed e.g. in Example 2.

**Example 7: Preparation of spray-dried BLG crystals and determination of bulk density**

A portion of the BLG crystals produced in Example 3 (using feed 2) was separated on a decanter centrifuge at 1200 g, 5180 RPM, 110 RPM Diff. with a 64 mil spacer (mil means 1/1000 inch) and a flow of 25-30 L/h. The BLG crystal phase was then mixed 1:1 with polished water and then separated again on the decanter centrifuge using the same settings. The BLG crystal phase was then mixed with polished water in order to make it into a slurry containing approx. 25% dry-matter and having a crystallinity of BLG of approx. 80, and subsequently dried on a pilot plant spray drier with an inlet temperature of 180 degrees C and an exit temperature of 85 degrees C without any preheating. The temperature of the liquid streams until spray-drying was 10-12 degrees C. The resulting powder sampled at the exit had a water content of 4.37 % (w/w).

The crystallinity of BLG in the slurry was approximately 90%.

The inventors have also successfully separated a slurry of BLG crystals and mother liquor on a decanter centrifuge at 350 g, 2750 RPM, 150 RPM Diff. with a 64 mil spacer and a flow rate of 75 L/h. The BLG crystal phase was subsequently mixed 1:2 with polished water. The BLG crystal phase was then mixed with polished water in order to make it into a thinner slurry, and subsequently dried on a pilot plant spray drier using the same parameters as described above.

The bulk density of the spray-dried powder was then measured according to Example 9.3 and compared to the bulk density of a standard WPI dried on the same equipment. The standard WPI was found to have a bulk density (based on 625 stampings) of 0.39 g/mL which is in the high end of the normal range for a WPI powder. However, the spray-dried BLG crystal preparation had a bulk density 0.68 g/mL, more than 75% higher than the bulk density of the standard WPI (see e.g. Figure 23). This is truly surprising and provides a number of both logistic and application-related advantages.

*Table 12 The concentration of selected components of the spray-dried BLG crystal preparation of Example 7. BDL= below detection limit*

| Spray dried BLG crystal powder Protein composition (% w/w relative to total protein) | |
|---|---|
| ALA | 0.7 |

(continued)

| Spray dried BLG crystal powder Protein composition (% w/w relative to total protein) | |
|---|---|
| BLG | 97.4 |
| CMP | BDL |
| Other components (% w/w relative to total weight of the BLG crystal powder) | |
| Ca | 0.118 |
| K | 0.026 |
| Mg | 0.017 |
| Na | BDL |
| P | BDL |
| water | 3.8 |
| protein concentration | 94 |

A sample of the spray-dried BLG crystal preparation was subsequently resuspended in cold demineralised water and BLG crystals were still clearly visible by microscopy. Addition of citric acid or NaCl caused the BLG crystals to dissolve and transformed the opaque crystal suspension into a clear liquid.

The inventors have seen indications that extended heating during the drying step reduces the amount of BLG that is in crystal form. It is therefore preferred that the heat exposure of the BLG crystal preparation is as low as possible.

Conclusion:

This example demonstrates that slurries comprising BLG crystals can be spray-dried and that BLG crystals are still present in the resuspended spray-dried powder if the heating during the drying step is controlled.

The inventors furthermore found that the bulk density of a whey protein powder that contains BLG crystals is considerably higher than that obtained by normal spray-drying of dissolved protein streams. High density powders allows for more cost-effective packaging and logistics of the powder as less packaging material is required per kg powder and more powder (mass) can be transported by a given container or truck.

The high density powder also appears to be easier to handle and less fluffy and dusty during manufacture and use.

**Example 8: Low phosphorus protein beverage**

Six low phosphorus beverage samples were prepared using the purified BLG product from Example 3 (the crystal preparation obtained from feed 3). All the dry ingredients were mixed with demineralised water to obtain 10 kg of each sample and allowed to hydrate for 1 hour at 10 degrees C.

*Table 13 Composition of the six beverage samples.*

| Ingredient (% w/w) | Beverage sample | | | | | |
|---|---|---|---|---|---|---|
| | A | B | C | D | E | F |
| Dried, purified BLG from Ex. 3, feed 3 | 5.0 | 10.0 | 5.0 | 10.0 | 5.0 | 10.0 |
| Citric acid | To pH 3.5 | To pH 3.5 | To pH 3.0 | To pH 3.0 | To pH 4.0 | To pH 4.0 |
| Sucrose | 10.0 | 10.0 | 10.0 | 10.0 | 10 | 10 |
| Demineralised water | To 100% | To 100% | To 100% | To 100% | To 100% | To 100% |

The sub-samples of the six samples were taken to measure turbidity on a Turbiquant® 3000 IR Turbidimeter and viscosity on a vicoman by Gilson. The results are shown in the table below.

*Table 14 Measured viscosity and turbidity of the six beverage samples.*

| Sample | viscosity (Cp) | NTU |
|--------|----------------|------|
| A | 1.42 | 36.2 |
| B | 2.37 | 46.3 |
| C | 2.69 | 4.9 |
| D | 2.70 | 5.0 |
| E | 1.45 | 63.1 |
| F | 2.25 | 82.1 |

A photo of test tubes containing sub-samples of the six low phosphorous beverage samples is shown in Figure 25. From left to right the sub-samples were sample A, B, C, D, E, and F. The visual inspection of the test tubes verified the turbidity measurements and documented that all beverage samples were transparent and that particularly samples C and D (pH 3.0) were very clear. The low viscosities demonstrate that the beverage samples were easily drinkable.

All ingredients used for preparing the beverage were low in phosphorus and did not contain unnecessary minerals. The obtained beverages therefore had a phosphorus content of approx. 45 mg P/100 g protein and generally had a very low mineral content. The six beverages were therefore suitable for use as protein beverages for kidney disease patients.

**Example 9** - **Methods of analysis**

Example 9.1 Determination of lactosylated BLG vs. non-lactosylated BLG:

Quantification of the amount of lactosylated BLG and native BLG perfomed using LC-MS.

The analyses were performed on a 6410 Triple Quad MS from Agilent Technologies coupled with a HP1200 series HPLC also from Agilent Technologies. For separation prior to ionization a Symmetry300™ C18 column (WAT106172: 5 $\mu$m solid phase particles, column dimensions 2.1x150 mm) was applied and proteins were detected at 214nm. Before the samples were analyzed they were filtered through a 0.22 micron filter. All samples were run as duplicates.

The analyses were performed using the following conditions:

HPLC

Buffer A: 99.9 % MilliQ-vand with 0.1 % TFA
Buffer B: 9.9 % MilliQ-vand, 90 % acetonitril, 0.1 % TFA

Flow: 0.3 mL/min

Gradient:

0-20 min: 85-60 % A and 15-40 % B
20-45 min: 60-50 % A and 40-50 % B
45-55 min: 0% A and 100 % B
55-70 min 85 % A and 15 % B
Load: 40 $\mu$L

The column temperature was set to 60 degrees C.

Mass spectroscopy:

Ions with a m/z of 100-2000 were detected and the resulting data was evaluated in MassHunter Workstation Software, Ver. B.04.00. Using deconvolution all forms of the same species (mass) were grouped. Masses between 18 kDa and 20 kDa were subjected to further inquiry. The intact mass of BLG-A is 18.361 kDa and BLG-B is 18.276, a lactosylation adds 324 Da to the protein mass, by examining this mass area up to 5 lactosylations pr. protein can be detected. The relative quantification is made by comparing the signal intensity for each mass, ignoring ionization discrimination of the different species.

Example 9.2: Determination of total protein

The total protein content (true protein) of a sample is determined by:

1) Determining the total nitrogen of the sample following ISO 8968-1/2|IDF 020-1/2- Milk - Determination of nitrogen content - Part 1/2: Determination of nitrogen content using the Kjeldahl method.

2) Determining the non-protein nitrogen of the sample following ISO 8968-4|IDF 020-4- Milk - Determination of nitrogen content - Part 4: Determination of non-protein-nitrogen content.

3) Calculating the total amount protein as ($m_{total\ nitrogen}$ - $m_{non-protein-nitrogen}$)*6.38.

Example 9.3: Determination of loose density and bulk density

The density of a dry powder is defined as the relation between weight and volume of the powder which is analysed using a special Stampf volumeter (i.e. a measuring cylinder) under specified conditions. The density is typically expressed in g/ml or kg/L.
In this method a sample of dried powder is tamped in a measuring cylinder. After a specified number of tappings the volume of the product is read and the density is calculated.
Three types of densities can be defined by this method:

▪ Poured density, which is the mass divided with the volume of powder after it has been transferred to the specified measuring cylinder.

▪ Loose density, which is the mass divided with the volume of powder after 100 tappings according to the specified conditions in this standard.

▪ Bulk density, which is the mass divided with the volume of powder after 625 tappings according to the specified conditions in this standard.

The method uses a special measuring cylinder, 250 ml, graduated 0-250 ml, weight 190±15 g (J. Engelsmann A. G. 67059 Ludwigshafen/Rh) and a Stampf volumeter, e.g. J. Engelsmann A. G.
The loose density and the bulk density of the dried product are determined by the following procedure.

Pre-treatment:

The sample to be measured is stored at room temperature.
The sample is then thoroughly mixed by repeatedly rotating and turning the container (avoid crushing particles). The container is not filled more than 2/3.

Procedure:

Weigh 100.0 ± 0.1 gram of powder and transfer it to the measuring cylinder. The volume $V_0$ is read in ml.
If 100 g powder does not fit into the cylinder, the amount should be reduced to 50 or 25 gram.
Fix the measuring cylinder to the Stampf volumeter and let it tap 100 taps. Level the surface with the spatula and read the volume $V_{100}$ in ml.
Change the number of tabs to 625 (incl. the 100 taps). After tapping level the surface and read the volume $V_{625}$ in ml.

Calculation of densities:

Calculate the loose and the bulk densities expressed in g/ml according to the following formula:

$$Bulk\ density = M/V$$

where M designates weighed sample in grams and V designates volume after 625 tappings in ml.

Example 9.4: Determination of the water content of a powder

The water content of a food product is determined according to ISO 5537:2004 (Dried milk - Determination of moisture content (Reference method)). NMKL is an abbreviation for "Nordisk Metodikkomité for Næringsmidler".

Example 9.5: Determination of the total amounts of calcium, magnesium, sodium, potassium, phosphorus

The total amount of calcium, magnesium, sodium, potassium, and phosphorus are determined using a procedure in which the samples are first decomposed using microwave digestion and then the total amount of mineral(s) is determined using an ICP apparatus.

Apparatus:

The microwave is from Anton Paar and the ICP is an Optima 2000DV from PerkinElmer Inc.

Materials:

1 M $HNO_3$
Yttrium in 2% $HNO_3$
Suitable standards for calcium, magnesium, sodium, potassium, and phosphorus in 5% $HNO_3$

Pre-treatment:

Weigh out a certain amount of powder and transfer the powder to a microwave digestion tube. Add 5 mL 1M $HNO_3$. Digest the samples in the microwave in accordance with microwave instructions. Place the digested tubes in a fume cupboard, remove the lid and let volatile fumes evaporate.

Measurement procedure:

Transfer pre-treated sample to digitube using a known amount of Milli-Q water. Add a solution of yttrium in 2% $HNO_3$ to the digestion tube (about 0.25 mL per 50 mL diluted sample) and dilute to known volume using Milli-Q water. Analyze the samples on the ICP using the procedure described by the manufacturer.
A blind sample is prepared by diluting a mixture of 10 mL 1M $HNO_3$ and 0.5 mL solution of yttrium in 2% $HNO_3$ to a final volume of 100 mL using Milli-Q water.
At least 3 standard samples are prepared having concentrations which bracket the expected sample concentrations.

Example 9.6: Determination of the furosine-value:

The furosine value is determined as described in "Maillard Reaction Evaluation by Furosine Determination During Infant Cereal Processing", Guerra-Hernandez et al, Journal of Cereal Science 29 (1999) 171-176 and the total amount protein is determined according to Example 9.2. The furosine value is reported in the unit mg furosine per 100 g protein.

Example 9.7: Determination of the crystallinity of BLG in a liquid

The following method is used to determine the crystallinity of BLG in a liquid having a pH in the range of 5-6.

a) Transfer a 10 mL sample of the liquid in question to a Maxi-Spin filter with a 0.45 micron pore size CA membrane.
b) Immediately spin the filter at 1500 g for 5 min. keeping the centrifuge at 2 degrees C
c) Add 2 mL cold milliQ water (2 degrees C) to the retentate side of the spin filter and immediately, spin the filter at 1500 g for 5 min while keeping the centrifuged cooled at 2 degrees C, collect the permeate (permeate A), measure the volume and determine BLG concentration via HPLC using the method outlined in Example 9.9.

d) Add 4 mL 2M NaCl to the retentate side of the filter, agitate quickly and allow the mixture to stand for 15 minutes at 25 degrees C.

e) Immediately spin the filter at 1500 g for 5 min and collect the permeate (permeate B)

f) Determine the total weight of BLG in permeate A and permeate B using the method outlined in Example 9.9 and convert the results to total weight of BLG instead of weight percent. The weight of BLG in permeate A is referred to as $m_{Permeate\ A}$ and the weight of BLG in permeate B is referred to as $m_{Permeate\ B}$.

g) The crystallinity of the liquid with respect to BLG is determined as:

$$crystallinity = m_{Permeate\ B}/(\ m_{Permeate\ A} + m_{Permeate\ B})*100\%$$

Example 9.8: Determination of the crystallinity of BLG in a dry powder

This method is used to determine the crystallinity of BLG in a dry powder.

a) 5.0 gram of the powder sample is mixed with 20.0 gram of cold milliQ water (2 degrees C) and allowed to stand for 5 minute at 2 degrees C.

b) Transfer the sample of the liquid in question to a Maxi-Spin filter with a 0.45 micron CA membrane.

c) Immediately spin the filter at 1500 g for 5 min. keeping the centrifuge at 2 degrees C

d) Add 2 mL cold milli-Q water (2 degrees C) to the retentate side of the spin filter and immediately, spin the filter at 1500 g for 5 min, collect the permeate (permeate A), measure the volume and determine BLG concentration via HPLC using the method outlined in Example 9.9. and convert the results to total weight of BLG instead of weight percent. The weight of BLG in permeate A is referred to as $m_{permeate\ A}$

f) The crystallinity of BLG in the powder is then calculated using the following formula:

$$crystallinity = \frac{m_{BLG\ total} - m_{permeate\ A}}{m_{BLG\ total}} * 100\%$$

where $m_{BLG}$ total is the total amount of BLG in the powder sample of step a).

If the total amount of BLG of powder sample is unknown, this may be determined by suspending another 5 g powder sample (from the same powder source) in 20.0 gram of milliQ water, adjusting the pH to 7.0 by addition of aqueous NaOH, allowing the mixture to stand for 1 hour at 25 degrees C under stirring, and finally determining the total amount of BLG of the powder sample using Example 9.9.

Example 9.9: Determination of the total amount of BLG, ALA, and CMP in an aqueous liquid

The content of alpha-lactalbumin, beta-lactoglobulin and CMP was analyzed by HPLC analysis at 0.4mL/min. 25 microL filtered sample is injected onto 2 TSKgel3000PWxl (7.8 mm 30 cm, Tosohass, Japan) columns connected in series with attached precolumn PWxl (6 mm x 4 cm, Tosohass, Japan) equilibrated in the eluent (consisting of 465g MilliQ water, 417,3 g acetonitrile and 1mL triflouroacetic acid) and using a UV detector at 210nm.

Quantitative determination of the contents of native alpha-lactalbumin ($C_{alpha}$), beta-lactoglobulin ($C_{beta}$), and caseinomacropeptide ($C_{CMP}$) was performed by comparing the peak areas obtained for the corresponding standard proteins with those of the samples.

The total amount of additional protein (non-BLG protein) was determined by subtracting the amount of BLG from the amount of total protein (determined according to Example 9.2)

Example 9.10: Determination of UF permeate conductivity

15 mL of sample is transferred to an Amicon Ultra-15 Centrifugal Filter Units with a 3 kDa cut off (3000 NMWL) and centrifuged at 4000 g for 20-30 minutes or until a sufficient volume of UF permeate for measuring conductivity is accumulated in the bottom part of the filter units. The conductivity is measured immediately after centrifugation. The sample handling and centrifugation is performed at the temperature of the source of the sample.

Example 9.11: Determination of the degree of protein denaturation of a whey protein composition

Denatured whey protein is known to have a lower solubility at pH 4.6 than at pH 7.0 and the degree of denaturation of a whey protein composition is determined by measuring the amount of soluble protein at pH 4.6 relative to the total amount of protein at pH 7.0.

More specifically, the whey protein composition to be analysed (e.g. a powder or an aqueous solution) is converted to:

- a first aqueous solution containing 5.0% (w/w) total protein and having a pH of 7.0, and
- a second aqueous solution containing 5.0% (w/w) total protein and having a pH of 4.6.

pH adjustments are made using 3% (w/w) NaOH (aq) or 5% (w/w) HCl (aq).

The total protein content ($P_{pH\ 7.0}$) of the first aqueous solution is determined according to example 9.2.

The second aqueous solution is stored for 2 h at room temperature and subsequently centrifuged at 3000 g for 5 minutes. A sample of the supernatant is recovered and analysed according to Example 9.2 to determine total protein ($S_{pH\ 4.6}$).

The degree of protein denaturation, D, of the whey protein composition is calculated as:

$$D = ((P_{pH\ 7.0} - S_{pH\ 4.6})/\ P_{pH\ 7.0})*100\%$$

Example 9.12: Detection of dried BLG crystals in a powder

The presence of dried BLG crystals in a powder can be identified the following way:
A sample of the powder to be analysed is resuspended and gently mixed in demineralised water having a temperature of 4 degrees C in a weight ratio of 2 parts water to 1 part powder, and allowed to rehydrate for 1 hour at 4 degrees C.

The rehydrated sample is inspected by microscopy to identify presence of crystals, preferably using plan polarized light to detect birefringence.

Crystal-like matter is separated and subjected to x-ray crystallography in order verify the existence of crystal structure, and preferably also verifying that the crystal lattice (space group and unit cell dimensions) corresponds to those of a BLG crystal.

The chemical composition of the separated crystal-like matter is analysed to verify that its solids primarily consists of BLG.

**Example 10: Crystallisation by UF-based dynamic cross flow filtration**

Feed for the crystallization tank was prepared as described in Example 1 with the exception that diafiltration was carried out at pH 5.92 and the end TS was 20%.

After the feed was conditioned (the feed composition can be seen in Table 15), it was transferred to a 300L crystallization tank and the pH was initially adjusted to pH 5.80 and the temperature was kept as 10-12 degrees C. After pH adjustment, seeding material was added which had been produced in the same fashion as described in Example 1, but originating from a non-spontaneous crystallization production. The feed was seeded with seeding material to a concentration of 0.5 g seeding material per liter feed. After seeding, the temperature on the cooling mantle was set to 5 degrees C, pH was slowly adjusted to 5.50, and the mixture was left to crystallize for approximately an hour, after which the DCF (Dynamic Crossflow Filtration) unit was connected to the crystallization tank as shown in figure 26. The DCF unit was fitted with Kerafol ceramic membranes with a pore size of 500 nm, the TMP (Trans Membrane Pressure) was set to 0.4 bar and the rotational speed of the membrane was 32 Hz.

Retentate from the DCF was returned to the crystallization tank, while the permeate was used as feed in a UF (ultrafiltration) unit equipped with a Koch HFK-328 type membrane with a 46 mil spacer. In the UF unit, temperatures were allowed to rise up to but not above 12 degrees C. The amount of diafiltration water added was adjusted so that the retentate coming out of the UF, going back to the crystallization tank, was about 21% TS, while minerals were removed from the mother liquor (ML).

Diafiltration on the ML continued until the difference in conductivity between the permeate and the diafiltration water was below 50 microS/cm. At this point the amount of diafiltration water was adjusted so that the retentate was around 30% TS. The amount of TS in the ML decreases when BLG is removed as crystals; this continuous removal of excess water and minerals makes it possible to drive the overall yield, as it seems that the concentration of other proteins during BLG crystallization has an limited effect, if any, on the solubility of BLG in the ranges that have been explored.

The composition of the ML permeate from the DCF can be seen in Table 16. The initial 300L of feed had been reduced to around 100L of ML. Based on mass conservation the relative yield of BLG was calculated to 92 %.

*Table 15 Selected components of the feed used in Example 10.*

| Feed standardized to 95% TS | |
| --- | --- |
| Protein composition (% w/w relative to total protein) | |
| ALA | 22.9 |
| BLG | 50.2 |
| CMP and other proteins | 26.5 |
| Other components (% w/w relative to total weight of the standardized feed) | |
| Ca | 0.387 |
| K | 0.350 |
| Mg | 0.058 |
| Na | 0.245 |
| P | 0.210 |
| Fat | BDL |
| protein | 90 |

*Table 16 Protein composition of the final mother liquor obtained in Example 10.*

| Final ML standardized to 95% TS | |
| --- | --- |
| Protein composition (% w/w relative to total protein) | |
| ALA | 42.9 |
| BLG | 6.8 |
| CMP and other proteins | 50.3 |

Conclusion:

By continuously removing excess minerals and water from the matrix where the BLG crystallization takes place, the BLG yield can be significantly improved and the process can be carried out at low temperatures.

**Example 11: Degree of protein denaturation of different whey protein products**

The degree of protein denaturation of a commercial product and four edible BLG compositions of the invention were compared. The samples are described below.

| Samples |
| --- |
| A: BiPro (Commercially available WPI; Davisco, USA) |
| B: BLG crystal slurry as is - no drying (invention) |
| C: BLG crystal slurry freeze dried (invention) |
| D: BLG crystals redissolved (pH 7) and freeze-dried |
| E: BLG crystal slurry spray dried (invention) |

Samples B-E were prepared the following way:
A crystal slurry was prepared as described in Example 12 and separated as described in Example 7. Some the separated BLG slurry was taken out and split into four portions.

Sample B: The first portion of the separated BLG crystal slurry was re-dissolved without any drying by adjusting the pH of the BLG crystal slurry to 7.01 using a 3% NaOH; and sample was then diluted to Bx 6 in order to make an approximately 5% protein solution.

Sample C: The second portion of the separated BLG crystal slurry was freeze-dried. The powder was then resuspended in polished water, the pH was adjusted to 7.09 using a 3% NaOH, and the sample was then diluted to Brix 6 in order to make an approximately 5% protein solution.

Sample D: The third portion of the separated BLG crystal slurry was re-dissolved by adjusting the pH to 7.0 using a 3% NaOH, then freeze dried. The freeze dried powder was then re-suspended in polished water, and the pH was measured to be 7.07. The sample was then diluted to Brix 6 in order to make an approximately 5% protein solution.

Sample E: The fourth portion of the separated BLG crystal slurry was treated and spray dried as described in Example 7. The powder was then re-suspended in polished water and the pH was adjusted to 7.04 using a 3% NaOH. The sample was then diluted to Brix 6 in order to make an approximately 5% protein solution.

The degree of protein denaturation of each sample was determined according to Example 9.11 and the results are presented in Table 17.

*Table 17 Comparing the degree of protein denaturation of a commercially available WPI product (Bipro) with 4 BLG products of the invention.*

| Sample | Total protein concentration at pH 7 | Total concentration of soluble protein at pH 4.6 | Degree of protein denaturation (%) |
|---|---|---|---|
| A: BiPro (Commercially available WPI) | 5.11 | 4.54 | 11.15 |
| B: BLG crystal slurry as is (no drying | 4.62 | 4.56 | 1.30 |
| C: BLG crystal slurry freezwe dried | 4.74 | 4.69 | 1.05 |
| D: BLG crystals redissolved (pH 7) and freeze-dried | 4.74 | 4.69 | 1.05 |
| E: BLG crystal slurry spray dried | 4.75 | 4.71 | 0.84 |

Conclusion:

Regardless of the drying method, the edible BLG compositions of the invention have a surprisingly low degree of denatured protein; only a tenth of what can be found in the commercially available WPI used for comparison. It is particularly surprising that the spray-dried BLG crystal slurry product still has the lowest degree of denaturation of all products.

**Example 12: Crystal separation by dynamic cross-flow filtration**

Lactose-depleted UF retentate derived from sweet whey from a standard cheese production process, filtered through a 1.2 micron filter, was used as feed for the crystallization process. The sweet whey feed was conditioned on an ultrafiltration setup using a Koch HFK-328 type membrane with a 46 mil spacer, a feed pressure of 1.5-3.0 bar, using a feed concentration of 10% TS (total solids) ±5, and polished water (water filtered by reverse osmosis to obtain a conductivity of at most 0.05 mS/cm) as diafiltration medium. The temperature of the feed and retentate during ultrafiltration was approx. 12 degrees C. The pH was then adjusted by adding HCl to obtain a pH of approx. 5.60. Diafiltration continued until the conductivity of the retentate was below 1.30 mS/cm. The feed was then heated to 25 degrees C before the retentate was concentrated to approx. 27% TS (approx. 21% total protein relative to the total weigh of the concentrated retentate). The permeate conductivity was 0.33 mS/cm at the end of concentration. A sample of the concentrated retentate was centrifuged at 3000 g for 5 minutes but no visible pellet was formed.

The concentrated retentate was transferred to a 300L crystallization tank where it was cooled to about 6 degrees C and kept at this temperature overnight with gentle stirring. The next morning, the retentate had crystallized. The mother liquor and the crystals were separated by centrifugation 3000 g for 5 minutes, and samples of the supernatant and pellet were taken for HPLC analysis. The yield of BLG from this process was calculated to 67%.

The crystal slurry from the 300 L tank was used for a feed in and Andritz DCF 152S system using one disk membrane with a pore size of 500nm. The filtration was run at 8 degrees C, rotational speed was 32Hz, and the transmembrane pressure was 0.4 bar. The system works as a dead end filtration where retentate is built up in the filtration chamber, unlike a larger unit where the retentate would be continuously removed. The filtration was run in a stable manner for just over 40 minutes at which point the solids which had built up in the filtration chamber started to influence the filtration.

The amount of crystal mass increased significantly during the DFC operation.

Conclusion.

The DCF provides a stable and efficient means for separating the crystals from the ML. If needed washing liquid could be added to the DCF.

**Example 13: Crystal separation using a filtration centrifuge**

Using the same feed and the same crystallization process as in Example 12, separation was tested on a Filtration Centrifuge HZ 25/0.1 fitted with a filter cloth with a pore size of around 20 micro meters.

Test 1: 4 L of the feed was fed in to the filter centrifuge which was run at 60 g. After all feed had been added, the centrifuge was accelerated to 250 g for drying the filter cake. The cake contained 47.6% TS; the composition of the cake is shown in Table 18.

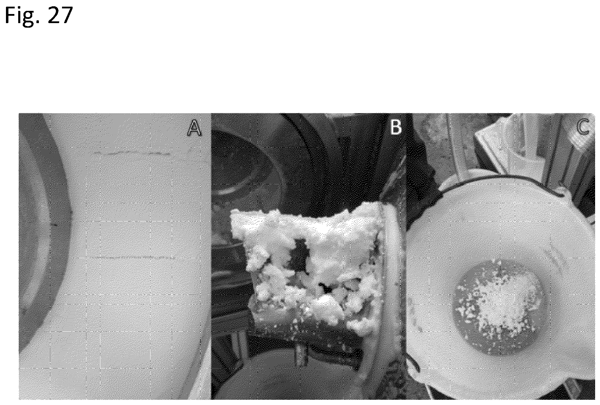

After cleaning, the centrifuge was fed with 7 L of the same feed as described above at 60 g. The centrifuge was then accelerated to 250 g for dewatering for approximately 5 minutes, before it again was decelerated to 60 g, and 0.25 L of polished water was added for wash. After the washing water had been added, the centrifuge was again accelerated to 250 g for dewatering. The TS of the cake was measured to be 47%. The cake is shown in figure 27.A. The composition of the cake, ML fraction, and the washing liquid after wash are shown in Table 18. After the cake had been dewatered, it was attempted to peel it off the sides of the centrifuge; the top layer did smolder and fall out through the intended tube as seen in figure 27.C, but the underlying layer was too moist and sticky to peel properly as seen in figure 27.B.

*Table 18 Concentration of selected components of the compositons provided in Example 13.*

| | Crystallization feed | ML after centrifugation (Test 1) | Filter cake, no washing (Test 1) | ML after centrifugation (Test 2) | Filter cake, with washing (Test 2) | Washing water after wash (Test 2) |
|---|---|---|---|---|---|---|
| Proteins[1] : | | | | | | |
| ALA | 1.50 | 1.67 | BDL | 1.52 | BDL | 1.07 |
| BLG | 12.4 | 4.10 | 46.9 | 5.80 | 47.9 | 3.80 |
| CMP | 3.56 | 3.84 | BDL | 3.3 | BDL | BDL |
| Other components[2] : | | | | | | |
| Ca | 0.410 | 0.410 | 0.161 | 0.529 | 0.149 | 0.558 |
| K | 0.315 | 0.315 | 0.073 | 0.424 | 0.068 | 0.445 |
| Mg | 0.075 | 0.075 | 0,025 | 0.098 | 0.024 | 0.103 |
| Na | 0.078 | 0.078 | BDL | 0.109 | BDL | 0.139 |
| P | 0.181 | 0.181 | BDL | 0.275 | BDL | 0.289 |
| Total protein | 90 | 90 | 91 | 86 | 93 | 88 |

[1] Protein composition % (w/w) relative to the weight of the solution
[2] Concentration of other selected components (% w/w relative to total weight of composition standardized to 95% total solids)

Conclusion:

Filter centrifuges provide an interesting option for obtaining a BLG cake that is so pure that ALA and CMP are below the level required for quantification even without washing. By applying even a small volume of washing medium to the filter cake the mineral content in the cake can be lowered even further, as seen by the protein composition of the washing water in Table 18. The content of non-BLG protein of the cake is also lowered by washing as one can see from the used washing water. The used washing water contains a ratio between ALA:BLG that is larger than the ratio in the filter cake. This indicates that the washing step has a larger tendency to remove ALA (and probably other non-BLG proteins) than BLG.

The filter cakes that were produced here were not peelable but still permeable. This enables the option of adding a dry gas at a given temperature in order to lower the moister content of the filter cake to a degree where it is peelable, like the top layer. Alternatively the filter cake could be re-dissolved inside the centrifuge by adding the right amount of acid, base, or salt in an aqueous solution in a siphon centrifuge style setup.

**Example 14: Impact of mineral composition of the whey protein solution**

The impact of the molar ratio between mono-valent and divalent metal-cations on the yield of BLG was investigated in this example.

Two samples were compared:

Sample A: Having an overweight of $Na^+$ (source: $Na_2SO_4$)
Sample B: Having an overweight of $Ca^{2+}$ (source: $CaSO_4$)

The same type of raw material as used in Example 1 was adjusted with 2.5% sulfuric acid. The pH of the samples was adjusted to around pH 5.4; the precise pH is reported in Table 20. The original volume of each sample was 250 mL. The two samples were dialysed in another 24 L container against approximately 24 L of cold polished water. For all dialysis processes, dialysis tube OrDial D-Clean MWCO 3500 (item number 63034405) was used. The containers were continuously stirred during the dialysis processes, and the dialysis took place in a cooler at 4 degrees C. The first dialysis took place over night.

To remove excess ions after the first dialysis, the dialysis bags were transferred to a container containing 2 L of salt solution. The concentrations were as follows:

Sample A: $Na_2SO_4$ (Sodium sulfate) 0.059 M,
Sample B: $CaSO_4$ (calcium sulfate) 0.059 M.

The first salt dialysis took place over night. The conductivity, pH and Brix after the first salt dialysis are reported in Table 20. The salt solutions where changed to fresh ones and the dialysis continued over the weekend.

After the second salt dialysis, the tubes where transferred to a 24 L container filled with approximately 24 L of cold polished water and dialysed overnight to remove excess ions before crystallization.

After the last dialysis step, the protein concentration was a bit lower than what was preferred. The samples were therefore concentrated on a Pellicon XL UF lab setup using a 10kDa cut off membrane and a peristaltic pump running at 75 mL/h. The mineral content of the samples along with the raw material are shown in Table 19.

The samples were then seeded with 0.5 g/L of the seeding material previously described, and left to crystallize at 4 degrees C overnight. Then next day, crystal precipitate was visible in all samples. HPLC samples of each of the samples were prepared by centrifuging each sample at 3000g for 5 minutes, followed by analyzing a sample of the supernatant. The results are shown in Table 21.

*Table 19 Concentrations of selected mineral components in the raw material and samples A and B of Example 14.*

| Component | Raw material (% w/w) | Sample A before cryst. (% w/w) | Sample A change[1] (%) | Sample B before cryst. (% w/w) | Sample B change[1] (%) |
|---|---|---|---|---|---|
| Calcium | 0.45 | 0.13 | -71 | 0.82 | 82 |
| Chloride | 0.21 | Not tested | Not tested | Not tested | Not tested |
| Potassium | 0.60 | 0.04 | -93 | 0.06 | -90 |
| Magnesium | 0.08 | 0.02 | -75 | 0.02 | -75 |

(continued)

| Component | Raw material (% w/w) | Sample A before cryst. (% w/w) | Sample A change[1] (%) | Sample B before cryst. (% w/w) | Sample B change[1] (%) |
|---|---|---|---|---|---|
| Sodium | 0.14 | 0.59 | 321 | 0.08 | -43 |
| Phosphorus | 0.22 | 0.21 | -5 | 0.24 | 9 |
| Protein | 86.9 | 87.8 | 1 | 86.2 | -1 |
| [1] The change is relative to the concentration of the given components in the raw material | | | | | |

*Table 20 pH, conductivity and degrees Brix at various stages during the preparation of samples A and B.*

| Sample | Step | pH | cond. (mS/cm) | brix (°) |
|---|---|---|---|---|
| A | pH adjustment | 5.41 | 3.52 | 21.9 |
| A | After first salt dialysis | 5.45 | 6.48 | 15.4 |
| A | After second salt dialysis | 5.51 | 5.76 | 12.3 |
| A | After removal of excess ion via dialysis | 5.48 | 0.883 | 9.5 |
| A | After protein concentration via lab UF | 5.48 | 1.622 | 16.4 |
| A | Final pH adjustment | 5.42 | | |
| B | pH adjustment | 5.41 | 3.52 | 21.9 |
| B | After first salt dialysis | 5.37 | 1.55 | 14.4 |
| B | After second salt dialysis | 5.41 | 1.251 | 12.4 |
| B | After removal of excess ion via dialysis | 5.32 | 0.643 | 11.3 |
| B | After protein concentration via lab UF | 5.32 | 0.891 | 11.9 |
| B | Final pH adjustment | 5.42 | | |

*Table 21 Concentration of BLG in samples with different ratios between mono- and divalent cations.*

| Sample | BLG (% w/w) |
|---|---|
| A (high $Na^+$) - whey protein solution with BLG crystals before separation | 6.47 |
| A (high $Na^+$) - mother liquor after separation of crystals | 3.94 |
| B (high $Ca^{2+}$) - whey protein solution with BLG crystals before separation | 3.56 |
| B (high $Ca^{2+}$) - mother liquor after separation of crystals | 2.22 |

Conclusion:

Table 21 documents that a smaller residual amount of BLG is left in the mother liquor (and a higher yield of separated BLG crystals is obtained) if a high molar ratio between monovalent and divalent cations is avoided. The molar ratio between monovalent and divalent cations, and in practice Na+K vs. Ca+Mg, can be controlled to improve the yield of BLG of the present method.

**Claims**

1. A method of preparing an edible composition comprising beta-lactoglobulin (BLG) in crystallised and/or isolated form, the method comprising the steps of

a) providing a whey protein solution comprising BLG and at least one additional whey protein, said whey protein solution is supersaturated with respect to BLG and has a pH in the range of 5-6,
b) crystallising BLG in the supersaturated whey protein solution, preferably in salting-in mode, and
c) optionally, separating BLG crystals from the remaining whey protein solution.

2. The method according to claim 1 furthermore comprising a step d) of washing BLG crystals, e.g. the separated crystals obtained from step c).

3. The method according to claim 1 or 2 furthermore comprising a step e) of re-crystallising BLG crystals, e.g. the BLG crystals obtained from step c) or d).

4. The method according to any of the preceding claims, furthermore comprising a step f) of drying a BLG-containing composition derived from step b), c), d), or e).

5. The method according to any of the preceding claims, wherein the whey protein solution comprises a milk serum protein concentrate, a whey protein concentrate, milk serum protein isolate, and/or whey protein isolate.

6. The method according to any of the preceding claims, wherein:

   - the ratio between the conductivity and the total amount of protein of the whey protein solution is at most 0.3, and/or
   - the UF permeate conductivity of the whey protein solution is at most 7 mS/cm.

7. The method according to any of the preceding claims, wherein the supersaturated whey protein solution is prepared by subjecting a whey protein feed to one or more of the following adjustments:

   - Adjusting the pH,
   - Reducing the conductivity
   - Reducing the temperature
   - Increasing the protein concentration, and
   - Adding an agent that reduces the water activity.

8. The method according to any of the claims 1-7, wherein step c) comprises separating the BLG crystals to a solids content of at least 30% (w/w), preferably at least 40% (w/w) and even more preferably at least 50% (w/w).

9. The method according to any of claims 2-8 wherein the washing of step d) dissolves at most 80% (w/w) of the initial amount of BLG crystals, preferably at most 50% (w/w), and even more preferably at most 20% (w/w) of the initial amount of BLG crystals.

10. The method according to any of the claims 4-9 wherein the drying step involves a BLG-containing composition in which the BLG crystal has been dissolved and wherein the resulting powder does not contain BLG crystals formed by step b) or by re-crystallisation prior to the drying step.

11. The method according to claim 10 wherein the BLG crystals have been dissolved by:

    - increasing temperature,
    - increasing the conductivity, e.g. by addition of one or more salts
    - changing the pH, e.g. outside the range 5-6,
    - decreasing the concentration of BLG, e.g. by dilution,
    - or a combination of the above.

12. The method according to any of the claims 4-11 wherein the drying step involves one or more of spray drying, freeze drying, spin-flash drier, rotary drying, and/or fluid bed drying.

13. An edible BLG composition, said composition is obtainable by one or more processes according to any of the claims 1-12.

14. An edible BLG composition comprising at least 90% (w/w) BLG relative to total solids.

**15.** The edible BLG composition according to claim 13 or 14, in the form of a powder having a bulk density of at least 0.4 g/mL, preferably a spray-dried powder.

**16.** The edible BLG composition according to any of claims 13-15, having a degree of protein denaturation of at most 2%.

Fig. 1

Fig. 2

500 micron

Fig. 3

Fig. 4

Fig. 5

Fig. 6

Fig. 7

Fig. 8

500 micron

Fig. 9

500 micron

Fig. 10

Fig. 11

Fig. 12

Fig. 13

Fig. 14

Fig. 15

Fig. 16

Fig. 17

Fig. 18

250 micron

Fig. 19

Fig. 20

Fig. 21

250 micron

Fig. 22

100 micron

Fig. 23

Fig. 24

Filter cake

Filter

Permeate

Fig. 25

A          B                C     D              E    F

Fig. 26

Fig. 27

Europäisches
Patentamt
European
Patent Office
Office européen
des brevets

# EUROPEAN SEARCH REPORT

**Application Number**

EP 21 15 8707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H10 218755 A (MORINAGA MILK INDUSTRY CO LTD) 18 August 1998 (1998-08-18) * paragraph [0016] - paragraph [0024] * | 1-16 | INV. A23C21/00 A23J1/20 A23J3/08 |
| X | US 5 756 681 A (NEURATH ALEXANDER ROBERT [US] ET AL) 26 May 1998 (1998-05-26) | 1,5,7,13 | A23L2/66 A23L33/19 |
| A | * column 2, line 36 - line 63 * * column 4, line 59 - column 5, line 10 * * column 9, line 56 - column 10, line 18 * | 2-4,6, 8-12, 14-16 | |
| X | US 2 790 790 A (HENRY KLOSTERGAARD) 30 April 1957 (1957-04-30) | 13 | |
| A | * column 1, line 15 - line 45 * * column 3, line 42 - column 4, line 3; figure 2; example II * * column 5, line 9 - column 6, line 54 * | 1-12, 14-16 | |
| X | EP 2 316 283 A1 (NESTEC SA [CH]) 4 May 2011 (2011-05-04) | 13,14,16 | |
| A | * paragraph [0001] - paragraph [0010] * * paragraph [0035] - paragraph [0084]; figure 8; examples 1,2,7 * | 1-12,15 | TECHNICAL FIELDS SEARCHED (IPC) |
| A,D | A H PALMER: "THE PREPARATION OF A CRYSTALLINE GLOBULIN FROM THE ALBUMIN FRACTION OF COW'S MILK", J. BIOL. CHEM., vol. 104, no. 2, 1 February 1934 (1934-02-01), pages 359-372, XP055369842, * page 362, paragraph 1 - page 367, paragraph 4 * | 1-16 | A23J A23L |

-/--

The present search report has been drawn up for all claims

| Place of search | Date of completion of the search | Examiner |
|---|---|---|
| Munich | 25 June 2021 | Alevisopoulos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 4

**EUROPEAN SEARCH REPORT**

Application Number

EP 21 15 8707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANUP SHARMA ET AL: "Functionality of milk powders and milk-based powders for end use applications-a review", COMPREHENSIVE REVIEWS IN FOOD SCIENCE AND FOOD SAFETY, INSTITUTE OF FOOD TECHNOLOGISTS, CHICAGO, IL, US, vol. 11, no. 5, 1 September 2012 (2012-09-01), pages 518-528, XP009163546, ISSN: 1541-4337, DOI: 10.1111/J.1541-4337.2012.00199.X [retrieved on 2012-08-24] * page 519, column 1, paragraph 3 - page 522, column 2, paragraph 3 * | 1-16 | |
| A | Miranda E A, Bernardo A, Medeiros Hirata G A, and Giulietti M: "Crystallization of Lactose and Whey Protein"; "Chapter 6" In: Jane Sélia dos Reis Coimbra and José A. Teixeira: "Engineering Aspects of Milk and Dairy Products", 24 November 2009 (2009-11-24), Taylor & Francis, XP009194307, ISBN: 9781420090222 pages 121-153, * page 127, paragraph 6.1.5 - page 132, paragraph 6.2.4; table 6.1 * | 1-16 | TECHNICAL FIELDS SEARCHED (IPC) |
| A | Roger G Harrison ET AL: "Crystallization" In: "Bioseparations Science and Engineering", 27 January 2015 (2015-01-27), Oxford University Press, XP055452194, ISBN: 978-0-19-021373-2 pages 362-383, * page 373, paragraph 9.4 - page 376, paragraph 9.5.1 * | 1-16 | |

-/--

The present search report has been drawn up for all claims

| Place of search | Date of completion of the search | Examiner |
|---|---|---|
| Munich | 25 June 2021 | Alevisopoulos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 4

Europäisches Patentamt
European Patent Office
Office européen des brevets

# EUROPEAN SEARCH REPORT

Application Number

EP 21 15 8707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Anonymous: "Whey protein", Wikipedia, 20 December 2016 (2016-12-20), pages 1-5, XP055451753, Retrieved from the Internet: URL:https://en.wikipedia.org/w/index.php?title=Whey_protein&oldid=755871822 [retrieved on 2018-02-15] * page 1, paragraph 2 - page 2, paragraph 1 * | | |
| X | JIN-MI JUNG ET AL: "Liquid Crystalline Phase Behavior of Protein Fibers in Water: Experiments versus Theory", LANGMUIR, vol. 26, no. 1, 8 September 2009 (2009-09-08), pages 504-514, XP055470968, US ISSN: 0743-7463, DOI: 10.1021/la9021432 | 13,14,16 | |
| A | * 1. Introduction; 2.1 Materials; 4.2 Isotropic-mematic Phase Transition: Experiments vs. Theory * | 1-12,15 | TECHNICAL FIELDS SEARCHED (IPC) |
| X | L. K. STEINRAUF: "Preliminary X-ray data for some new crystalline forms of [beta]-lactoglobulin and hen-egg-white lysozyme", ACTA CRYSTALLOGRAPHICA., vol. 12, no. 1, 1 January 1959 (1959-01-01), pages 77-79, XP055471042, DK ISSN: 0365-110X, DOI: 10.1107/S0365110X59000238 | 13,14 | |
| A | * page 77, column 1, paragraph 2 - paragraph 3 * | 1-12,15,16 | |

-/--

The present search report has been drawn up for all claims

| Place of search | Date of completion of the search | Examiner |
|---|---|---|
| Munich | 25 June 2021 | Alevisopoulos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 4

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/211392 A1 (JUNG JIN-MIN [CH] ET AL) 23 August 2012 (2012-08-23) | 13,14,16 | |
| A | * paragraph [0001] - paragraph [0092]; examples * | 1-12,15 | |
|  | ----- | | |

TECHNICAL FIELDS
SEARCHED       (IPC)

The present search report has been drawn up for all claims

| Place of search | Date of completion of the search | Examiner |
|---|---|---|
| Munich | 25 June 2021 | Alevisopoulos, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 4 of 4

## ANNEX TO THE EUROPEAN SEARCH REPORT
## ON EUROPEAN PATENT APPLICATION NO.

EP 21 15 8707

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2021

| Patent document cited in search report | | Publication date | Patent family member(s) | | Publication date |
|---|---|---|---|---|---|
| JP H10218755 | A | 18-08-1998 | NONE | | |
| US 5756681 | A | 26-05-1998 | NONE | | |
| US 2790790 | A | 30-04-1957 | NONE | | |
| EP 2316283 | A1 | 04-05-2011 | CN | 102711528 A | 03-10-2012 |
| | | | EP | 2316283 A1 | 04-05-2011 |
| | | | EP | 2493338 A1 | 05-09-2012 |
| | | | JP | 2013509335 A | 14-03-2013 |
| | | | US | 2012219691 A1 | 30-08-2012 |
| | | | WO | 2011051436 A1 | 05-05-2011 |
| US 2012211392 | A1 | 23-08-2012 | CN | 102686488 A | 19-09-2012 |
| | | | EP | 2316743 A1 | 04-05-2011 |
| | | | EP | 2493777 A1 | 05-09-2012 |
| | | | JP | 2013509334 A | 14-03-2013 |
| | | | US | 2012211392 A1 | 23-08-2012 |
| | | | WO | 2011051426 A1 | 05-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H10218755 A

- US 2790790 A

### Non-patent literature cited in the description

- **DE JONGH et al.** Mild Isolation Procedure Discloses New Protein Structural Properties of β-Lactoglobulin. *J Dairy Sci.,* 2001, vol. 84 (3), 562-571
- **SLACK et al.** *Journal of Food Processing and Preservation,* 1986, vol. 10, 19-30
- **PALMER.** Crystalline Globulin from Cow's Milk. *J. Biol. Chem.,* 1934, vol. 104, 359-372
- **ASCHAFFENBURG et al.** Improved Method for the Preparation of Crystalline beta-Lactoglobulin and alpha-Lactalbumin from Cow's Milk. *Bioch.,* 1957, vol. 65, 273-277

- **GERARD COQUERELA.** Crystallization of molecular systems from solution: phase diagrams, supersaturation and other basic concepts. *Chemical Society Reviews,* 2014, vol. 7, 2286-2300
- **CZERWENKA et al.** *J. Agric. Food Chem.,* 2006, vol. 54 (23), 8874-8882
- **GUERRA-HERNANDEZ et al.** Maillard Reaction Evaluation by Furosine Determination During Infant Cereal Processing. *Journal of Cereal Science,* 1999, vol. 29, 171-176